# EUROPEAN PATENT APPLICATION

(11) **EP 4 648 334 A1**
(43) Date of publication of application: **12.11.2025**
(21) Application number: 23919533.2
(22) Date of filing: 21.12.2023
(51) Int. Cl.: H04L 5/00, H04W 64/00, H04W 72/25, H04W 72/044, H04W 72/0457

(54) **COMMUNICATION METHOD AND APPARATUS, AND STORAGE MEDIUM, CHIP AND COMPUTER PROGRAM PRODUCT**

(30) Priority: 31.01.2023 CN 202310145318; 17.02.2023 CN 202310172376; 02.06.2023 CN 202310656327
(71) Applicant: Huawei Technologies Co., Ltd., Shenzhen, Guangdong 518129 (CN)
(72) Inventor: LI, Chao, Shenzhen, Guangdong 518129 (CN); XUE, Lixia, Shenzhen, Guangdong 518129 (CN); YAO, Chuting, Shenzhen, Guangdong 518129 (CN); XIA, Jinhuan, Shenzhen, Guangdong 518129 (CN)
(74) Representative: Isarpatent
(86) International application number: PCT/CN2023/140555
(87) International publication number: WO 2024/159971

(57) **Abstract**

A communication method and apparatus, a storage medium, a chip, and a computer program product are provided, to perform side link-based positioning. In this application, a first terminal apparatus determines sidelink control information. The sidelink control information includes first information and second information. The first information is used for resource selection. The second information includes transmission mode information of a first message, and the transmission mode information of the first message indicates that the first message includes a sidelink positioning reference signal. The first terminal apparatus sends the sidelink control information and the first message. The sidelink positioning reference signal may be used for sidelink positioning, so that support is provided for sidelink positioning. In addition, because the sidelink control information includes the first information and the second information, a legacy terminal apparatus may perform resource selection based on the first information, and the legacy terminal apparatus determines, based on the transmission mode information of the first message, that the second information does not need to be decoded, thereby reducing a probability of a decoding error.

## Description

### CROSS-REFERENCE TO RELATED APPLICATIONS

This application claims priorities to Chinese Patent Application No. 202310145318.8, filed with the China National Intellectual Property Administration on January 31, 2023, and entitled "METHOD FOR SENDING SIDELINK POSITIONING REFERENCE SIGNAL", to Chinese Patent Application No. 202310172376.X, filed with the China National Intellectual Property Administration on February 17, 2023 and entitled "COMMUNICATION METHOD AND APPARATUS, STORAGE MEDIUM, CHIP, AND COMPUTER PROGRAM PRODUCT", and to Chinese Patent Application No. 202310656327.3, filed with the China National Intellectual Property Administration on June 2, 2023 and entitled "COMMUNICATION METHOD AND APPARATUS, STORAGE MEDIUM, CHIP, AND COMPUTER PROGRAM PRODUCT", all of which are incorporated herein by reference in their entireties.

### TECHNICAL FIELD

This application relates to the field of mobile communication technologies, and in particular, to a communication method and apparatus, a storage medium, a chip, and a computer program product.

### BACKGROUND

In daily life and applications, location information has become increasingly important basic information. A satellite can provide location information for device identification outdoors. When a user is in an indoor environment, it is more difficult to obtain a precise device location. For example, in areas such as home entertainment, telemedicine, online learning and education, indoor shopping malls, indoor parking lots, and tunnels, people have a strong demand for precise location information. However, due to factors such as signal blocking, it is difficult for positioning technologies based on satellites and cellular base stations to meet an actual application requirement. In addition, even in an outdoor scenario, precision of a current civil satellite is generally within a range of 5 to 10 meters, while in a scenario requiring high-precision positioning, for example, self-driving, the current satellite cannot meet an actual application requirement in an outdoor scenario.

To meet a requirement of the foregoing application scenario, positioning based on a sidelink (sidelink, SL) between devices is increasingly concerned.

### SUMMARY

This application provides a communication method and apparatus, a storage medium, a chip, and a computer program product, to transmit, between terminal apparatuses, a reference signal used for sidelink positioning, thereby providing support for a sidelink positioning technology.

In a communication system, a resource pool may support communication of legacy (legacy) terminal apparatuses and communication of new (new) terminal apparatuses. The resource pool may be referred to as a shared resource pool. When a new terminal apparatus sends a message by using a resource in the shared resource pool, a legacy terminal apparatus also decodes the message, and the legacy terminal apparatus processes the message in a message processing manner supported by the legacy terminal apparatus, which may cause a decoding error.

This application provides a solution. In this solution, a new terminal apparatus (for example, a first terminal apparatus) sends sidelink control information and a first message. The sidelink control information may include first information and second information. The first information may be used for resource selection. The second information includes transmission mode information of the first message. The transmission mode information of the first message indicates that the first message includes a sidelink positioning reference signal.

A format of the first information in the sidelink control information is the same as a format, specified in a specification release supported by the legacy terminal apparatuses, of information used for resource selection. Therefore, after receiving the sidelink control information, a legacy terminal apparatus (for example, a second terminal apparatus) may successfully demodulate and decode the first information. Then, the legacy terminal apparatus may perform sensing measurement based on the first information, and then perform resource selection. In addition, the legacy terminal apparatus may identify the transmission mode information of the first message, and determine, based on the transmission mode information of the first message, that the legacy terminal apparatus does not need to process (for example, decode) the second information in the sidelink control information, thereby reducing a probability of a decoding error. In addition, a new terminal apparatus may perform measurement on the sidelink positioning reference signal based on the first message, and a measurement result may be used for sidelink positioning. It can be learned that this solution can provide technical support for a sidelink positioning technology.

According to a first aspect, this application provides a communication method. The method is applicable to a second terminal apparatus. The second terminal apparatus may be, for example, a terminal device or a unit, a module, or a chip (system) inside the terminal device, or may be a roadside unit (roadside unit, RSU) (or an on-board unit (on-board unit, OBU) or a relay node having a mobility capability) or a unit, a module, or a chip (system) inside the RSU (or the OBU or the relay node having a mobility capability).

The second terminal apparatus receives sidelink control information and a first message. The sidelink control information includes first information and second information, the first information is used for resource selection, the second information includes transmission mode information of the first message, and the transmission mode information indicates that the first message includes a sidelink positioning reference signal. The second terminal apparatus performs resource selection based on the first information. The second terminal apparatus determines, based on the transmission mode information, not to process the second information.

The second terminal apparatus performs resource selection based on the first information in the sidelink control information and the first message. For example, the second terminal apparatus may determine resource information of the first message based on the first information, and then perform resource selection based on sensing measurement.

In this solution, the second terminal apparatus (legacy terminal apparatus) may normally receive and detect the sidelink control information and the first message according to a supported protocol (legacy protocol) without additional processing, thereby reducing a probability of a decoding error. It can be learned that, in this solution, the sidelink control information and the sidelink positioning reference signal that are sent by a first terminal apparatus have little impact on the legacy terminal apparatus, and therefore are backward compatible.

In another possible implementation, the second information further includes second-stage sidelink control information (sidelink control information, SCI) format information whose value is 11.

In another possible implementation, the second information further includes a non-zero value indicated in a reserved field. The reserved field may be included in first-stage SCI. Information carried in the reserved field indicates a non-zero value, and the information carried in the reserved field is, for example, 1, 10, 01, 110, 1111, or 1000.

For example, the second terminal apparatus may determine, based on the second-stage SCI format information whose value is 11 and/or the non-zero value of the reserved field, that the sidelink control information does not include second-stage SCI. For another example, the second terminal apparatus determines, based on the second-stage SCI format information whose value is 11 and/or the non-zero value of the reserved field, that the sidelink control information includes second-stage SCI, but the second terminal apparatus does not process the second-stage SCI. For another example, the second terminal apparatus determines, based on the second-stage SCI format information whose value is 11 and/or the non-zero value of the reserved field, that the sidelink control information includes second-stage SCI, but does not process the first message. For another example, the second terminal apparatus determines, based on the second-stage SCI format information whose value is 11 and/or the non-zero value of the reserved field, not to process the first message. In this way, a probability of a second-stage SCI decoding error can be reduced.

In a possible implementation, the second-stage SCI format information whose value is 11 may indicate that there is no second-stage SCI, or the second-stage SCI is newly defined second-stage SCI, and the legacy terminal apparatus does not need to process the second-stage SCI. Based on this, the second terminal apparatus may determine that the second-stage SCI does not need to be processed. The non-zero value of the reserved field may indicate the second terminal apparatus not to process the first message. The second terminal apparatus determines, based on the non-zero value indicated in the reserved field, not to process the first message. Generally, a bit in the reserved field may be reserved for a future protocol to carry information. For the second terminal apparatus supporting a legacy protocol, information of the reserved bit may not need to be processed. Alternatively, if the second terminal apparatus identifies that the reserved bit carries a non-zero value, the second terminal apparatus may consider that the value carried by the reserved bit is subject to identification of a new terminal apparatus supporting a new protocol, and the second terminal apparatus may determine, based on this, that the first message does not need to be processed. In this way, a probability of a second-stage SCI decoding error can be reduced.

According to a second aspect, this application provides a communication method. The method is applicable to a first terminal apparatus. The first terminal apparatus may be, for example, a terminal device or a unit, a module, or a chip (system) inside the terminal device, or may be an RSU (or an OBU or a relay node having a mobility capability) or a unit, a module, or a chip (system) inside the RSU (or the OBU or the relay node having a mobility capability).

The first terminal apparatus determines sidelink control information. The sidelink control information includes first information and second information, the first information is used for resource selection, the second information includes transmission mode information of a first message, and the transmission mode information of the first message indicates that the first message includes a sidelink positioning reference signal. The first terminal apparatus sends the sidelink control information and the first message.

Because the sidelink control information includes the first information and the second information, a second terminal apparatus (legacy terminal apparatus) may perform resource selection based on the first information in the sidelink control information, and a fourth terminal apparatus (new terminal apparatus) may perform measurement on the sidelink positioning reference signal in the first message based on the second information (or the first information and the second information) in the sidelink control information. A measurement result may be used for sidelink positioning. In addition, the sidelink control information and the first message that are sent by the first terminal apparatus can be backward compatible.

As defined in 3GPP 38.212, when a value of second-stage SCI format information (2^{nd}-stage SCI format) is 00, it represents that a format of second-stage SCI is an SCI format 2-A; when the value of the second-stage SCI format information is 01, it represents that the format of the second-stage SCI is an SCI format 2-B; when the value of the second-stage SCI format information is 10, it represents that the format of the second-stage SCI is an SCI format 2-C; and when the value of the second-stage SCI format information is 11, it represents a reserved value.

Based on this, in this application, the second-stage SCI format information whose value is 11 may be used. For example, a meaning of the second-stage SCI format information whose value is 11 may be configured by a network apparatus or preconfigured, and then the new terminal apparatus understands the newly defined meaning, which may also be understood as that the second information further includes the second-stage sidelink control information SCI format information whose value is 11.

The second-stage SCI format information whose value is 11 and/or the transmission mode information of the first message may indicate the following content 1, content 2, or content 3:
Content 1: The first message includes a sidelink positioning reference signal.
Content 2: The first message includes a sidelink positioning reference signal, and a PSSCH includes data. The PSSCH is used to transmit second-stage SCI in the sidelink control information.
Content 3: The first message includes a sidelink positioning reference signal, and a PSSCH does not include data. The PSSCH is used to transmit second-stage SCI in the sidelink control information.

When the PSSCH includes data, the second-stage SCI format information whose value is 11 and/or the transmission mode information of the first message may further indicate that the first message and the PSSCH are multiplexed in a slot. Alternatively, the second-stage SCI format information whose value is 11 and/or the transmission mode information of the first message may further indicate that the first message and the PSSCH are not multiplexed in a slot. Alternatively, the second-stage SCI format information whose value is 11 and/or the transmission mode information of the first message may further indicate that the first message and the PSSCH are multiplexed or not multiplexed in a slot.

The second-stage SCI is carried in the physical sidelink shared channel (physical sidelink shared channel, PSSCH). When the PSSCH carrying the second-stage SCI in the SCI does not include data, the first message and the PSSCH may not are multiplexed in a slot.

In another possible implementation, the second-stage SCI format information whose value is 11 and/or the transmission mode information of the first message further indicate/indicates that the sidelink control information includes first-stage SCI; or the sidelink control information includes first-stage SCI and second-stage SCI. In a possible implementation, when the second-stage SCI format information whose value is 11 and/or the transmission mode information of the first message further indicate/indicates that the sidelink control information includes first-stage SCI, it may also be understood as that the second-stage SCI format information whose value is 11 and/or the transmission mode information of the first message further indicate/indicates that the sidelink control information does not include second-stage SCI.

A receive end may determine a transmission mode of the first message by using content indicated by the second-stage SCI format information whose value is 11 and/or the transmission mode information of the first message, thereby improving a decoding success rate.

In a possible implementation, the transmission mode information of the first message occupies a bit (the bit may be replaced with a code point or a bit location) in the reserved field in the first-stage SCI in the sidelink control information. Alternatively, the transmission mode information of the first message may include a value, a specific value state, or the like in the reserved field in the first-stage SCI. For example, the network apparatus configures, through radio resource control (radio resource control, RRC), K₀ (K₀ is a positive integer, for example, K₀ is 2 or 4) bits in the reserved field as a bit that can carry the transmission mode information of the first message. A new name may be defined for the reconfigured bit, and the reserved field may not be reused. The redefined name of the bit is not limited in this application. When the network apparatus defines the bit in the reserved field to carry the transmission mode information of the first message, the number of bits occupied by the transmission mode information of the first message does not exceed the number K₀ (for example, 2 or 4) of the defined bits.

Because the transmission mode information of the first message is carried by a part of or all bits (the bits may be replaced with code points or bit locations) in the reserved field in the first-stage SCI in the sidelink control information, after identifying the information of the part of bits, the legacy terminal apparatus may consider that the information is information indicating that the legacy terminal apparatus does not need to decode the second information, and then does not decode the second information, thereby reducing a probability of a decoding error.

In this application, the first information and the second information may be carried in a plurality of manners. For example, the first information and the second information are included in the first-stage SCI. For another example, the first information is included in the first-stage SCI, and the second information is included in the second-stage SCI. For another example, the first information is included in the first-stage SCI, and the second information is included in the first-stage SCI and the second-stage SCI. For another example, the first information is included in the first-stage SCI, the second information is included in the second-stage SCI, and the PSSCH carrying the second-stage SCI does not include data. For another example, the first information is included in the first-stage SCI, the second information is included in the second-stage SCI, and the PSSCH carrying the second-stage SCI includes data. For another example, the first information is included in the first-stage SCI, the second information is included in a MAC CE, and the MAC CE is carried in the PSSCH. For another example, the first information is included in the first-stage SCI, the second information is included in the second-stage SCI and a MAC CE, and the MAC CE is carried in the PSSCH. There are many types of solutions, so that solution flexibility can be improved.

When the PSSCH carrying the second-stage SCI includes data, the second information further includes information used to demodulate information carried in the PSSCH. After receiving the information, a receive end (for example, a new terminal apparatus) may demodulate the PSSCH based on the information used to demodulate the content carried in the PSSCH, to obtain the second-stage SCI and the data.

In a possible implementation, the first information includes at least one of the following content: indication information of a priority of the first message; indication information of a frequency domain resource of the first message; indication information of a time domain resource of the first message; or indication information of a reservation period of the first message.

The first information may include some information required for resource selection, so that the legacy terminal apparatus can perform resource selection after receiving the information.

In a possible implementation, the indication information of the frequency domain resource of the first message indicates a difference between a lowest frequency domain location of a frequency domain resource occupied by a physical sidelink control channel (physical sidelink control channel, PSCCH) carrying the first-stage SCI in the sidelink control information and a highest frequency domain location of the first message.

The indication information of the frequency domain resource of the first message in the first information performs indication in a manner that can be understood by the legacy terminal apparatus, for example, indicates a bandwidth location and size from a lowest physical resource block (physical resource block, PRB) of the PSCCH to an end location of the first message. The legacy terminal considers by default that the lowest frequency domain location of the PSCCH is the same as a lowest frequency domain location of the first message. In this way, the legacy terminal apparatus (for example, the second terminal apparatus) may parse and decode the first information to obtain the indication information of the frequency domain resource of the first message in the first information, then receive the first message on the the indication information of the frequency domain resource, and perform resource selection based on the received first message.

In a possible implementation, the indication information of the time domain resource of the first message indicates a slot location occupied by an initial transmission resource and/or a retransmission resource of the first message.

The first message may be transmitted once without retransmission. For example, the indication information of the time domain resource of the first message in the first information may indicate that the sidelink positioning reference signal is used for current initial transmission, and is not used for retransmission. In this case, the indication information of the time domain resource of the first message may indicate a slot location occupied by an initial transmission resource of the first message.

Alternatively, the first message may be retransmitted. For example, the indication information of the time domain resource of the first message in the first information may indicate a slot location (or referred to as a reserved slot) occupied by a retransmission resource of the sidelink positioning reference signal. A bandwidth of the first message may be within a reserved bandwidth for sending a sidelink positioning reference signal by a third terminal apparatus, so that a condition for retransmission is similar to that for initial transmission, thereby reducing interference caused to retransmission of the sidelink positioning reference signal.

The first message may be aperiodically transmitted. For example, the indication information of the reservation period of the first message indicates that a value of the reservation period of the first message is 0. The value of the reservation period being 0 may indicate that the sidelink positioning reference signal is aperiodically transmitted.

In another possible implementation, the indication information of the reservation period of the first message indicates that the value of the reservation period of the first message is not 0, and the period value of the first message is the same as a period value of the sidelink positioning reference signal sent by the third terminal apparatus.

In a possible implementation, the second information includes a transmission parameter of the first message. The transmission parameter of the first message is used by a receive end to receive the first message. For example, the transmission parameter of the first message includes indication information of a frequency domain resource of the first message, indication information of a time domain resource of the first message, indication information of a source identifier of the first message, indication information of a destination identifier of the first message, or indication information of a start and/or end time domain symbol of the first message.

In a possible implementation, the indication information of the frequency domain resource of the first message in the second information indicates a difference between the lowest frequency domain location of the first message and the lowest frequency domain location of the frequency domain resource occupied by the PSCCH carrying the first-stage SCI in the sidelink control information. Because the second information may also include indication information of a frequency domain resource of the first message, the solution provided in this application allows the lowest frequency domain locations of the PSCCH and the first message not to be aligned. When the two are not aligned, the new terminal apparatus may obtain, through indication by the indication information of the frequency domain resource in the second information, information about all frequency domain resources occupied by the first message. Because this solution allows the lowest frequency domain locations of the PSCCH and the first message not to be aligned, solution flexibility can be improved.

In a possible implementation, the first message may occupy all resources in the bandwidth of the first message, or may occupy a part of resources, for example, may occupy a frequency domain resource based on a comb structure. In this case, the indication information of the frequency domain resource of the first message may further indicate a frequency domain offset value of the sidelink positioning reference signal within a frequency domain transmission interval.

In a possible implementation, before the sidelink control information and the first message are sent, the method further includes: The first terminal apparatus receives configuration information. The configuration information includes the transmission mode information of the first message. In a possible implementation, the transmission mode of the first message that is indicated by the transmission mode information of the first message in the second information is a transmission mode of the first message that is indicated (or allowed) by the configuration information. This can help the network apparatus to manage a transmission mode of the first terminal apparatus, thereby achieving a good balance between positioning performance and impact on the legacy terminal apparatus.

In a possible implementation, the configuration information further indicates that the first message and the PSSCH are multiplexed in a slot. Alternatively, the configuration information further indicates that the first message and the PSSCH are not multiplexed in a slot. Alternatively, the configuration information further indicates that the first message and the PSSCH are not multiplexed or multiplexed in a slot.

If the configuration information indicates that the first message and the PSSCH are not multiplexed in a slot, the first terminal apparatus is not allowed to send the first message in the PSSCH. For example, the first terminal apparatus may send the first message outside the PSSCH. If the configuration information indicates that the first message and the PSSCH are multiplexed in a slot, the first terminal apparatus may send the first message in the PSSCH. For example, the first terminal apparatus embeds the first message into the PSSCH for sending. Alternatively, it may be understood that the time domain resource of the first message overlaps a time domain resource of the PSSCH.

In a possible implementation, the configuration information further indicates that when a first preset condition is met, the first message and the PSSCH are allowed not to be multiplexed in a slot. For example, the first preset condition includes: the priority of the first message is higher than a preset first priority. Because the priority of the first message is high, the first terminal apparatus may not send the first message in the PSSCH, but separately send the first message, so that little interference is caused to the first message, and an apparatus that needs to measure the sidelink positioning reference signal obtains a good measurement result, thereby improving positioning precision.

For another example, the first preset condition includes: a channel busy ratio (channel busy ratio, CBR) of a resource pool of a resource used by the first message is lower than a preset first CBR threshold. When the CBR of the resource pool is lower than the first CBR threshold, a congestion degree of the resource pool is low, that is, a small number of resources are occupied, and a large number of resources are available. In this case, the first message may be separately sent, that is, the first message does not need to be sent in the PSSCH, so that impact on the data sent in the PSSCH can be reduced.

For another example, the first preset condition includes: the CBR of the resource pool of the resource used by the first message is lower than a second CBR threshold associated with the priority of the first message. Because a CBR threshold may be set based on a priority of a message, a transmission mode of a message of each priority can be more flexibly controlled.

In embodiments of this application, the foregoing several first preset conditions may alternatively be used in combination. When the first preset condition includes a combination of the foregoing several conditions, the first terminal apparatus can determine that the first preset condition is met only when all combined conditions are met. For example, the first preset condition includes: the priority of the first message is higher than the preset first priority, and the channel busy ratio (channel busy ratio, CBR) of the resource pool of the resource used by the first message is lower than the preset first CBR threshold.

In a possible implementation, the configuration information further indicates that when a second preset condition is met, the first message and the PSSCH are allowed to be multiplexed in a slot. For example, the second preset condition includes: the priority of the first message is lower than a preset second priority. When the priority of the first message is lower than the preset second priority, because the priority of the first message is low, the first terminal apparatus may send the first message in the PSSCH, that is, no resource needs to be separately selected for the first message, so that the first message can occupy fewer resources in the resource pool, and impact of the first message on other data transmission can be reduced.

In a possible implementation, the second preset condition includes: the priority of the first message is higher than a preset third priority. When the priority of the first message is higher than the preset third priority, because the priority of the first message is high, the first terminal apparatus may send the first message in the PSSCH, that is, no resource needs to be separately selected for the first message, so that the first message can occupy fewer resources in the resource pool, and impact of the first message on other data transmission can be reduced.

For another example, the second preset condition includes: the CBR of the resource pool of the resource used by the first message is lower than a preset third CBR threshold. When the CBR of the resource pool is lower than the third CBR threshold, a congestion degree of the resource pool is low, and the first message is sent in the PSSCH. In this way, little impact is caused to the PSSCH, and no resource needs to be separately selected for the first message, so that the first message can occupy fewer resources in the resource pool.

For another example, the second preset condition includes: the CBR of the resource pool of the resource used by the first message is lower than a fourth CBR threshold associated with the priority of the first message. Because a CBR threshold may be set based on a priority of a message, a transmission mode of a message of each priority can be more flexibly controlled.

In a possible implementation, the configuration information further indicates to perform RSRP measurement on the PSCCH carrying the first-stage SCI in the SCI. It can be learned that, in this solution, the network apparatus may further specifically configure a measurement parameter of the terminal apparatus, so that a capability of the network apparatus to manage the terminal apparatus can be improved.

In a possible implementation, the configuration information further indicates the number of symbols occupied by the PSSCH carrying the second-stage SCI in the SCI. It can be learned that, in this solution, the network apparatus may configure the number of symbols occupied by the PSSCH, so that a capability of the network apparatus to manage the terminal apparatus can be improved.

In a possible implementation, the PSCCH used to carry the first-stage SCI in the sidelink control information and the PSSCH used to carry the second-stage SCI in the sidelink control information undergo time division multiplexing. Alternatively, the PSCCH and the PSSCH undergo frequency division multiplexing. In this application, resources occupied by the PSSCH and the PSCCH can be flexibly configured, so that solution flexibility can be improved.

In a possible implementation, the bandwidth of the first message is the same as a bandwidth of the PSCCH used to transmit the first-stage SCI in the sidelink control information. Alternatively, the bandwidth of the first message is different from the bandwidth of the PSCCH. For example, the first message has a larger bandwidth (or a larger number of PRBs or subchannels) than the PSCCH. In this way, an apparatus receiving the sidelink positioning reference signal can obtain better positioning performance.

In a possible implementation, the bandwidth of the first message is an integer multiple of the bandwidth of the PSCCH. In this way, the first terminal apparatus may indicate the bandwidth of the first message by indicating the bandwidth of the PSCCH and the multiple, thereby reducing signaling overheads caused by indicating the bandwidth of the first message.

In a possible implementation, the bandwidth of the first message is a sum of bandwidths of the PSCCH and the PSSCH. Alternatively, the bandwidth of the first message is an integer multiple of the sum of the bandwidths of the PSCCH and the PSSCH. In a possible implementation, the network apparatus may limit, by using the configuration information, that the sum of the bandwidth of the PSCCH and the bandwidth of the PSSCH (or an integer multiple of the sum of the bandwidths) is the same as a bandwidth of the sidelink positioning reference signal. The network apparatus may further limit (for example, through configuration by using the configuration information) that the sidelink positioning reference signal occupies all or a part of frequency domain resources in the bandwidth. In this implementation, impact on bandwidth occupation and reservation of the legacy terminal apparatus can be reduced. When the sidelink positioning reference signal is retransmitted or has a periodic reservation, the sidelink positioning reference signal may be processed as data, to reduce other additional processing manners.

In a possible implementation, the first message occupies all or a part of resources in the bandwidth of the first message. In this way, solution flexibility can be improved.

In a possible implementation, the first message undergoes time division multiplexing with a sidelink positioning reference signal sent by at least one third terminal apparatus. In another possible implementation, the PSCCH that is sent by the first terminal apparatus and that is used to carry the first-stage SCI in the SCI undergoes time division multiplexing with a PSCCH that is sent by the at least one third terminal apparatus and that is used to carry first-stage SCI. In another possible implementation, the PSSCH that is sent by the first terminal apparatus and that is used to carry the second-stage SCI in the SCI undergoes time division multiplexing with a PSSCH that is sent by the at least one third terminal apparatus and that is used to carry second-stage SCI. These implementations may be used in combination. These implementations can save resources and improve resource utilization.

In a possible implementation, a lowest frequency domain location of a frequency domain resource occupied by the PSCCH that is sent by the first terminal apparatus and that is used to carry the first-stage SCI in the SCI is the same as or different from a lowest frequency domain location of a frequency domain resource occupied by the first message sent by the first terminal apparatus. In another possible implementation, a lowest frequency domain location of a frequency domain resource occupied by the PSCCH that is sent by the third terminal apparatus and that is used to carry the first-stage SCI is the same as or different from a lowest frequency domain location of a frequency domain resource occupied by the sidelink positioning reference signal sent by the third terminal apparatus. These implementations may be used in combination. These implementations can save resources and improve resource utilization.

In a possible implementation, the first message includes a sidelink positioning reference signal, the PSSCH includes or does not include data, the sidelink control information includes second-stage SCI, and the PSSCH carries the second-stage SCI. The sidelink control information includes the second-stage SCI, and when the PSSCH carrying the second-stage SCI includes data, the second information further includes information used to demodulate information carried in the PSSCH.

In a possible implementation, second-stage SCI in a new format may be defined in this application, and the second-stage SCI in the new format may be referred to as second-stage SCI in a first format. The second information includes a transmission parameter of the first message, and the transmission parameter of the first message and the information used to demodulate the information carried in the PSSCH are carried in the second-stage SCI in the first format.

In a possible implementation, the transmission mode information of the first message includes a non-zero value of the reserved field of the first-stage SCI. In another possible implementation, if the second information includes second-stage SCI format information whose value is 00, the second-stage SCI in the first format includes a field indicated in second-stage SCI in a second format. Alternatively, if the second information includes second-stage SCI format information whose value is 01, the second-stage SCI in the first format includes a field indicated in second-stage SCI in a third format. Alternatively, if the second information includes second-stage SCI format information whose value is 10, the second-stage SCI in the first format includes a field indicated in second-stage SCI in a fourth format.

In a possible implementation, the second-stage SCI in the second format is used for PSSCH demodulation, where the PSSCH demodulation includes any one of the following: an operation with an acknowledgement (acknowledgement, ACK) or a negative acknowledgement (negative acknowledgement, NACK); an operation only with a NACK; and an operation without hybrid automatic repeat request acknowledgement (hybrid automatic repeat request acknowledgement, HARQ-ACK) feedback information. The second-stage SCI in the third format is used for PSSCH demodulation, where the PSSCH demodulation includes any one of the following: an operation only with a NACK; and an operation without HARQ-ACK feedback information. The second-stage SCI in the fourth format is used for PSSCH demodulation and providing inter-UE coordination information, or the second-stage SCI in the fourth format is used for PSSCH demodulation and inter-UE coordination requesting information. For the second-stage SCI in the fourth format, the PSSCH demodulation includes any one of the following: an operation with an ACK or a NACK; an operation only with a NACK; and an operation without HARQ-ACK feedback information.

In this way, the new terminal apparatus may identify, based on the reserved field in the first-stage SCI and the second-stage SCI format information, that the second-stage SCI includes the transmission parameter of the first message and the information used to demodulate the information carried in the PSSCH, and may identify, based on the second-stage SCI, a field carrying the information used to demodulate the information carried in the PSSCH, and then the new terminal apparatus demodulates the information carried in the PSSCH.

In another possible implementation, the transmission mode information of the first message includes the second-stage SCI format information whose value is 11. The transmission mode information of the first message may not include information carried in the reserved field of the first-stage SCI. In this way, when identifying that the value of the second-stage SCI format information in the first-stage SCI is 11, the terminal apparatus may determine that the second-stage SCI includes the transmission parameter of the first message and the information used to demodulate the information carried in the PSSCH.

In another possible implementation, the second-stage SCI in the first format includes first indication information, and the first indication information indicates the information for demodulating the information carried in the PSSCH. For example, if a value of the first indication information is a first value, the second-stage SCI in the first format includes a field indicated in second-stage SCI in a second format. Alternatively, if the value of the first indication information is a second value, the second-stage SCI in the first format includes a field indicated in second-stage SCI in a third format. Alternatively, if the value of the first indication information is a third value, the second-stage SCI in the first format includes a field indicated in second-stage SCI in a fourth format.

In a possible implementation, the field indicated in the second-stage SCI in the second format includes a field indicating at least one of the following information: a HARQ process number, a new data indicator, a redundancy version, a source identifier, a destination identifier, a HARQ feedback enabled or disabled indicator, a cast type, or a channel state information (channel state information, CSI) request.

In a possible implementation, the field indicated in the second-stage SCI in the third format includes a field indicating at least one of the following information: a HARQ process number, a new data indicator, a redundancy version, a source identifier, a destination identifier, a HARQ feedback enabled or disabled indicator, a zone identifier, or communication range requirement information.

In a possible implementation, the field indicated in the second-stage SCI in the fourth format includes a field indicating at least one of the following information: a HARQ process number, a new data indicator, a redundancy version, a source identifier, a destination identifier, a HARQ feedback enabled or disabled indicator, a cast type, a CSI request, and providing/requesting indication information. When a value of the providing/requesting indication information is "0", the field indicated in the second-stage SCI in the fourth format further includes a field indicating at least one of the following information: resource combination indication information, first resource location indication information, reference slot location indication information, resource set type indication information, or lowest subchannel indication information.

In a possible implementation, the field indicated in the second-stage SCI in the fourth format includes a field indicating at least one of the following information: a HARQ process number, a new data indicator, a redundancy version, a source identifier, a destination identifier, a HARQ feedback enabled or disabled indicator, a cast type, a CSI request, and providing/requesting indication information. When a value of the providing/requesting indication information is "1", the field indicated in the second-stage SCI in the fourth format further includes a field indicating at least one of the following information: priority indication information, number-of-subchannels indication information, resource reservation period indication information, resource selection window location indication information, or resource set type indication information.

In a possible implementation, the first information includes at least one of the following content: indication information of a priority of the PSSCH (or a priority of the information carried in the PSSCH); indication information of a frequency domain resource of the PSSCH; indication information of a time domain resource of the PSSCH; or indication information of a reservation period of the PSSCH.

In another possible implementation, the transmission parameter of the first message further includes at least one of the following content: request information for sending the first message; resource identification information of the first message; the indication information of the reservation period of the first message; the indication information of the priority of the first message; indication information of a cast type of the first message; or indication information of the number of retransmission times of the first message.

According to a third aspect, this application provides a communication method. The method is applicable to a fourth terminal apparatus. The fourth terminal apparatus may be, for example, a terminal device or a unit, a module, or a chip (system) inside the terminal device, or may be an RSU (or an OBU or a relay node having a mobility capability) or a unit, a module, or a chip (system) inside the RSU (or the OBU or the relay node having a mobility capability).

The fourth terminal apparatus receives sidelink control information. The sidelink control information includes first information and second information, the first information is used for resource selection, the second information includes transmission mode information of a first message, and the transmission mode information of the first message indicates that the first message includes a sidelink positioning reference signal. The fourth terminal apparatus receives the first message based on the sidelink control information.

Because the sidelink control information includes the first information and the second information, the fourth terminal apparatus (new terminal apparatus) may perform measurement on the sidelink positioning reference signal in the first message based on the second information (or the first information and the second information) in the sidelink control information. A measurement result may be used for sidelink positioning. A second terminal apparatus (legacy terminal apparatus) may perform resource selection based on the first information in the sidelink control information. It can be learned that the sidelink control information and the first message can be backward compatible.

In a possible implementation, the fourth terminal apparatus performs measurement on the sidelink positioning reference signal based on the sidelink control information, to obtain a measurement result. The measurement result is used for sidelink positioning.

In this application, the measurement result may be used to position a terminal apparatus that sends the first message and/or the fourth terminal apparatus. It can be learned that this solution can implement sidelink-based positioning.

In a possible implementation, the fourth terminal apparatus performs resource selection based on the first information.

The fourth terminal apparatus may also perform resource selection based on the first information when needing to perform resource selection. In this way, the first information is applicable to resource selection of the legacy terminal apparatus and the new terminal apparatus, so that the sidelink control information can be compatible.

In a possible implementation, the second information further includes second-stage sidelink control information SCI format information whose value is 11.

For related content and beneficial effects, refer to the foregoing descriptions. Details are not described again.

In a possible implementation, the second-stage SCI format information whose value is 11 and/or the transmission mode information of the first message indicate/indicates that the first message includes a sidelink positioning reference signal; or the first message includes a sidelink positioning reference signal, and a PSSCH includes data; or the first message includes a sidelink positioning reference signal, and a PSSCH does not include data. The PSSCH may be used to transmit second-stage SCI in the sidelink control information.

For related content and beneficial effects, refer to the foregoing descriptions. Details are not described again.

In a possible implementation, when the PSSCH includes data, the second-stage SCI format information whose value is 11 and/or the transmission mode information of the first message further indicate/indicates that the first message and the PSSCH are multiplexed in a slot.

In a possible implementation, when the PSSCH includes data, the second-stage SCI format information whose value is 11 and/or the transmission mode information of the first message further indicate/indicates that the first message and the PSSCH are not multiplexed in a slot.

In a possible implementation, when the PSSCH includes data, the second-stage SCI format information whose value is 11 and/or the transmission mode information of the first message further indicate/indicates that the first message and the PSSCH are multiplexed or not multiplexed in a slot.

For related content and beneficial effects, refer to the foregoing descriptions. Details are not described again.

In a possible implementation, the second-stage SCI format information whose value is 11 and/or the transmission mode information of the first message further indicate/indicates that the sidelink control information includes first-stage SCI; or the sidelink control information includes first-stage SCI and second-stage SCI.

For related content and beneficial effects, refer to the foregoing descriptions. Details are not described again.

In a possible implementation, the transmission mode information of the first message occupies a bit, a code point, or a bit location in a reserved field in the first-stage SCI in the sidelink control information.

For related content and beneficial effects, refer to the foregoing descriptions. Details are not described again.

In a possible implementation, the number of bits occupied by the transmission mode information of the first message does not exceed 1, 2, 3, or 4.

For related content and beneficial effects, refer to the foregoing descriptions. Details are not described again.

In a possible implementation, the first information and the second information are included in the first-stage SCI; or the first information is included in the first-stage SCI, and the second information is included in the second-stage SCI; or the first information is included in the first-stage SCI, and the second information is included in the first-stage SCI and the second-stage SCI; or the first information is included in the first-stage SCI, the second information is included in a MAC CE, and the MAC CE is carried in the PSSCH; or the first information is included in the first-stage SCI, the second information is included in the second-stage SCI and a MAC CE, and the MAC CE is carried in the PSSCH.

For related content and beneficial effects, refer to the foregoing descriptions. Details are not described again.

In a possible implementation, the first information is included in the first-stage SCI, the second information is included in the second-stage SCI, and the PSSCH carrying the second-stage SCI does not include data.

For related content and beneficial effects, refer to the foregoing descriptions. Details are not described again.

In a possible implementation, the first information is included in the first-stage SCI, the second information is included in the second-stage SCI, and the PSSCH carrying the second-stage SCI includes data.

For related content and beneficial effects, refer to the foregoing descriptions. Details are not described again.

In a possible implementation, the second information further includes information used to demodulate information carried in the PSSCH.

For related content and beneficial effects, refer to the foregoing descriptions. Details are not described again.

In a possible implementation, the first information includes at least one of the following content: indication information of a priority of the first message; indication information of a frequency domain resource of the first message; indication information of a time domain resource of the first message; or indication information of a reservation period of the first message.

For related content and beneficial effects, refer to the foregoing descriptions. Details are not described again.

In a possible implementation, the indication information of the frequency domain resource of the first message indicates a difference between a lowest frequency domain location of a frequency domain resource occupied by a PSCCH carrying the first-stage SCI in the sidelink control information and a highest frequency domain location of the first message.

For related content and beneficial effects, refer to the foregoing descriptions. Details are not described again.

In a possible implementation, the indication information of the time domain resource of the first message indicates a slot location occupied by an initial transmission resource and/or a retransmission resource of the first message.

For related content and beneficial effects, refer to the foregoing descriptions. Details are not described again.

In a possible implementation, the indication information of the reservation period of the first message indicates that a value of the reservation period of the first message is 0; or the value of the reservation period of the first message is not 0, and the period value of the first message is the same as a period value of a sidelink positioning reference signal sent by a third apparatus.

For related content and beneficial effects, refer to the foregoing descriptions. Details are not described again.

In a possible implementation, the second information includes a transmission parameter of the first message.

For related content and beneficial effects, refer to the foregoing descriptions. Details are not described again.

In a possible implementation, the transmission parameter of the first message includes at least one of the following content: indication information of a frequency domain resource of the first message, indication information of a time domain resource of the first message, indication information of a source identifier of the first message, indication information of a destination identifier of the first message, or indication information of a start and/or end time domain symbol of the first message.

For related content and beneficial effects, refer to the foregoing descriptions. Details are not described again.

In a possible implementation, the indication information of the frequency domain resource of the first message indicates a difference between a lowest frequency domain location of the first message and the lowest frequency domain location of the frequency domain resource occupied by the PSCCH carrying the first-stage SCI in the sidelink control information; and/or a frequency domain offset value of the first message within a frequency domain transmission interval.

For related content and beneficial effects, refer to the foregoing descriptions. Details are not described again.

In a possible implementation, the fourth terminal apparatus may determine the frequency domain resource of the first message based on the indication information of the frequency domain resource of the first message in the first information and the indication information of the frequency domain resource of the first message in the second information. In this way, when the lowest frequency domain location of the frequency domain resource of the first message and the lowest frequency domain location of the frequency domain resource occupied by the PSCCH are not aligned, the frequency domain resource of the first message is accurately obtained.

In a possible implementation, before receiving the first message, the fourth terminal apparatus receives configuration information. The configuration information includes the transmission mode information of the first message.

For related content and beneficial effects, refer to the foregoing descriptions. Details are not described again.

In a possible implementation, the configuration information further indicates that the first message and the PSSCH are multiplexed in a slot. Alternatively, the configuration information further indicates that the first message and the PSSCH are not multiplexed in a slot. Alternatively, the configuration information further indicates that the first message and the PSSCH are not multiplexed or multiplexed in a slot.

For related content and beneficial effects, refer to the foregoing descriptions. Details are not described again.

In a possible implementation, the configuration information further indicates that when a first preset condition is met, the first message and the PSSCH are allowed not to be multiplexed in a slot. The first preset condition includes one or more of the following content: the priority of the first message is higher than a preset first priority; a CBR of a resource pool of a resource used by the first message is lower than a preset first CBR threshold; or the CBR of the resource pool of the resource used by the first message is lower than a second CBR threshold associated with the priority of the first message.

For related content and beneficial effects, refer to the foregoing descriptions. Details are not described again.

In a possible implementation, the configuration information further indicates that when a second preset condition is met, the first message and the PSSCH are allowed to be multiplexed in a slot. The second preset condition includes one of the following content: the priority of the first message is lower than a preset second priority; the priority of the first message is higher than a preset third priority; the CBR of the resource pool of the resource used by the first message is lower than a preset third CBR threshold; or the CBR of the resource pool of the resource used by the first message is lower than a fourth CBR threshold associated with the priority of the first message.

For related content and beneficial effects, refer to the foregoing descriptions. Details are not described again.

In a possible implementation, the configuration information further indicates to perform RSRP measurement on the PSCCH carrying the first-stage SCI in the SCI; and/or indicates the number of symbols occupied by the PSSCH carrying the second-stage SCI in the SCI.

For related content and beneficial effects, refer to the foregoing descriptions. Details are not described again.

In a possible implementation, the PSCCH used to carry the first-stage SCI in the sidelink control information and the PSSCH used to carry the second-stage SCI in the sidelink control information undergo time division multiplexing; and/or the PSCCH and the PSSCH undergo frequency division multiplexing.

For related content and beneficial effects, refer to the foregoing descriptions. Details are not described again.

In a possible implementation, a bandwidth of the first message is the same as a bandwidth of the PSCCH used to transmit the first-stage SCI in the sidelink control information; or the bandwidth of the first message is different from the bandwidth of the PSCCH.

For related content and beneficial effects, refer to the foregoing descriptions. Details are not described again.

In a possible implementation, the bandwidth of the first message is an integer multiple of the bandwidth of the PSCCH, or the bandwidth of the first message is a sum of bandwidths of the PSCCH and the PSSCH, or the bandwidth of the first message is an integer multiple of the sum of the bandwidths of the PSCCH and the PSSCH.

For related content and beneficial effects, refer to the foregoing descriptions. Details are not described again.

In a possible implementation, the first message occupies all or a part of resources in the bandwidth of the first message.

For related content and beneficial effects, refer to the foregoing descriptions. Details are not described again.

In a possible implementation, the first message includes a sidelink positioning reference signal, the PSSCH includes or does not include data, the sidelink control information includes second-stage SCI, and the PSSCH carries the second-stage SCI. The sidelink control information includes the second-stage SCI, and when the PSSCH carrying the second-stage SCI includes data, the second information further includes information used to demodulate information carried in the PSSCH.

In a possible implementation, second-stage SCI in a new format may be defined in this application, and the second-stage SCI in the new format may be referred to as second-stage SCI in a first format. The second information includes a transmission parameter of the first message, and the transmission parameter of the first message and the information used to demodulate the information carried in the PSSCH are carried in the second-stage SCI in the first format.

In a possible implementation, the transmission mode information of the first message includes a non-zero value of the reserved field of the first-stage SCI. In another possible implementation, if the second information includes second-stage SCI format information whose value is 00, the second-stage SCI in the first format includes a field indicated in second-stage SCI in a second format. Alternatively, if the second information includes second-stage SCI format information whose value is 01, the second-stage SCI in the first format includes a field indicated in second-stage SCI in a third format. Alternatively, if the second information includes second-stage SCI format information whose value is 10, the second-stage SCI in the first format includes a field indicated in second-stage SCI in a fourth format.

In another possible implementation, the transmission mode information of the first message includes the second-stage SCI format information whose value is 11. The transmission mode information of the first message may not include information carried in the reserved field of the first-stage SCI. In this way, when identifying that the value of the second-stage SCI format information in the first-stage SCI is 11, the terminal apparatus may determine that the second-stage SCI includes the transmission parameter of the first message and the information used to demodulate the information carried in the PSSCH.

In another possible implementation, the second-stage SCI in the first format includes first indication information, and the first indication information indicates the information for demodulating the information carried in the PSSCH. For example, if a value of the first indication information is a first value, the second-stage SCI in the first format includes a field indicated in second-stage SCI in a second format. Alternatively, if the value of the first indication information is a second value, the second-stage SCI in the first format includes a field indicated in second-stage SCI in a third format. Alternatively, if the value of the first indication information is a third value, the second-stage SCI in the first format includes a field indicated in second-stage SCI in a fourth format.

For related content and beneficial effects of the field indicated in the second-stage SCI in the second format, the field indicated in the second-stage SCI in the third format, and the field indicated in the second-stage SCI in the fourth format, refer to the foregoing descriptions. Details are not described again.

For related content and beneficial effects of the first information and the transmission parameter of the first message, refer to the foregoing descriptions. Details are not described again.

According to a fourth aspect, this application provides a communication method. The method is applicable to a network apparatus. The network apparatus may be, for example, an access network device or a unit, a module, or a chip (system) inside the access network device, or may be a positioning management device or a unit, a module, or a chip (system) inside the positioning management device.

The network apparatus determines configuration information. The configuration information includes transmission mode information of a first message, and the transmission mode information of the first message indicates that the first message includes a sidelink positioning reference signal. The network apparatus sends the configuration information to a first terminal apparatus. The configuration information indicates the first terminal apparatus to send sidelink control information and the first message based on the configuration information, the sidelink control information includes first information and second information, the first information is used for resource selection, the second information includes the transmission mode information of the first message, and the transmission mode information indicates that the first message includes a sidelink positioning reference signal.

Because the sidelink control information includes the first information and the second information, a fourth terminal apparatus (new terminal apparatus) may perform measurement on the sidelink positioning reference signal in the first message based on the second information (or the first information and the second information) in the sidelink control information. A measurement result may be used for sidelink positioning. A second terminal apparatus (legacy terminal apparatus) may perform resource selection based on the first information in the sidelink control information. It can be learned that the sidelink control information and the first message can be backward compatible.

In a possible implementation, the transmission mode information of the first message further indicates that the first message includes a sidelink positioning reference signal. Alternatively, the transmission mode information of the first message further indicates that the first message includes a sidelink positioning reference signal, and a PSSCH includes data. Alternatively, the transmission mode information of the first message further indicates that the first message includes a sidelink positioning reference signal, and a PSSCH does not include data. The PSSCH may include second-stage SCI in the sidelink control information.

For related content and beneficial effects, refer to the foregoing descriptions. Details are not described again.

In a possible implementation, when the PSSCH includes data, the transmission mode information of the first message further indicates that the first message and the PSSCH are multiplexed in a slot. Alternatively, the transmission mode information of the first message further indicates that the first message and the PSSCH are not multiplexed in a slot. Alternatively, the transmission mode information of the first message further indicates that the first message and the PSSCH are multiplexed or not multiplexed in a slot.

For related content and beneficial effects, refer to the foregoing descriptions. Details are not described again.

In a possible implementation, the transmission mode information of the first message further indicates that the sidelink control information includes first-stage SCI; or the sidelink control information includes first-stage SCI and second-stage SCI.

For related content and beneficial effects, refer to the foregoing descriptions. Details are not described again.

In a possible implementation, the configuration information further indicates that the first message and the PSSCH are not multiplexed in a slot. Alternatively, the configuration information further indicates that the first message and the PSSCH are multiplexed in a slot. Alternatively, the configuration information further indicates that the first message and the PSSCH are multiplexed or not multiplexed in a slot.

For related content and beneficial effects, refer to the foregoing descriptions. Details are not described again.

In a possible implementation, the configuration information further indicates that when a first preset condition is met, the first message and the PSSCH are allowed not to be multiplexed in a slot. The first preset condition includes one or more of the following content: a priority of the first message is higher than a preset first priority; a CBR of a resource pool of a resource used by the first message is lower than a preset first CBR threshold; or the CBR of the resource pool of the resource used by the first message is lower than a second CBR threshold associated with the priority of the first message.

For related content and beneficial effects, refer to the foregoing descriptions. Details are not described again.

In a possible implementation, the configuration information further indicates that when a second preset condition is met, the first message and the PSSCH are allowed to be multiplexed in a slot. The second preset condition includes one of the following content: the priority of the first message is lower than a preset second priority; the priority of the first message is higher than a preset third priority; the CBR of the resource pool of the resource used by the first message is lower than a preset third CBR threshold; or the CBR of the resource pool of the resource used by the first message is lower than a fourth CBR threshold associated with the priority of the first message.

For related content and beneficial effects, refer to the foregoing descriptions. Details are not described again.

In a possible implementation, the configuration information further indicates to perform RSRP measurement on the PSCCH carrying the first-stage SCI in the SCI; and/or indicates the number of symbols occupied by the PSSCH carrying the second-stage SCI in the SCI.

For related content and beneficial effects, refer to the foregoing descriptions. Details are not described again.

According to a fifth aspect, a communication apparatus is provided. The communication apparatus may be the first terminal apparatus, the second terminal apparatus, the third terminal apparatus, the fourth terminal apparatus, or the network apparatus. The communication apparatus may include a communication unit and a processing unit, to perform any implementation of the method in any one of the first aspect to the fourth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any implementation of the method in any one of the first aspect to the fourth aspect.

According to a sixth aspect, a communication apparatus is provided. The communication apparatus may be the first terminal apparatus, the second terminal apparatus, the third terminal apparatus, the fourth terminal apparatus, or the network apparatus. The communication apparatus may include a processor and a memory. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform any implementation of the method in any one of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a seventh aspect, a communication apparatus is provided. The communication apparatus may be the first terminal apparatus, the second terminal apparatus, the third terminal apparatus, the fourth terminal apparatus, or the network apparatus. The communication apparatus may include a processor. The processor is coupled to a memory, and may be configured to perform the method in any one of the first aspect to the fourth aspect and the possible implementations of the first aspect to the fourth aspect. Optionally, the communication apparatus further includes the memory. Optionally, the communication apparatus further includes a communication interface, and the processor is coupled to the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a system is provided. The system includes the first terminal apparatus and the fourth terminal apparatus, and may further include the second terminal apparatus, the third terminal apparatus, and the network apparatus.

According to a ninth aspect, a computer program product is provided. The computer program product includes a computer program (which may also be referred to as code or instructions). When the computer program is run, a computer is enabled to perform the method in the method in any one of the implementations of the first aspect to the fourth aspect.

According to a tenth aspect, a computer-readable storage medium is provided. The computer-readable medium stores a computer program (which may also be referred to as code or instructions). When the computer program is run on a computer, the computer is enabled to perform the method in the method in any one of the implementations of the first aspect to the fourth aspect.

According to an eleventh aspect, a chip system is provided. The chip system may include a processor. The processor is coupled to a memory, and may be configured to perform the method in any one of the first aspect to the fourth aspect and the possible implementations of the first aspect to the fourth aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the first aspect to the fourth aspect and the possible implementations of the first aspect to the fourth aspect.

According to a twelfth aspect, a communication apparatus is provided. The communication apparatus may be the first terminal apparatus, the second terminal apparatus, the third terminal apparatus, the fourth terminal apparatus, or the network apparatus. The communication apparatus may include an interface circuit and a processing circuit. The interface circuit may include an input circuit and an output circuit. The processing circuit is configured to receive a signal by using the input circuit, and transmit a signal by using the output circuit, to implement the method in any one of the first aspect to the fourth aspect and the possible implementations of the first aspect to the fourth aspect.

In a specific implementation process, the communication apparatus may be a chip, the input circuit may be an input pin, the output circuit may be an output pin, and the processing circuit may be a transistor, a gate circuit, a flip-flop, various logic circuits, or the like. An input signal received by the input circuit may be received and input by, for example but not limited to, a receiver, a signal output by the output circuit may be output to and transmitted by, for example but not limited to, a transmitter, the input circuit and the output circuit may be a same circuit, and the circuit is used as the input circuit and the output circuit at different moments. Specific implementations of the communication and the circuits are not limited in embodiments of this application.

In an implementation, when the communication apparatus is a wireless communication device, the wireless communication device may be a terminal, such as a smartphone, or may be a radio access network device, such as a base station. The interface circuit may be a radio frequency processing chip in the wireless communication device, and the processing circuit may be a baseband processing chip in the wireless communication device.

In another implementation, the communication apparatus may be a part of the wireless communication device, for example, an integrated circuit product, such as a system chip or a communication chip. The interface circuit may be an input/output interface, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of an architecture of a communication system to which an embodiment of this application is applicable;
FIG. 2 is a diagram of an architecture of another communication system to which an embodiment of this application is applicable;
FIG. 3 is a schematic flowchart of a communication method according to an embodiment of this application;
FIG. 4 is a diagram of possible distribution structures of frequency domain resources of a PSCCH and a first message of a UE-1 according to an embodiment of this application;
FIG. 5 is a diagram of possible distribution structures of frequency domain resources of a PSCCH and a first message of a UE-1 according to an embodiment of this application;
FIG. 6 is a diagram of four possible structures of a frequency domain resource of an SL-PRS in a Comb-4;
FIG. 7 is a schematic flowchart of another communication method according to an embodiment of this application;
FIG. 8 is a diagram of possible structures of sidelink control information and a first message that are sent by a first terminal apparatus according to an embodiment of this application;
FIG. 9 shows several possible examples in which a bandwidth of an SL-PRS is the same as a bandwidth of a PSCCH;
FIG. 10 is a diagram of sending SL-PRSs by a UE-1 and a UE-2;
FIG. 11 is a diagram of structures of sidelink control information and a first message that are sent by a first terminal apparatus according to an embodiment of this application;
FIG. 12 shows several possible examples in which a sum of a bandwidth of a PSCCH and a bandwidth of a PSSCH is the same as a bandwidth of an SL-PRS;
FIG. 13 is a diagram of sending SL-PRSs by a UE-1 and a UE-2;
FIG. 14 is a diagram of a structure of a communication apparatus according to an embodiment of this application;
FIG. 15 is a diagram of a structure of a communication apparatus according to an embodiment of this application; and
FIG. 16 is a diagram of a structure of a communication apparatus according to an embodiment of this application.

### DESCRIPTION OF EMBODIMENTS

The following first describes nouns or terms in embodiments of this application.

### (1) Sidelink (sidelink, SL)

In embodiments of this application, the sidelink may be a link established between devices of different types or a same type, for example, may be a link between terminal devices. The link between terminal devices includes a device-to-device (device-to-device, D2D) link defined in the 3rd generation partnership project (the 3rd Generation Partnership Project, 3GPP) release (release, Rel)-12/13; vehicle-to-vehicle (vehicle-to-vehicle, V2V), vehicle-to-pedestrian (vehicle-to-pedestrian, V2P), vehicle-to-infrastructure (vehicle-to-infrastructure, V2I), vehicle-to-network (vehicle-to-network, V2N), and other links defined by the 3GPP for the internet of vehicles. The link further includes a V2X link of Rel-14, and NR system-based V2X links of Rel-15, Rel-16, Rel-17, Rel-18, and other releases in the future.

The sidelink in embodiments of this application may also be referred to as a direct link, a secondary link, or the like.

### (2) Reference signal

The reference signal in embodiments of this application may be used for resource selection and positioning. The reference signal is, for example, a positioning reference signal (positioning reference signal, PRS). The reference signal is applied to sidelink communication and sidelink-based positioning. The reference signal is, for example, a sidelink positioning reference signal (sidelink positioning reference signal, SL-PRS).

In embodiments of this application, an example in which the reference signal is a sidelink positioning reference signal is used for description. For ease of description, the sidelink positioning reference signal is denoted as an SL-PRS in a part of content of this application. The SL-PRS in embodiments of this application may be replaced with another name, such as a reference signal, a positioning signal, or a positioning reference signal.

### (3) New (new) terminal apparatus and legacy (legacy) terminal apparatus

Apparatuses in embodiments of this application may be classified into a new terminal apparatus and a legacy terminal apparatus. A latest specification release supported by the new terminal apparatus is higher than a latest specification release supported by the legacy terminal apparatus, or the new terminal apparatus supports more functions than the legacy terminal apparatus.

For example, the new terminal apparatus supports a 5th generation (5th generation, 5G) communication system, a communication system of a release later than 5G (including a 6th generation (6th generation, 6G) communication system), and a communication system of a release earlier than 5G (for example, a 4th generation (4th generation, 4G) communication system).

In a possible implementation, the new terminal apparatus supports systems of Rel-18 and a later release in the 5G communication system. The legacy terminal apparatus supports the 4G communication system or systems of Rel-17 and an earlier release (for example, Rel-16) in the 5G communication system, but does not support a system of Rel-18 or a later release in the 5G communication system.

In embodiments of this application, an example in which a first terminal apparatus, a third terminal apparatus, and a fourth terminal apparatus are new terminal apparatuses, and a second terminal apparatus is a legacy terminal apparatus is used for description.

### (4) Resource pool (resource pool)

New radio (new radio, NR) sidelink communication is performed based on a resource pool. The resource pool is a block of time-frequency resources used for SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID). A terminal apparatus performs receiving in a receive resource pool, and performs sending in a transmit resource pool. If resource pools have a same resource pool index, it may be considered that time-frequency resources of the resource pools completely overlap.

In a sidelink on unlicensed spectrum (Sidelink on unlicensed spectrum, SL-U), a frequency band is shared by terminal apparatuses in a plurality of forms. For example, an SL terminal apparatus, a wireless fidelity (wireless fidelity, Wi-Fi) terminal apparatus, and a Bluetooth terminal apparatus perform transmission in a same frequency band. Therefore, a concept of an SL-dedicated resource pool does not necessarily exist. The SL resource pool may also be understood as a set of resources that may be used for SL transmission. In embodiments, the resource pool may also be referred to as a channel (channel), an operating channel (operating channel), a nominal channel bandwidth (nominal channel bandwidth), or a bandwidth (bandwidth). In other words, the resource pool, the channel, and the bandwidth all represent a set of resources that may be used for SL transmission.

### (5) Time domain resource

The time domain resource includes a symbol (symbol), a slot (slot), a mini-slot (mini-slot), a partial slot (partial slot), a subframe (subframe), a radio frame (frame), a sensing slot (sensing slot), or the like.

One slot may include at least one symbol, for example, 14 symbols or 12 symbols. There may be different types of slots, and different slot types include different numbers of symbols. For example, a mini-slot (mini-slot) includes less than 7 symbols, for example, 2 symbols, 3 symbols, or 4 symbols, and a normal slot (slot) includes 7 symbols or 14 symbols.

Based on different subcarrier spacings, symbol lengths may be different. Therefore, slot lengths may be different. For example, a length of a slot corresponding to a subcarrier spacing of 15 kHz is 0.5 ms, and a length of a slot corresponding to a subcarrier spacing of 60 kHz is 0.125 ms.

### (6) Frequency domain resource

The frequency domain resource includes a subchannel, a frequency band (band), a carrier (carrier), a bandwidth part (BandWidth Part, BWP), a resource block (Resource Block, RB), a resource pool, or the like.

The subchannel is a minimum unit of a frequency domain resource occupied by a physical sidelink shared channel, and one subchannel may include one or more resource blocks (resource block, RB). A bandwidth of a wireless communication system in frequency domain may include a plurality of RBs. For example, possible bandwidths of an LTE system may include 6, 15, 25, or 50 physical resource blocks (physical resource block, PRB). In frequency domain, one RB may include several subcarriers. For example, in the LTE system, one RB includes 12 subcarriers, and each subcarrier spacing may be 15 kHz. Certainly, another subcarrier spacing may alternatively be used, for example, a subcarrier spacing of 3.75 kHz, 30 kHz, 60 kHz, or 120 kHz. This is not limited herein.

The subcarrier spacing (subcarrier spacing, SCS) is a value of a spacing between center locations or peak locations of two adjacent subcarriers in frequency domain in an OFDM system. In 5G NR, a plurality of subcarrier spacings are introduced. Different carriers may have different subcarrier spacings. The subcarrier spacing has a baseline of 15 kHz, which may be 15 kHz x 2ⁿ, where n is an integer, and ranges from 3.75 kHz, 7.5 kHz, to 480 kHz.

### (7) Physical sidelink control channel (physical sidelink control channel, PSCCH)

The PSCCH carries first-stage sidelink control information (sidelink control information, SCI). The first-stage SCI may also be referred to as first-order SCI or first-level SCI, and may be denoted as SCI-1.

The PSCCH is scheduled in unit of one slot in time domain, and in unit of one or more consecutive subchannels in frequency domain. In time domain, the PSCCH occupies two or three orthogonal frequency division multiplexing (orthogonal frequency division multiplexing, OFDM) symbols starting from the second sidelink symbol. In frequency domain, PRBs carrying the PSCCH start from a lowest PRB of a lowest subchannel of an associated physical sidelink shared channel (physical sidelink shared channel, PSSCH), and the number of PRBs occupied by the PSCCH falls within a subband range of one PSSCH. The PSCCH includes {10, 12, 15, 20, 25} resource blocks (resource block, RB), and a specific value is preconfigured or is configured by a network. The PRB and the RB may be replaced with each other.

### (8) Physical downlink shared channel (physical sidelink shared channel, PSSCH)

The PSSCH carries at least one of second-stage SCI, data, or a medium access control control element (medium access control, MAC CE). The second-stage SCI may also be referred to as second-order SCI or second-level SCI, and may be denoted as SCI-2.

The PSSCH is scheduled in unit of one slot in time domain, and in unit of one or more consecutive subchannels in frequency domain. In time domain, on a resource without a physical sidelink feedback channel (physical sidelink feedback channel, PSFCH), 12 symbols are used to carry the PSSCH; and on a resource with a PSFCH, nine symbols are used to carry the PSSCH. In frequency domain, the PSSCH occupies L_{subCh} consecutive subchannels. In addition, in one slot, the first OFDM symbol copies, for automatic gain control (automatic gain control, AGC), information sent on the second symbol.

### (9) Physical sidelink feedback channel (physical sidelink feedback channel, PSFCH)

The PSFCH carries feedback information. On a resource with the PSFCH, the second-to-last and third-to-last OFDM symbols are used to carry the PSFCH. A signal on the third-to-last symbol is a duplication of a signal on the second-to-last symbol, to facilitate AGC adjustment of a receive side.

### (10) Sensing (sensing)

A terminal device may perform sidelink communication without resource assignment of a network device, but autonomously selects a sidelink resource from a resource pool preconfigured by the network device.

For example, the terminal device may obtain the sidelink resource through a sensing (sensing) process. The terminal device may send sidelink control information (sidelink control information, SCI). The terminal device obtains, by decoding sidelink control information of another terminal device or performing sidelink measurement, information about a resource occupied by the another terminal device, and the terminal device may select, based on a sensing (sensing) result, a resource that is not occupied by the another terminal device. The sidelink measurement is based on a value of sidelink reference signal received power (sidelink reference signal received power, S-RSRP) obtained when the SCI is decoded.

### (11) Priority (Priority)

The priority may be a service priority of a terminal device, a priority of a to-be-sent first message, or a transmission priority (transmission priority) of the terminal device. The terminal device may send a plurality of services at the same time, and priorities of the plurality of services may be different. Therefore, a priority of the terminal device may also be described as a service priority of the terminal device.

The service priority may also be referred to as an L1 priority (L1 priority), a physical layer priority, a priority carried in sidelink control information (sidelink control information, SCI), a priority corresponding to a physical sidelink shared channel (physical sidelink shared channel, PSSCH) associated with SCI, a transmission priority, a priority of sending a PSSCH (or a priority of information carried in the PSSCH), a priority used for resource determining, a priority of a logical channel, or a highest-level priority of a logical channel. There may be a correspondence between a priority level and a priority value. For example, a higher priority level corresponds to a lower priority value, or a lower priority level corresponds to a lower priority value. In the example in which a higher priority level corresponds to a lower priority value, the priority value may be an integer ranging from 1 to 8 or an integer ranging from 0 to 7. If the priority value ranges from 1 to 8, the priority value 1 represents a highest-level priority.

### (12) Congestion control (congestion control)

In a resource pool, a channel busy ratio (channel busy ratio, CBR) and a channel occupancy ratio (channel occupancy ratio, CR) are defined to indicate a service density and a channel congestion degree on a resource.

### (12.1) CBR

The CBR is a proportion or part, exceeding a configured threshold, of an S-RSSI obtained in a slot n through measurement on a subchannel in a resource pool in a slot in which a defined measurement window is located. Optionally, a size of the measurement window may be [n-a, n-b], where a and b are non-negative integers. For example, a=100, and b=1.

Optionally, measurement may be performed on different channels to obtain CBRs of corresponding channels. For example, if measurement is performed on a physical sidelink shared channel (physical sidelink shared channel, PSSCH), a CBR of the PSSCH is obtained. If measurement is performed on a physical sidelink control channel (physical sidelink control channel, PSCCH), a CBR of the PSCCH is obtained.

For the PSCCH, measurement is performed only at a location at which resource pools of the PSCCH and of the PSSCH are not adjacent to each other in frequency domain. During the measurement, a bandwidth of the PSCCH is fixed to two PRBs.

### (12.2) CR

The CR is a value obtained in a slot n by dividing the number of subchannels used for transmission by a total number of configured subchannels. Optionally, the number of subchannels used for transmission may be a sum of the number of subchannels used for transmission before the slot n and/or the number of subchannels scheduled for transmission after the slot n. Correspondingly, the total number of configured subchannels may be the number of subchannels in a measurement window before the slot n, and may be the number of subchannels in a measurement window after the slot n. For example, the measurement window before the slot n may be [n-a, n-1], the measurement window after the slot n may be [n, n+b], and the total number of configured subchannels is a total number of subchannels configured in slots [n-a, n+b].

For example, for the slot n, assuming that a total number of subchannels used for transmission in slots [n-a, n-1] is S1, a total number of subchannels scheduled for transmission in slots [n, n+b] is S2, and the total number of subchannels configured in the slots [n-a, n+b] is S, the CR obtained through measurement in the slot n is (S1+S2)/S.

It should be noted that subchannels scheduled for transmission in slots [n+1, n+b] are actually subchannels occupied by future transmission, and may be counted based on retransmission indicated by scheduling assignment (scheduling assignment, SA) indication information detected in the slot n.

For example, for the slot n, if a total number of subchannels used for transmission in slots [n-500, n-1] is S1=2000, a total number of subchannels scheduled for transmission in slots [n, n+499] is S2=1000, and a total number of subchannels configured in the slots [n-500, n+499] is S=1000*20, the CR obtained through measurement in the slot n is (2000+1000)/20000=0.15.

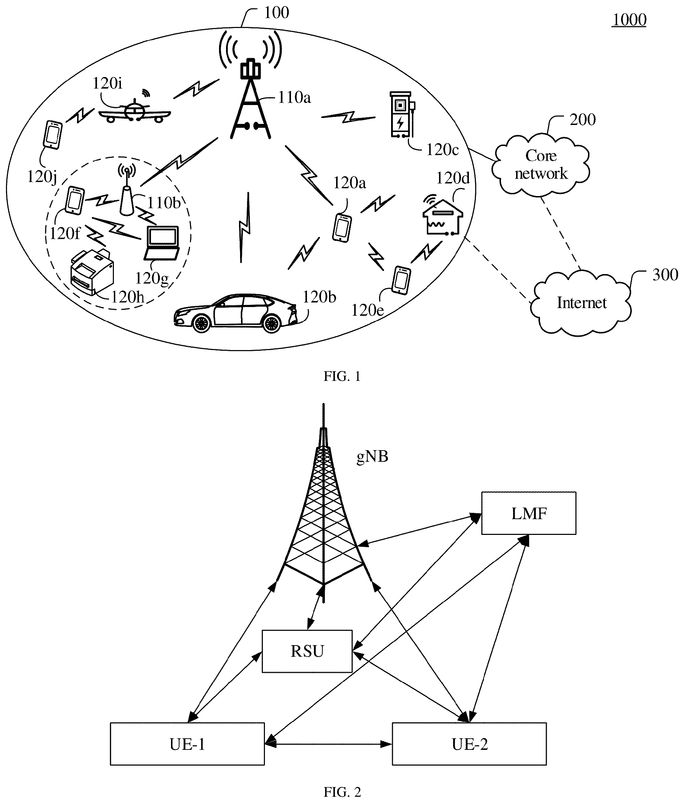

FIG. 1 is an example diagram of an architecture of a communication system 1000 to which an embodiment of this application is applicable. As shown in FIG. 1, the communication system includes a radio access network 100 and a core network 200. Optionally, the communication system 1000 may further include the internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and a radio access network device may be different independent physical devices, or functions of the core network device and logical functions of the radio access network device may be integrated into a same physical device, or a part of functions of the core network device and a part of functions of the radio access network device may be integrated into one physical device. Terminal devices may be connected to each other in a wired or wireless manner, and radio access network devices may be connected to each other in a wired or wireless manner. FIG. 1 is merely an example diagram. The communication system may further include other network devices, for example, may further include a wireless relay device and a wireless backhaul device, which are not shown in FIG. 1.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes a part of functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part of or all functions of a physical layer. For specific descriptions of the foregoing protocol layers, refer to related technical specifications of the 3rd generation partnership project (3rd generation partnership project, 3GPP).

The radio access network device may be a macro base station (for example, 110a in FIG. 1), or may be a micro base station or an indoor station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal device may establish a connection to an operator network through an interface (for example, N1) provided by the operator network, to use a data service, a voice service, and/or the like provided by the operator network. The terminal device may further access a domain name system (domain name system, DNS) through the operator network, to use an operator service deployed in the DNS and/or a service provided by a third party. The third party may be a service party other than the operator network and the terminal device, and may provide another data and/or voice service and the like for the terminal device. A specific representation form of the third party may be specifically determined based on an actual application scenario, and is not limited herein.

The terminal device may also be referred to as a terminal apparatus, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart household device, a roadside unit (roadside unit, RSU), or the like. A specific technology and a specific device form that are used by the terminal device are not limited in embodiments of this application.

The base station and the terminal device may be fixed or movable. The base station and the terminal device may be deployed on land, including indoor, outdoor, handheld, or in-vehicle forms; or may be deployed on water; or may be deployed on airplanes, balloons, and or artificial satellites in air. Application scenarios of the base station and the terminal device are not limited in embodiments of this application.

Roles of the base station and the terminal device may be relative. For example, a helicopter or uncrewed aerial vehicle 120i in FIG. 1 may be configured as a mobile base station. For those terminal devices 120j accessing the radio access network 100 via 120i, the terminal device 120i is a base station, while for the base station 110a, 120i is a terminal device, that is, communication between 110a and 120i is performed based on a wireless air interface protocol. Certainly, the communication between 110a and 120i may alternatively be performed based on an interface protocol between base stations. In this case, for 110a, 120i is also a base station. Therefore, the base station and the terminal device may be collectively referred to as a communication apparatus, 110a and 110b in FIG. 1 may be referred to as a communication apparatus having a base station function, and 120a to 120j in FIG. 1 may be referred to as a communication apparatus having a terminal device function.

Communication between a base station and a terminal device, between base stations, and between terminal devices may be performed by using a licensed spectrum, an unlicensed spectrum, or both, which may be performed by using a spectrum below 6 gigahertz (gigahertz, GHz), a spectrum above 6 GHz, or both. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenario such as a smart grid, industrial control, smart transportation, or a smart city. Similarly, a function of the terminal device may be performed by a module (for example, a chip or a modem) in the terminal device, or may be performed by an apparatus including the function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further interfered with by a signal from a neighboring cell.

The core network in embodiments of this application may include a network device that processes and forwards signaling and data of a user, for example, including core network devices such as an access and mobility management function (access and mobility management function, AMF), a session management function (session management function, SMF), a user plane gateway, and a positioning management device. The user plane gateway may be a server that has functions such as mobility management, routing, and forwarding specific to user plane data, and is generally located on a network side, such as a serving gateway (serving gateway, SGW), a packet data network gateway (packet data network gateway, PGW), or a user plane function (user plane function, UPF). The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may further include other network elements, which are not listed one by one herein.

The positioning management device has a positioning function. The positioning management device in embodiments of this application may include a location management function (location management function, LMF) or a location management component (location management component, LMC), or may be a local location management function (local location management function, LLMF) located in a network device, or a positioning server. This is not limited in embodiments of this application. For ease of description, the following embodiments are described by using an example in which the positioning management device is an LMF.

Based on FIG. 1 and the foregoing other content, FIG. 2 is an example diagram of an architecture of another communication system to which an embodiment of this application is applicable. As shown in FIG. 2, the communication system includes at least one gNB, at least one UE (a UE-1 and a UE-2 are shown in FIG. 2 as an example), an RSU, an LMF, and the like.

In FIG. 2, the gNB may communicate with the UE (the UE-1 and the UE-2) and the RSU over a link, and the LMF may communicate with the UE (the UE-1 and the UE-2) and the RSU over a link. The UE (the UE-1 or the UE-2) may also communicate with the RSU, and UEs (the UE-1 and the UE-2) may also communicate with each other.

The sidelink in embodiments of this application may be a link between the UEs (the UE-1 and the UE-2), or may be a link between the UE (the UE-1 or the UE-2) and the RSU. The gNB in FIG. 2 may be replaced with the radio access network device shown in FIG. 1 or a unit, a module, or a chip (system) in the access network management device. The UE (the UE-1 and the UE-2) may be the terminal device in FIG. 1 or a unit, a module, or a chip (system) in the terminal device, or may be a device in FIG. 1 that may be considered as a terminal, or a unit, a module, or a chip inside the device in FIG. 1 that may be considered as a terminal. The RSU may be the RSU in FIG. 1 or a unit, a module, or a chip (system) in the RSU. The RSU in FIG. 2 may be replaced with another device, for example, an on-board unit (on-board unit, OBU) or a relay node having a mobility capability. FIG. 2 shows the RSU as an example. The communication system is merely an example for description, and is not intended to limit a communication system in this application.

In a communication system, a resource pool may support communication of legacy (legacy) terminal apparatuses and communication of new (new) terminal apparatuses. For example, the legacy terminal apparatuses support 3GPP Rel-16 and/or 3GPP Rel-17, but do not support 3GPP Rel-18. The new terminal apparatuses support 3GPP Rel-16 and/or 3GPP Rel-17, and further support 3GPP Rel-18 (for example, transmission of a sidelink positioning reference signal in 3GPP Rel-18). When resources in a resource pool support the new terminal apparatuses and the legacy terminal apparatuses, or in other words, the resource pool supports the new terminal apparatuses and supports backward compatibility, the resource pool may be referred to as a shared resource pool in this application. How to implement backward compatibility of the shared resource pool is a problem that urgently needs to be resolved.

For example, a new terminal apparatus performs sidelink positioning based on a resource in the shared resource pool. For example, the new terminal apparatus sends a message by using the resource in the shared resource pool, where the message includes sidelink control information and a sidelink positioning reference signal. After receiving the message, another new terminal apparatus may identify that the message is used for sidelink positioning, and then process the message in a message processing manner supported by the new terminal apparatus. However, because the resource of the message is the resource in the shared resource pool, a legacy terminal apparatus also receives the message, and considers that the message is a message of sidelink communication supported by the legacy terminal apparatus, and then processes the message in a message processing manner supported by the legacy terminal apparatus, which may cause a decoding error.

Embodiments of this application provide a solution. In this solution, a new terminal apparatus (for example, a first terminal apparatus) sends sidelink control information and a first message. The sidelink control information may include first information and second information. The first information may be used for resource selection. The second information includes transmission mode information of the first message. The transmission mode information of the first message indicates that the first message includes a sidelink positioning reference signal.

A format of the first information in the sidelink control information is the same as a format, specified in a specification release supported by the legacy terminal apparatuses, of information used for resource selection. Therefore, after receiving the sidelink control information, a legacy terminal apparatus (for example, a second terminal apparatus) may successfully demodulate and decode the first information. Then, the legacy terminal apparatus may perform sensing measurement based on the first information, and then perform resource selection. In addition, because the second information is not information specified in the specification release supported by the legacy terminal apparatuses, but newly added information in a specification release supported by the new terminal apparatuses, if the legacy terminal apparatus decodes the second information, a decoding error occurs. However, in embodiments of this application, the legacy terminal apparatus may identify the transmission mode information of the first message, and determine, based on the transmission mode information of the first message, that the legacy terminal apparatus does not need to process (for example, decode) the second information in the sidelink control information, thereby reducing a probability of a decoding error.

After receiving the sidelink control information, a new terminal apparatus (for example, a fourth terminal apparatus) may demodulate and decode the first information and the second information, and then may perform resource selection based on the first information, and perform measurement on the sidelink positioning reference signal based on the second information, where an obtained measurement result may be used for sidelink positioning.

It can be learned from the foregoing content that, in the solution provided in embodiments of this application, a message sent by a new terminal apparatus can be backward compatible. To be specific, after receiving sidelink control information and a sidelink positioning reference signal that are sent by a new terminal apparatus (for example, a first terminal apparatus), a legacy terminal apparatus and a new terminal apparatus both may perform corresponding processing, that is, the signaling is backward compatible, which may also be understood as that resource configuration of the sidelink positioning reference signal in the shared resource pool is compatible with that of the legacy terminal apparatus. The following continues to describe, with reference to accompanying drawings, the solution provided in embodiments of this application.

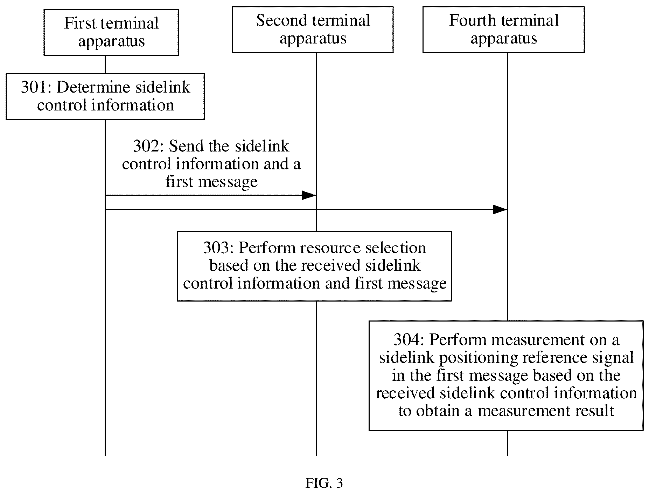

Based on the content shown in FIG. 1 and FIG. 2 and the foregoing other content, FIG. 3 is an example of a schematic flowchart of a communication method according to an embodiment of this application.

For ease of understanding, the solution provided in FIG. 3 is described from a perspective of interaction between a plurality of apparatuses. Any one of a first terminal apparatus, a second terminal apparatus, a third terminal apparatus, and a fourth terminal apparatus in this embodiment of this application may be the UE (for example, the UE-1 or the UE-2) or a chip (system) in the UE, or the RSU or a chip (system) in the RSU in FIG. 2; or may be an OBU, a chip (system) in the OBU, a relay node having a mobility capability, or a chip (system) in the relay node; or may be the terminal device or a chip (system) in the terminal device in FIG. 1; or may be a device in FIG. 1 that may be considered as a terminal, or a chip (system) inside the device in FIG. 1 that may be considered as a terminal.

Any two of the first terminal apparatus, the second terminal apparatus, the fourth terminal apparatus, and the third terminal apparatus may belong to devices of a same type (or chips in the devices), or may belong to different devices.

For example, the first terminal apparatus and the second terminal apparatus may be the two UEs in FIG. 2, or may be two RSUs (the RSU may be replaced with an OBU, a relay node with a mobility capability, or the like), or may be respectively a terminal apparatus and an RSU. The first terminal apparatus and the fourth terminal apparatus may be the two UEs in FIG. 3, or may be two RSUs (the RSU may be replaced with an OBU, a relay node with a mobility capability, or the like), or may be respectively a terminal apparatus and an RSU. The first terminal apparatus and the third terminal apparatus may be the two UEs in FIG. 3, or may be two RSUs (the RSU may be replaced with an OBU, a relay node with a mobility capability, or the like), or may be respectively a terminal apparatus and an RSU.

As shown in FIG. 3, the method includes the following step 301 to step 304, which are further described below with reference to accompanying drawings.

Step 301: A first terminal apparatus determines sidelink control information.

Step 302: The first terminal apparatus sends the sidelink control information and a first message.

Correspondingly, one or more apparatuses receive the sidelink control information and the first message.

The sidelink control information may occur in a plurality of cases. The sidelink control information may include first-stage SCI, and does not include second-stage SCI. In other words, the sidelink control information includes first-stage SCI. Alternatively, the sidelink control information includes first-stage SCI and second-stage SCI. In this embodiment of this application, the first-stage SCI may be carried in a PSCCH, the second-stage SCI may be carried in a PSSCH, and the PSSCH may or may not include data. Related content is further described in detail below, and is not elaborated herein.

The sidelink control information in this embodiment of this application may include first information. The first information is used for resource selection. In this embodiment of this application, the first terminal apparatus may be a new terminal apparatus, and the first information may be used by a legacy terminal apparatus (for example, a second terminal apparatus) to perform resource selection, and may be used by a new terminal apparatus (for example, a fourth terminal apparatus) to perform resource selection. The first message includes a sidelink positioning reference signal. In this embodiment of this application, for ease of description, the sidelink positioning reference signal is denoted as an SL-PRS in subsequent content. The SL-PRS in this embodiment of this application may be replaced with another name, for example, a reference signal or a sidelink reference signal used for positioning. The terminal apparatus (for example, the second terminal apparatus or the fourth terminal apparatus) may perform resource selection based on the first information and the first message. For this process, refer to the foregoing related descriptions about sensing. Details are not described again.

The sidelink control information and the SL-PRS may be sent in a same slot, and a sending time of the sidelink control information may not be later than a sending time of the SL-PRS; or the sidelink control information and the SL-PRS may be sent in different slots, and a sending time of the sidelink control information may be earlier than a sending time of the SL-PRS.

The first information may include some information required for resource selection, so that the legacy terminal apparatus can perform resource selection after receiving the information. In this embodiment of this application, there may be a plurality of types of content in the first information. For example, the first information may include related information of one or more of a priority, a frequency domain resource, a time domain resource, or a reservation period, which are respectively described below by using information A1, information A2, information A3, and information A4.

### Information A1: Indication information of a priority (priority) of the first message.

The indication information of the priority of the first message may indicate the priority of the first message, to indicate a level, a magnitude, or a range of importance, urgency, a latency requirement, or a reliability requirement of the first message. For a concept of the priority, refer to the foregoing descriptions about the term "priority". Details are not described again.

### Information A2: Indication information of a frequency domain resource of the first message.

The indication information of the frequency domain resource of the first message indicates a difference between a lowest frequency domain location of a frequency domain resource occupied by the PSCCH carrying the first-stage SCI in the sidelink control information and a highest frequency domain location of the first message.

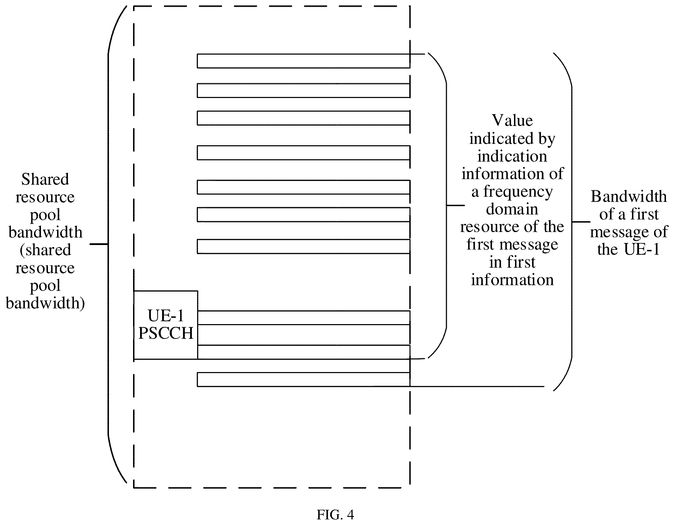

FIG. 4 is an example diagram of possible distribution structures of frequency domain resources of a PSCCH and a first message of a UE-1 according to an embodiment of this application. As shown in FIG. 4, time domain resources occupied by the PSCCH and the first message of the UE-1 do not overlap. A lowest frequency domain location of the PSCCH of the UE-1 may or may not be equal to a lowest frequency domain location of the first message. FIG. 4 shows an example in which the lowest frequency domain location of the PSCCH of the UE-1 is not equal to the lowest frequency domain location of the first message. FIG. 4 shows an example of the difference indicated by the indication information of the frequency domain resource of the first message, that is, the difference between the lowest frequency domain location of the PSCCH and the highest frequency domain location of the first message.

The indication information of the frequency domain resource of the first message in the first information performs indication in a manner that can be understood by a legacy terminal apparatus, for example, indicates a bandwidth location and size from a lowest PRB of the PSCCH to an end location of the first message. The legacy terminal considers by default that the lowest frequency domain location of the PSCCH is the same as a lowest frequency domain location of the first message. In this way, the legacy terminal apparatus (for example, the second terminal apparatus) may parse and decode the first information to obtain the indication information of the frequency domain resource of the first message in the first information, then receive the first message on the the indication information of the frequency domain resource, and perform resource selection based on the received first message.

### Information A3: Indication information of a time domain resource of the first message.

The indication information of the time domain resource of the first message may indicate a slot location occupied by an initial transmission resource and/or a retransmission resource of the first message.

The first message may be transmitted once without retransmission. For example, the indication information of the time domain resource of the first message in the first information may indicate that the SL-PRS is used for current initial transmission, and is not used for retransmission. In this case, the indication information of the time domain resource of the first message may indicate a slot location occupied by an initial transmission resource of the first message.

Alternatively, the first message may be retransmitted. For example, the indication information of the time domain resource of the first message in the first information may indicate a slot location (or referred to as a reserved slot) occupied by a retransmission resource of the SL-PRS.

For example, in initial transmission, SL-PRSs of the first terminal apparatus and a third terminal apparatus undergo frequency division multiplexing. In subsequent retransmission, SL-PRSs of the first terminal apparatus and another apparatus (not the third terminal apparatus) may need frequency division multiplexing, and a bandwidth of the SL-PRS of the another apparatus may be not completely the same as a bandwidth of the SL-PRS of the third terminal apparatus. If they are different, a bandwidth of the SL-PRS subsequently retransmitted by the first terminal apparatus is affected. To avoid this problem, in a possible implementation, the SL-PRS may be set to be not retransmitted. In another possible implementation, the first message may be retransmitted, and the bandwidth of the first message may be within a reserved bandwidth for sending the SL-PRS by the third terminal apparatus, so that a condition for retransmission is similar to that for initial transmission, thereby reducing interference caused to retransmission of the SL-PRS.

In a possible implementation, in this embodiment of this application, frequency division multiplexing of two pieces of information (for example, the SL-PRS of the first terminal apparatus and the SL-PRS of the third terminal apparatus) may be understood as that frequency domain resources of the two pieces of information do not overlap, and time domain resources of the two pieces of information overlap.

### Information A4: Indication information of a reservation period of the first message.

The first message may be aperiodically transmitted. For example, the indication information of the reservation period of the first message indicates that a value of the reservation period of the first message is 0. The value of the reservation period being 0 may indicate that the SL-PRS is aperiodically transmitted.

In another possible implementation, the indication information of the reservation period of the first message indicates that the value of the reservation period of the first message is not 0, and the period value of the first message is the same as a period value of the sidelink positioning reference signal sent by the third terminal apparatus.

For example, in initial transmission, the SL-PRSs of the first terminal apparatus and the third terminal apparatus undergo frequency division multiplexing. In subsequent retransmission, SL-PRSs of the first terminal apparatus and another apparatus (not the third terminal apparatus) may need frequency division multiplexing, and a bandwidth of the SL-PRS of the another apparatus may be not completely the same as a bandwidth of the SL-PRS of the third terminal apparatus. If they are different, the bandwidth of the SL-PRS subsequently retransmitted by the first terminal apparatus is affected. To avoid this problem, in a possible implementation, the SL-PRS may be set to aperiodic transmission or the transmission period value zero, that is, the current transmission does not make a periodic reservation for subsequent transmission.

In another possible implementation, transmission of the first message may be set to periodic transmission. However, the period value of the SL-PRS of the first terminal apparatus needs to be the same as a period value of the SL-PRS of the third terminal apparatus. Alternatively, it may be understood that the bandwidth of the SL-PRS of the first terminal apparatus needs to be within a periodically reserved bandwidth for sending the SL-PRS by the third terminal apparatus. In this way, during retransmission, the SL-PRSs of the first terminal apparatus and the third terminal apparatus also undergo frequency division multiplexing, thereby reducing interference caused to retransmission of the SL-PRS.

Table 1 shows a possible example of the first information included in the sidelink control information. As shown in Table 1, the sidelink control information includes first-stage SCI, and the first-stage SCI includes a plurality of fields (fields). A location at which each piece of information of the first information is carried may be shown in Table 1. A row in Table 1 is used as an example for description. For example, the first-stage SCI includes a priority field, the priority field may occupy 3 bits, and the priority field may carry the indication information (the information A1) of the priority (priority) of the first message. Content of other rows is similar thereto and is not elaborated. The first-stage SCI may further include more other information, which is not shown in Table 1. Table 1 provides an example, and should not be considered as a limitation on a location at which the first information is carried. In actual application, the number of bits occupied by each field may change. Optionally, the numbers of bits in a second-to-last column in Table 1 are merely examples, and do not define or limit information indicated in the fields. Alternatively, in another embodiment, the numbers of bits in the second-to-last column in Table 1 may have other values.

**Table 1 Example of the first information included in the sidelink control information**

| | | Fields (fields) | Number of bits (bits) | Carried information |
|---|---|---|---|---|
| Sidelink control | First-stage SCI | Priority (priority) | 3 | Indication information (information A1) of the priority of the first message |
| | | Fields (fields) | Number of bits (bits) | Carried information |
| information | | Frequency domain resource (frequency resource) | 4 to 6 | Indication information (information A2) of the frequency domain resource of the first message |
| | | Time domain resource (time resource) | 5 or 9 | Indication information (information A3) of the time domain resource of the first message |
| | | Reservation period (reservation period) | 4 | Indication information (information A4) of the reservation period of the first message |

The location at which the first information is carried may be indicated in a manner that can be understood by the legacy terminal apparatus. For example, the first information may be carried in a carrying manner specified in a protocol supported by the legacy terminal apparatus. In this way, the legacy terminal apparatus (for example, the second terminal apparatus) may parse and decode the first information, and then perform resource selection based on the first information and the first message.

In this embodiment of this application, the sidelink control information further includes second information. The second information may include transmission mode information of the first message, and the transmission mode information of the first message indicates that the first message includes a sidelink positioning reference signal. Then, the new terminal apparatus (for example, the fourth terminal apparatus) may determine, based on the information, that the first message includes an SL-PRS, and then perform measurement on the SL-PRS. A measurement result is used for sidelink positioning.

The measurement result in this embodiment of this application may include a plurality of types. For example, the measurement result includes measurement results required by the following positioning technologies: a time of arrival (time of arrival, TOA), an angle of departure (angle of departure, AOD), a time difference of arrival (time difference of arrival, TDOA), an angle of arrival (angle of arrival, AOA), a round trip time (round trip time, RTT), a carrier phase (carrier phase), and the like. Optionally, the measurement result in this embodiment of this application may alternatively be a measurement result required by a possible positioning technology in the future. This is not limited in this embodiment of this application.

In addition, the legacy terminal apparatus may determine, based on the transmission mode information of the first message, that the second information does not need to be decoded, thereby reducing a probability of a decoding error of the legacy terminal apparatus. The second information may further include other information, for example, a transmission parameter of the first message. The following provides descriptions by using information B 1, information B2, and information B3. The information B1 is the transmission mode information of the first message, the information B2 is second-stage SCI format information whose value is 11, and the information B3 is the transmission parameter of the first message.

### Information B1: Transmission mode information of the first message.

In a possible implementation, the SCI includes first-stage SCI, and the transmission mode information (the information B1) of the first message in the second information may be indicated in a reserved field in the first-stage SCI, which may also be understood as that the transmission mode information (the information B1) of the first message is carried by a part of or all bits (the bits may be replaced with code points (code point) or bit locations) in the reserved field in the first-stage SCI in the sidelink control information, or may be understood as that the transmission mode information of the first message includes a value, a specific value state, or the like in the reserved field in the first-stage SCI.

For example, a network apparatus configures, through RRC, K₀ bits (for example, K₀ is 1, 2, 3, or 4) in the reserved field as a bit that can carry the transmission mode information (the information B1) of the first message. A new name may be defined for the reconfigured bit, and the reserved field may not be reused. The redefined name of the bit is not limited in this embodiment of this application. When the network apparatus defines the bit in the reserved field to carry the transmission mode information of the first message, the number of bits occupied by the transmission mode information (the information B1) of the first message does not exceed the number K₀ (for example, 1, 2, 3, or 4) of the defined bits. For example, for backward compatibility with Rel-17, K₀ may be 1 or 3. For example, for backward compatibility with Rel-16, K₀ may be 2 or 4.

Because the transmission mode information (the information B1) of the first message is carried by a part of or all bits (the bits may be replaced with code points (code point) or bit locations) in the reserved field in the first-stage SCI in the sidelink control information, after identifying the information of the part of bits, the legacy terminal apparatus may consider that the information is information indicating that the legacy terminal apparatus does not need to decode the second information, and then does not decode the second information, thereby reducing a probability of a decoding error.

For example, the transmission mode information (the information B1) of the first message is indicated by using a non-zero state of the K₀ bits. For example, K₀=1, that is, 1 bit is used for indication. For example, when a value of the bit is 1, it represents that the bit indicates the transmission mode information (the information B1) of the first message. For another example, when the value of the bit is 0, it represents that the bit is in a reserved state. For another example, K₀=2, that is, 2 bits are used for indication. When a value of the K₀ bits is one or more of values of 10, 01, or 11, it represents that the bits indicate the transmission mode information (the information B1) of the first message. For another example, when the value of the K₀ bits is 00, it represents that the bits are in a reserved state. For example, K₀=3 bits, that is, 3 bits are used for indication. When a value of the bits is one or more of 001 to 111, it represents that the bits indicate the transmission mode information (the information B1) of the first message. For example, K₀=4 bits, that is, 4 bits are used for indication. When a value of the bits is one or more of 0001 to 1111, it represents that the bits indicate the transmission mode information (the information B1) of the first message.

The transmission mode information (the information B1) of the first message may indicate the following content B1.1.

Content B1.1: The first message includes a sidelink positioning reference signal.

The content B1.1 may also be understood that the sidelink control information is used to schedule a sidelink positioning reference signal.

In this embodiment of this application, a plurality of pieces of content indicated by one piece of information may be indicated by using the one piece of information, or may be indicated by using a plurality of pieces of information. For example, the transmission mode information of the first message may further indicate the following content B1.2 or content B1.3. In this embodiment of this application, the transmission mode information of the first message may indicate a plurality of pieces of content by using one piece of information. For example, the content B1.1 and the content B1.2 may be indicated by using one piece of information, or the content B1.1 and the content B1.3 may be indicated by using one piece of information. Alternatively, the transmission mode information of the first message may indicate a plurality of pieces of content by using a plurality of pieces of information.

Content B1.2: The sidelink control information includes first-stage SCI (in other words, the sidelink control information includes first-stage SCI, and does not include second-stage SCI).

Content B1.3: The sidelink control information includes first-stage SCI and second-stage SCI.

The transmission mode information of the first message may further indicate the following content B1.3.1 or content B1.3.2.

Content B1.3.1: A PSSCH used to carry the second-stage SCI does not include data.

The transmission mode information of the first message may further indicate the following content B1.3.1.1.

Content B1.3.1.1: The SL-PRS and the PSSCH may not are multiplexed in a slot.

The PSSCH may carry the second-stage SCI in the sidelink control information. In a possible implementation, when the PSSCH does not include data, the SL-PRS and the PSSCH may not are multiplexed in a slot.

Content B1.3.2: The PSSCH includes data.

The PSSCH may carry the second-stage SCI in the sidelink control information.

The transmission mode information of the first message may further indicate one of the following content B1.3.2.1, content B1.3.2.2, or content B1.3.2.3.

Content B1.3.2.1: The first message (or the SL-PRS) and the PSSCH are multiplexed in a slot.

The PSSCH includes data.

In this embodiment of this application, that the first message and the PSSCH are multiplexed in a slot may also be understood as one or more of the following content:
the first message is located in the PSSCH, a time domain resource occupied by the data in the PSSCH overlaps the time domain resource occupied by the first message, and the first message and the data in the PSSCH undergo frequency division multiplexing in a slot;
the first message is sent in the PSSCH;
the first message and the PSSCH used to carry the data are multiplexed in a slot;
the first message is sent in all or a part of subchannels of the PSSCH;
a time domain symbol on which the first message is located is the same as a time domain symbol on which the PSSCH is located, and the first message occupies a part of subcarriers or REs in the time domain symbol; or
no PSSCH is transmitted on the time domain symbol on which the first message is located, and the time domain symbol on which the first message is located is in the middle of the time domain symbol occupied by the PSSCH.

Content B1.3.2.2: The first message (or the SL-PRS) and the PSSCH are not multiplexed in a slot.

The PSSCH includes data.

That the first message and the PSSCH used to carry the data are not multiplexed in a slot in this embodiment of this application may also be understood as one of the following content:
the first message is located in the PSSCH, the time domain resource occupied by the data in the PSSCH does not overlap the time domain resource occupied by the first message, and the first message and the data in the PSSCH occupy different time domain symbols in a slot;
the first message is not sent in the PSSCH;
the first message and the PSSCH used to carry the data are not multiplexed in a slot;
no PSSCH is transmitted in a slot in which the first message is located;
the time domain symbol on which the first message is located is different from the time domain symbol occupied by the PSSCH; or
the time domain symbol on which the first message is located is different from the time domain symbol occupied by the PSSCH, and the time domain symbol on which the first message is located is not in the middle of the symbol on which the PSSCH is located.

Content B1.3.2.3: The SL-PRS and the PSSCH used to carry data are multiplexed or not multiplexed in a slot.

In this case, the first terminal apparatus may flexibly select, based on the transmission mode information of the first message, whether the SL-PRS and the PSSCH are multiplexed or not multiplexed in a slot, for example, may flexibly select, based on some configured or preset conditions, whether the SL-PRS and the PSSCH are multiplexed or not multiplexed in a slot.

The transmission mode information of the first message may indicate one or more of the content B1.1, the content B1.2, the content B1.3, the content B1.3.1, the content B1.3.1.1, the content B1.3.2, the content B1.3.2.1, the content B1.3.2.2, or the content B1.3.2.3, for example, may indicate the content B1.1 and the content B1.2, or for another example, may indicate any one or more of the content B1.1, the content B1.3, and the content B1.3.1 (or the content B1.3.1.1), or for another example, may indicate any one or more of the content B1.1, the content B1.3, the content B1.3.2, and the content B1.3.2.1 (the content B1.3.2.1 may be replaced with the content B1.3.2.2 or the content B1.3.2.3).

The transmission mode information (the information B1) of the first message may indicate a transmission mode of the first message, so that the fourth terminal apparatus may receive the sidelink control information and the first message based on the learned transmission mode of the first message, thereby improving a success rate of correctly receiving the sidelink control information and the first message by the fourth terminal apparatus.

Information B2: Second-stage SCI format information whose value is 11.

As defined in 3GPP 38.212, when a value of second-stage SCI format information (2^{nd}-stage SCI format) is 00, it represents that a format of second-stage SCI is an SCI format 2-A; when the value of the second-stage SCI format information is 01, it represents that the format of the second-stage SCI is an SCI format 2-B; when the value of the second-stage SCI format information is 10, it represents that the format of the second-stage SCI is an SCI format 2-C; and when the value of the second-stage SCI format information is 11, it represents a reserved value.

Based on this, in this embodiment of this application, the second-stage SCI format information whose value is 11 may be used. For example, a meaning of the second-stage SCI format information whose value is 11 may be configured by the network apparatus or preconfigured, and then the new terminal apparatus understands the newly defined meaning,
In a possible implementation, the second-stage SCI format information whose value is 11 may indicate one or more of the content B1.1, the content B1.2, the content B1.3, the content B1.3.1.1, the content B1.3.2, the content B1.3.2.1, the content B1.3.2.2, or the content B1.3.2.3, for example, may indicate the content B1.1 and the content B1.2, or for another example, may indicate any one or more of the content B1.1, the content B1.3, and the content B1.3.1 (or the content B1.3.1.1), or for another example, may indicate any one or more of the content B1.1, the content B1.3, the content B1.3.2, and the content B1.3.2.1 (the content B1.3.2.1 may be replaced with the content B1.3.2.2 or the content B1.3.2.3).

In another possible implementation, the second-stage SCI format information whose value is 11 and the transmission mode information (the information B1) of the first message may jointly indicate some content. For example, the two pieces of information may indicate one or more of the content B1.1, the content B1.2, the content B1.3, the content B1.3.1.1, the content B1.3.2, the content B1.3.2.1, the content B1.3.2.2, or the content B1.3.2.3, for example, may indicate the content B1.1 and the content B1.2, or for another example, may indicate any one or more of the content B1.1, the content B1.3, and the content B1.3.1 (or the content B1.3.1.1), or for another example, may indicate any one or more of the content B1.1, the content B1.3, the content B1.3.2, and the content B1.3.2.1 (the content B1.3.2.1 may be replaced with the content B1.3.2.2 or the content B1.3.2.3).

The second-stage SCI format information whose value is 11 may indicate that there is no second-stage SCI, or indicate that the sidelink control information includes second-stage SCI, and the second-stage SCI is in a newly defined format. For example, the format is named an SCI format 2-D.

When identifying that the value of the second-stage SCI format information is 11, the legacy terminal apparatus may understand, according to a legacy protocol, that the second-stage SCI format information carries a reserved value, and therefore may determine that the second-stage SCI does not need to be decoded; or may consider that the indicated second-stage SCI is defined for a new version protocol, and therefore the second-stage SCI does not need to be parsed; or may determine that there is no second-stage SCI, thereby reducing a probability of a decoding error of the second-stage SCI. After identifying the second-stage SCI format information, the new terminal apparatus may understand a meaning of the second-stage SCI format information based on newly defined content. For example, the value of the second-stage SCI format information being 11 indicates that a format of the second-stage SCI is the SCI format 2-D, and then the new terminal apparatus decodes the second-stage SCI based on the newly defined SCI format 2-D, thereby increasing a probability of a decoding success.

### Information B3: Transmission parameter of the first message.

The transmission parameter of the first message is used by a receive end to receive the first message. For example, the transmission parameter of the first message may include related information of one or more of the frequency domain resource, the time domain resource, a source identifier, a destination identifier, or a start and/or end time domain symbol. For example, the transmission parameter of the first message may include one or more of information B3.1, information B3.2, information B3.3, information B3.4, or information B3.5.

### Information B3.1: Indication information of the frequency domain resource of the first message.

In a possible implementation, the indication information of the frequency domain resource of the first message may indicate a difference between the lowest frequency domain location of the first message and the lowest frequency domain location of the frequency domain resource occupied by the PSCCH carrying the first-stage SCI in the sidelink control information.

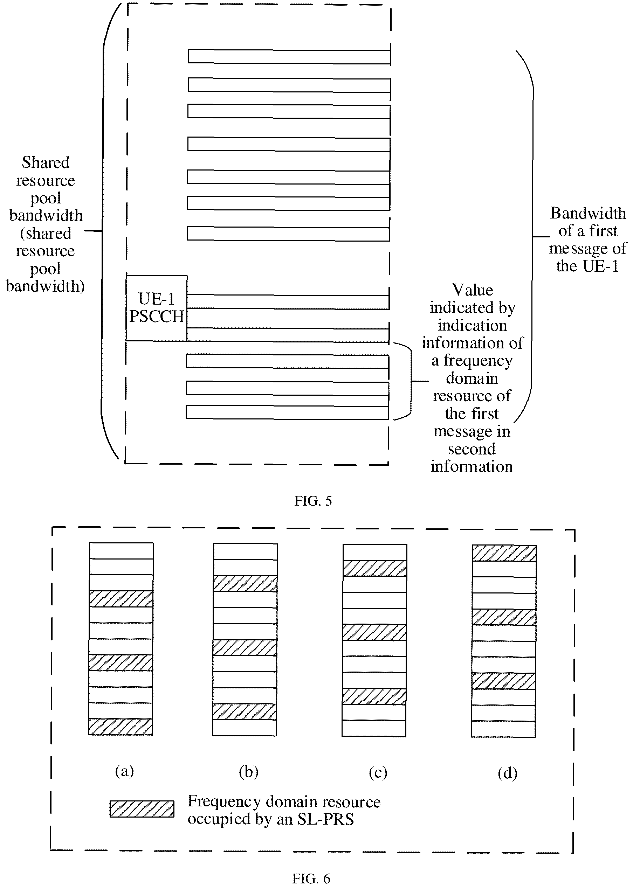

FIG. 5 is an example diagram of possible distribution structures of frequency domain resources of a PSCCH and a first message of a UE-1 according to an embodiment of this application. As shown in FIG. 5, time domain resources occupied by the PSCCH and the first message of the UE-1 do not overlap. A lowest frequency domain location of the PSCCH of the UE-1 may or may not be equal to a lowest frequency domain location of the first message. FIG. 5 shows an example in which the lowest frequency domain location of the PSCCH of the UE-1 is not equal to the lowest frequency domain location of the first message. FIG. 5 shows an example of the difference indicated by the indication information of the frequency domain resource of the first message, that is, the difference between the lowest frequency domain location of the PSCCH and the lowest frequency domain location of the first message.

It can be learned that the first information also includes indication information (the information A2) of the frequency domain resource of the first message, and the information in combination with the indication information (the information B3.1) of the frequency domain resource of the first message in the second information can more accurately indicate the frequency domain resource and/or the bandwidth occupied by the first message.

Because the second information may also include indication information of a frequency domain resource of the first message, the solution provided in this application allows the lowest frequency domain locations of the PSCCH and the first message not to be aligned. When the two are not aligned, a receive end (for example, the fourth terminal apparatus) may determine, with reference to the indication information (the information A2) of the frequency domain resource in the first information and the indication information (the information B3.1) of the frequency domain resource in the second information, the frequency domain resource and/or the bandwidth occupied by the first message. The new terminal apparatus may obtain, through indication by the indication information of the frequency domain resource in the second information, information about all frequency domain resources occupied by the first message. Because this solution allows the lowest frequency domain locations of the PSCCH and the first message not to be aligned, solution flexibility can be improved.

The first message may occupy all resources in the bandwidth of the first message, or may occupy a part of resources, for example, may occupy a frequency domain resource based on a comb structure. In this case, the indication information (the information B3.1) of the frequency domain resource of the first message may further indicate a frequency domain offset value of the sidelink positioning reference signal within a frequency domain transmission interval. Alternatively, it is understood that the indication information (the information B3.1) of the frequency domain resource of the first message may further indicate a frequency domain location occupied by the first message in the comb.

In this embodiment of this application, a Comb-N is as follows: Optionally, for the Comb-N, the SL-PRS appears at an interval of N REs in frequency domain, and is not transmitted on remaining N-1 REs. Optionally, a maximum of floor(10 log₁₀ *N*) bits are required to indicate which RE in the Comb-N is occupied, where floor(x) represents rounding down x. Optionally, in the present invention, a frequency domain transmission mode of the Comb-N may also be referred to as a comb or a comb structure. FIG. 6 is an example diagram of four possible structures of a frequency domain resource of an SL-PRS in a Comb-4. The indication information of the frequency domain resource of the first message may indicate, by using several bits (for example, 2 bits), a comb structure used by the first terminal apparatus, for example, indicate which one of a comb structure (a), a comb structure (b), a comb structure (c), or a comb structure (d) in FIG. 6 is used by the first terminal apparatus for transmission. For example, in (a) in FIG. 6, the SL-PRS is sent on the first RE of the Comb-4, and remaining three REs are vacant and not used for transmission. Then, REs that can be used to send the SL-PRS appear at an equal interval of 4 in frequency domain. Meanings of other structures in FIG. 6 are similar to thereto, and details are not described again.

In a possible implementation, the indication information (the information B3.1) of the frequency domain resource of the first message may occupy 4 to 6 bits.

In another possible implementation, the indication information (the information B3.1) of the frequency domain resource of the first message may alternatively not indicate the difference between the lowest frequency domain location of the first message and the lowest frequency domain location of the frequency domain resource occupied by the PSCCH carrying the first-stage SCI in the sidelink control information. For example, the lowest frequency domain locations of the PSCCH and the first message are aligned. In another possible implementation, the indication information (the information B3.1) of the frequency domain resource of the first message may alternatively indicate the difference between the lowest frequency domain location of the first message and the lowest frequency domain location of the frequency domain resource occupied by the PSCCH carrying the first-stage SCI in the sidelink control information, and the frequency domain offset value of the sidelink positioning reference signal within the frequency domain transmission interval.

### Information B3.2: Indication information of the time domain resource of the first message.

The indication information of the time domain resource of the first message may indicate a slot in which a retransmission resource of the first message is located.

### Information B3.3: Indication information of a source identifier of the first message.

The source identifier may be understood as an identifier of an apparatus sending the first message, for example, an identifier of the first terminal apparatus, or may be an identifier of a sending apparatus corresponding to the first message, or may be an identifier of a message source of the first message. The source identifier may be related to a service of a to-be-transmitted message, and different services may have different source identifiers.

### Information B3.4: Indication information of a destination identifier of the first message.

The destination identifier may be understood as an identifier of an apparatus that needs to receive the first message, for example, an identifier of the fourth terminal apparatus, or may be an identifier of a receiving apparatus corresponding to the first message, or an identifier of a destination device of the first message. Optionally, the destination identifier is related to a service of a to-be-received message, and different services may have destination identifiers.

### Information B3.5: Indication information of a start and/or end time domain symbol of the first message.

The indication information of the start and/or end time domain symbol of the first message indicates a location of a start (or begin) symbol and/or an end symbol of the SL-PRS in one slot.

In step 302, the first terminal apparatus may select available subchannels in a resource pool (which may also be referred to as a shared resource pool, and may be understood as a resource pool that can be shared by legacy terminal apparatuses and new terminal apparatuses) through sensing (sensing), and further select available resources (for example, resources in a Comb-N (that is, frequency domain resources that can be used by the SL-PRS in a comb structure)) in these subchannels. In another possible implementation, the network apparatus (for example, an access network device or a positioning management apparatus) configures, for the first terminal apparatus, a resource used to send the sidelink control information and the first message. For example, the network apparatus selects a resource from the shared resource pool, and indicates the resource to the first terminal apparatus, so that the first terminal apparatus sends the sidelink control information and the first message by using the resource. In an actual implementation process, the first terminal apparatus may alternatively select a resource in another manner. This is not limited in this embodiment of this application.

Step 303: The second terminal apparatus performs resource selection based on the received sidelink control information and first message.

In this embodiment of this application, the sidelink control information and the first message that are sent by the first terminal apparatus may be received by one or more apparatuses. In this embodiment of this application, an example in which the second terminal apparatus and the fourth terminal apparatus receive the sidelink control information and the first message is used for description. The first terminal apparatus and the fourth terminal apparatus may be understood as new terminal apparatuses (for example, supporting 3GPP Rel-18), and the second terminal apparatus may be understood as a legacy terminal apparatus (for example, not supporting 3GPP Rel-18).

The second terminal apparatus performs resource selection based on the first information in the sidelink control information and the first message. For example, the second terminal apparatus may determine resource information of the first message based on the first information, and then perform resource selection based on sensing measurement. For related content, refer to the foregoing descriptions about sensing. Details are not described again.

In step 303, the second terminal apparatus may further determine, based on the transmission mode information in the second information, not to process the second information. For example, the transmission mode information of the first message may be carried by a part of or all bits in the reserved field in the first-stage SCI in the sidelink control information. After identifying information of the part of bits, the second terminal apparatus (legacy terminal apparatus) may consider that the information is information indicating that the legacy terminal apparatus does not need to decode the second information, and then does not decode the second information, thereby reducing a probability of a decoding error.

In another possible implementation, the second information further includes a non-zero value indicated in a reserved field. The reserved field may be included in the first-stage SCI. Information carried in the reserved field indicates a non-zero value, and the information carried in the reserved field is, for example, 1, 10, 01, 110, 1111, or 1000.

For example, the second terminal apparatus may determine, based on the second-stage SCI format information whose value is 11 and/or the non-zero value of the reserved field, that the sidelink control information does not include second-stage SCI. For another example, the second terminal apparatus determines, based on the second-stage SCI format information whose value is 11 and/or the non-zero value of the reserved field, that the sidelink control information includes second-stage SCI, but the second terminal apparatus does not process the second-stage SCI. For another example, the second terminal apparatus determines, based on the second-stage SCI format information whose value is 11 and/or the non-zero value of the reserved field, that the sidelink control information includes second-stage SCI, but does not process the first message. For another example, the second terminal apparatus determines, based on the second-stage SCI format information whose value is 11 and/or the non-zero value of the reserved field, not to process the first message. In this way, a probability of a second-stage SCI decoding error can be reduced.

In a possible implementation, the second-stage SCI format information whose value is 11 may indicate that there is no second-stage SCI, or the second-stage SCI is newly defined second-stage SCI, and the legacy terminal apparatus does not need to process the second-stage SCI. Based on this, the second terminal apparatus may determine that the second-stage SCI does not need to be processed. The non-zero value of the reserved field may indicate the second terminal apparatus not to process the first message. The second terminal apparatus determines, based on the non-zero value indicated in the reserved field, not to process the first message. Generally, a bit in the reserved field may be reserved for a future protocol to carry information. For the second terminal apparatus supporting a legacy protocol, information of the reserved bit may not need to be processed. Alternatively, if the second terminal apparatus identifies that the reserved bit carries a non-zero value, the second terminal apparatus may consider that the value carried by the reserved bit is subject to identification of a new terminal apparatus supporting a new protocol, and the second terminal apparatus may determine, based on this, that the first message does not need to be processed. In this way, a probability of a second-stage SCI decoding error can be reduced.

It can be learned that, in this solution, the second terminal apparatus (legacy terminal apparatus) may normally receive and detect the sidelink control information and the first message according to a supported protocol (legacy protocol) without additional processing, thereby reducing a probability of a decoding error. It can be learned that, in this solution, the sidelink control information and the sidelink positioning reference signal that are sent by the first terminal apparatus have little impact on the legacy terminal apparatus, and therefore are backward compatible.

Step 304: The fourth terminal apparatus performs measurement on the SL-PRS in the first message based on the received sidelink control information to obtain a measurement result.

In step 304, the fourth terminal apparatus may perform measurement on the SL-PRS based on the second information (or based on the first information and the second information), and an obtained measurement result may be used for positioning the second terminal apparatus and/or the fourth terminal apparatus. For example, the fourth terminal apparatus may determine a complete frequency domain resource of the SL-PRS in the first message based on the first information and the second information, and determine a time domain resource of the SL-PRS based on the second information, and then perform measurement on the SL-PRS on corresponding resources.

In step 304, the fourth terminal apparatus may also perform resource selection based on the first information and the first message. In this way, the first information is applicable to resource selection of the legacy terminal apparatus and the new terminal apparatus, so that the sidelink control information can be compatible.

It can be learned from the foregoing content that, because the sidelink control information includes the first information and the second information, the second terminal apparatus (legacy terminal apparatus) may perform resource selection based on the first information in the sidelink control information, and the fourth terminal apparatus (new terminal apparatus) may perform measurement on the SL-PRS in the first message based on the second information (or the first information and the second information) in the sidelink control information. A measurement result may be used for positioning. It can be learned that the sidelink control information and the first message that are sent by the first terminal apparatus can be backward compatible.

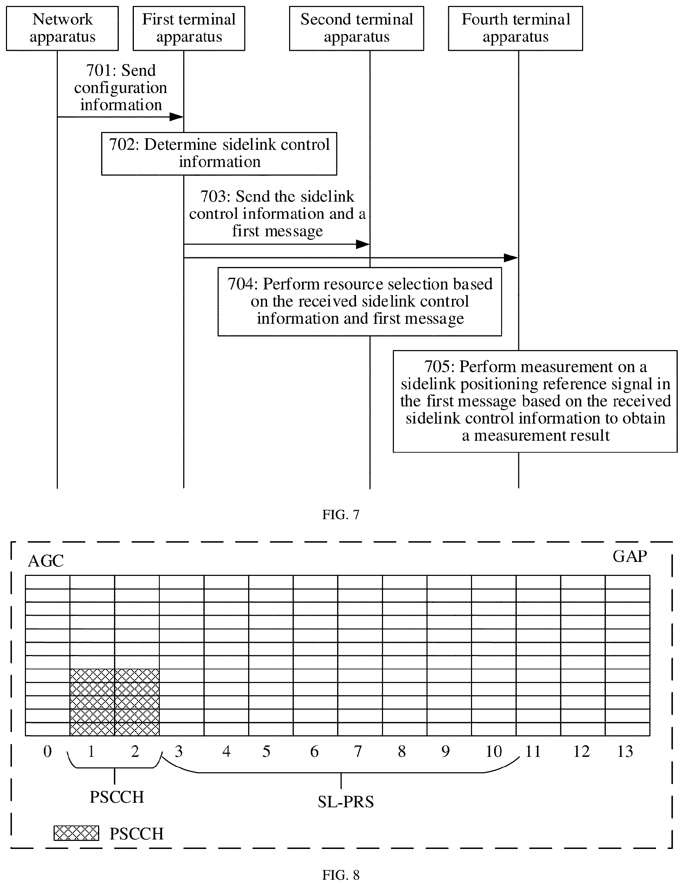

Based on the content shown in FIG. 1, FIG. 2, FIG. 3, FIG. 4, FIG. 5, and FIG. 6 and the foregoing other content, FIG. 7 is an example of a schematic flowchart of another communication method according to an embodiment of this application. The solution provided in FIG. 7 is described from a perspective of interaction between a plurality of apparatuses. A network apparatus in this embodiment of this application may be the gNB or the LMF in FIG. 2 or a chip inside the gNB or the LMF, the access network device in FIG. 1 or a chip in the access network device, or a positioning management device or a chip inside the positioning management device. For related descriptions of a first terminal apparatus, a second terminal apparatus, a third terminal apparatus, and a fourth terminal apparatus in FIG. 7, refer to the related descriptions in FIG. 3. Details are not described again.

As shown in FIG. 7, the method includes the following steps.

Step 701: A network apparatus sends configuration information.

Correspondingly, a first terminal apparatus receives the configuration information.

A second terminal apparatus and a fourth terminal apparatus may also receive the configuration information.

In this embodiment of this application, the configuration information may include a plurality of types of information, for example, may include the transmission mode information of the first message, or may further indicate some other content. For example, the configuration information may include one or more of the following information C1, information C2 (or content C2.1, information C3, or content C3.1), information C4, or information C5. In this embodiment of this application, the information C1, the information C2 (or the content C2.1, the information C3, or the content C3.1), the information C4, or the information C5 may be configured by using one piece of configuration information, or may be separately configured by using a plurality of pieces of configuration information. In this embodiment of this application, an example in which the information may be configured by using one piece of configuration information is used for description.

### Information C1: Information indicating a transmission mode of the first message.

In a possible implementation, the transmission mode of the first message that is indicated by the transmission mode information (the information B1) of the first message in the second information is the transmission mode of the first message that is indicated (or allowed) by the configuration information. This can help the network apparatus to manage a transmission mode of the first terminal apparatus, thereby achieving a good balance between a positioning service of positioning a terminal and impact on a communication service of the legacy terminal apparatus.

Content of the information C1 may be the same as or different from that of the transmission mode information (the information B1) of the first message in the second information. In a possible implementation, the information C1 may be the transmission mode information (the information B1) of the first message in the second information, which may also be understood as that the configuration information includes the transmission mode information (the information B1) of the first message in the second information.

Alternatively, that the configuration information includes information indicating a transmission mode of the first message may be understood as that the network apparatus may configure a transmission mode of sidelink control information and the first message (or SL-PRS) for the first terminal apparatus, so that the first terminal apparatus may send the sidelink control information and the first message (or SL-PRS) in the transmission mode configured by the network apparatus.

The information (information C1) that is included in the configuration information and that indicates the transmission mode of the first message may indicate one or more of the content B1.1, the content B1.2, the content B1.3, the content B1.3.1.1, the content B1.3.2, the content B1.3.2.1, the content B1.3.2.2, or the content B1.3.2.3, for example, may indicate the content B1.1 and the content B1.2, or for another example, may indicate any one or more of the content B1.1, the content B1.3, and the content B1.3.1 (or the content B1.3.1.1), or for another example, may indicate any one or more of the content B1.1, the content B1.3, the content B1.3.2, and the content B1.3.2.1 (the content B1.3.2.1 may be replaced with the content B1.3.2.2 or the content B1.3.2.3). For related content, refer to the foregoing descriptions. Details are not described again.

Information C2: Information indicating that the first message and a PSSCH are not multiplexed in a slot.

If the configuration information indicates that the first message and the PSSCH are not multiplexed in a slot, the first terminal apparatus is not allowed to send the first message in the PSSCH. For example, the first terminal apparatus may send the first message outside the PSSCH.

That the first terminal apparatus sends the first message outside the PSSCH may also be understood as that the first terminal apparatus separately sends the first message, or sends the first message and the PSSCH through time division multiplexing, which may also be understood as that a time domain resource for sending the first message does not overlap a time domain resource for sending the PSSCH, or may be understood as that the first message is not embedded in the PSSCH for sending. In a possible implementation, in this embodiment of this application, time division multiplexing of two pieces of information (for example, the first message and the PSSCH) may be understood as that time domain resources of the two pieces of information do not overlap, and frequency domain resources of the two pieces of information overlap.

In a possible implementation, the configuration information may further indicate the following content C2.1:

Content C2.1: When a first preset condition is met, the first message and the PSSCH are allowed not to be multiplexed in a slot.

The first preset condition includes one or more of the following condition C2.1.1, condition C2.1.2, or condition C2.1.3.

Condition C2.1.1: A priority of the first message is higher than a preset first priority.

The first priority may be preconfigured, or sent by the network apparatus to the first terminal apparatus, or a priority of information carried in the PSSCH. When the priority of the first message is higher than the preset first priority, because the priority of the first message is high, the first terminal apparatus may find a resource outside the PSSCH to separately send the first message, so that little interference is caused to the first message, and an apparatus that needs to measure the SL-PRS in the first message obtains a good measurement result, thereby improving positioning precision.

Condition C2.1.2: A CBR of a resource pool of a resource used by the first message is less than a preset first CBR threshold.

When the CBR of the resource pool is lower than the first CBR threshold, a congestion degree of the resource pool is low, that is, a small number of resources are occupied, and a large number of resources are available. In this case, the first message may be separately sent, that is, the first message does not need to be sent in the PSSCH, so that impact on the data sent in the PSSCH can be reduced.

Condition C2.1.3: The CBR of the resource pool of the resource used by the first message is lower than a second CBR threshold associated with the priority of the first message.

In a possible implementation, different CBR threshold ranges (or thresholds) may be set for different priorities. For example, a higher priority has a higher CBR threshold range (or threshold), and a lower priority has a lower CBR threshold range (or threshold). Alternatively, a higher priority has a lower CBR threshold range (or threshold), and a lower priority has a higher CBR threshold range (or threshold). Alternatively, some priority ranges may be set. A priority range includes one or more priorities. One priority range may correspond to one CBR threshold range (or threshold), and two CBR threshold ranges (or thresholds) corresponding to two priority ranges are different.

Because a CBR threshold may be set based on a priority of a message, a transmission mode of a message of each priority can be more flexibly controlled.

For example, if the priority is positively correlated with the CBR threshold, a first message with a higher priority has a higher second CBR threshold, and a first message with a lower priority has a lower second CBR threshold. Because the second CBR threshold configured for the first message with the higher priority is higher, a probability that the first message with the higher priority meets the first preset condition is also higher, and then a probability that the first message is separately sent (not sent in a PSSCH) is also higher. In this case, a transmit end may separately send the first message at a higher probability, that is, does not need to send the first message in a PSSCH, thereby improving positioning performance. Because the second CBR threshold configured for the first message with the lower priority is lower, a probability that the first message with the lower priority meets the first preset condition is also lower, and then a probability that the first message is sent outside the PSSCH is also lower. In this case, a transmit end may separately send the first message at a lower probability, that is, sends the first message in a PSSCH, so that impact on communication performance of a legacy UE in the resource pool can be reduced.

For example, if the priority is negatively correlated with the CBR threshold, a first message with a higher priority has a lower second CBR threshold, and a first message with a lower priority has a higher second CBR threshold. Because the second CBR threshold configured for the first message with the higher priority is lower, a probability that the first message with the higher priority meets the first preset condition is also lower, and then a probability that the first message is not sent in a PSSCH is also lower. In this case, a transmit end may separately send the first message at a lower probability, that is, sends the first message in a PSSCH at a higher probability, so that resource occupation can be reduced. Because the second CBR threshold configured for the first message with the lower priority is probably higher, a probability that the first message with the lower priority meets the first preset condition is also higher, and then a probability that the first message is not sent in a PSSCH is also higher. In this case, a transmit end may separately send the first message at a higher probability, that is, sends the first message outside a PSSCH at a higher probability, thereby reducing impact on data sent in the PSSCH and improving positioning performance.

In this embodiment of this application, the foregoing several first preset conditions may alternatively be used in combination. When the first preset condition includes a combination of the foregoing several conditions, the first terminal apparatus can determine that the first preset condition is met only when all combined conditions are met. For example, the first preset condition includes: the priority of the first message is higher than the preset first priority, and the CBR of the resource pool of the resource used by the first message is lower than the preset first CBR threshold.

Information C3: Information indicating that the first message and the PSSCH are multiplexed in a slot.

If the configuration information indicates that the first message and the PSSCH are multiplexed in a slot, the first terminal apparatus may send the first message in the PSSCH. For example, the first terminal apparatus embeds the first message into the PSSCH for sending. Alternatively, it may be understood that the time domain resource of the first message overlaps the time domain resource of the PSSCH.

In a possible implementation, the configuration information may further indicate the following content C3.1:

Content C3.1: When a second preset condition is met, the first message and the PSSCH are allowed to be multiplexed in a slot.

The second preset condition includes one or more of the following condition C3.1.1, condition C3.1.2, condition C3.1.3, or condition C3.1.4.

Condition C3.1.1: The priority of the first message is lower than a preset second priority.

The second priority may be preconfigured, or sent by the network apparatus to the first terminal apparatus, or the priority of the information carried in the PSSCH. When the priority of the first message is lower than the preset second priority, because the priority of the first message is low, the first terminal apparatus may send the first message in the PSSCH, that is, no resource needs to be separately selected for the first message, so that the first message can occupy fewer resources in the resource pool, and impact of the first message on other data transmission can be reduced.

Condition C3.1.2: The priority of the first message is higher than a preset third priority.

The third priority may be preconfigured, or may be sent by the network apparatus to the first terminal apparatus. When the priority of the first message is higher than the preset third priority, because the priority of the first message is high, the first terminal apparatus may send the first message in the PSSCH, that is, no resource needs to be separately selected for the first message, so that the first message can occupy fewer resources in the resource pool, and impact of the first message on other data transmission can be reduced.

In this embodiment of this application, any two of the first priority, the second priority, and the third priority may be the same, or may be different. For example, the second priority may be higher than the third priority, or the second priority is lower than the third priority, or the second priority is equal to the third priority.

Condition C3.1.3: The CBR of the resource pool of the resource used by the first message is lower than a preset third CBR threshold.

When the CBR of the resource pool is lower than the third CBR threshold, a congestion degree of the resource pool is low, and the first message is sent in the PSSCH. In this way, little impact is caused to the PSSCH, and no resource needs to be separately selected for the first message, so that the first message can occupy fewer resources in the resource pool.

Condition C3.1.4: The CBR of the resource pool of the resource used by the first message is lower than a fourth CBR threshold associated with the priority of the first message.

In a possible implementation, different CBR thresholds may be set for different priorities. For example, a higher priority has a higher CBR threshold, and a lower priority has a lower CBR threshold. Alternatively, a higher priority has a lower CBR threshold, and a lower priority has a higher CBR threshold. Alternatively, some priority ranges may be set. A priority range includes one or more priorities. One priority range may correspond to one CBR threshold, and two CBR thresholds corresponding to two priority ranges are different.

Because a CBR threshold may be set based on a priority of a message, a transmission mode of a message of each priority can be more flexibly controlled.

For example, if the priority is positively correlated with the CBR threshold, a first message with a higher priority has a higher fourth CBR threshold, and a first message with a lower priority has a lower fourth CBR threshold. Because a probability that the first message with the higher priority is lower than the fourth CBR threshold is higher, a probability that the first message with the higher priority meets the second preset condition is also higher, and then a probability that the first message is sent in the PSSCH is also higher, so that resource occupation can be reduced. Because a probability that the first message with the lower priority is lower than the fourth CBR threshold is higher, a probability that the first message with the lower priority meets the second preset condition is also higher, and then a probability that the first message is sent in the PSSCH is also higher, so that resource occupation can be reduced.

For example, if the priority is negatively correlated with the CBR threshold, a first message with a higher priority has a lower fourth CBR threshold, and a first message with a lower priority has a higher fourth CBR threshold. Because a probability that the first message with the higher priority is lower than the fourth CBR threshold is lower, a probability that the first message with the higher priority meets the second preset condition is also lower, and then a probability that the first message is sent in the PSSCH is also lower. In this case, a transmit end may separately send the first message at a higher probability, that is, sends the first message outside the PSSCH at a higher probability, thereby reducing impact on data sent in the PSSCH and improving positioning performance. Because a probability that the first message with the lower priority is lower than the fourth CBR threshold is higher, a probability that the first message with the lower priority meets the second preset condition is also higher, and then a probability that the first message is sent in the PSSCH is also higher, so that resource occupation can be reduced.

In this embodiment of this application, any two of the first CBR threshold, the second CBR threshold, the third CBR threshold, or the fourth CBR threshold may be the same or different.

Information C4: Information indicating to perform RSRP measurement on a PSCCH carrying first-stage SCI in the SCI.

When the configuration information includes the information C4, it means that a receive end (for example, the second terminal apparatus or the fourth terminal apparatus) is allowed to perform RSRP measurement on the PSCCH in the resource pool.

In a possible implementation, when the configuration information includes the information C4, it means that the receive end (for example, the second terminal apparatus or the fourth terminal apparatus) is allowed to perform only (only) reference signal received power (reference signal received power, RSRP) measurement on the PSCCH in the resource pool. Alternatively, it may be understood that only PSCCH-RSRP measurement may be performed in the resource pool (Only PSCCH-RSRP is allowed in the resource pool). It can be learned that, in this solution, a measurement parameter of the terminal apparatus may be indicated by using signaling configured or preconfigured by the network apparatus, thereby achieving alignment with behavior of the legacy terminal apparatus, and reducing impact on measurement of the legacy UE.

Information C5: Information indicating the number of symbols occupied by the PSSCH carrying second-stage SCI in the SCI.

When the configuration information includes the information C5, the first terminal apparatus may send the PSSCH based on the number, configured in the configuration information, of symbols occupied by the PSSCH. It can be learned that, in this solution, the network apparatus may configure the number of symbols occupied by the PSSCH, so that a capability of the network apparatus to manage and control a resource used by the terminal apparatus can be improved, thereby improving performance of an entire system.

Step 702: The first terminal apparatus determines sidelink control information.

The first terminal apparatus may send the SCI and the first message based on the configuration information sent by the network apparatus. For example, the first terminal apparatus may send the SL-PRS in a configured manner when a condition (for example, the first preset condition or the second preset condition) set in the configuration information is met.

For step 702, refer to related content of step 301. Details are not described again.

Step 703: The first terminal apparatus sends the sidelink control information and the first message.

For step 703, refer to related content of step 302. Details are not described again.

Step 704: The second terminal apparatus performs resource selection based on the received sidelink control information and first message.

For step 704, refer to related content of step 303. Details are not described again.

Step 705: The fourth terminal apparatus performs measurement on the SL-PRS in the first message based on the received sidelink control information to obtain a measurement result.

For step 705, refer to related content of step 304. Details are not described again.

It can be learned from the solution shown in FIG. 7 that, in this implementation, the network apparatus may configure a transmission mode of the sidelink control information and the first message for the first terminal apparatus, so that the first terminal apparatus may transmit the sidelink control information and the first message in the configured transmission mode. This can help the network apparatus to manage a manner in which the first terminal apparatus sends the first message. In addition, the transmission mode may be set to maintain a good balance point between transmission performance of the SL-PRS and impact on the legacy terminal apparatus as far as possible. In addition, the fourth terminal apparatus may also receive the configuration information configured by the network apparatus, and then the fourth terminal apparatus needs to detect the SL-PRS in the shared resource pool only when the configuration information of the network apparatus indicates that the new terminal apparatus (for example, the first terminal apparatus) is allowed to send the SL-PRS. In this way, power consumption of the fourth terminal apparatus can be reduced.

In this embodiment of this application, the first terminal apparatus may send the sidelink control information and the first message in a plurality of implementations.

For example, the first information and the second information are included in the first-stage SCI. For another example, the first information is included in the first-stage SCI, and the second information is included in the second-stage SCI. For another example, the first information is included in the first-stage SCI, and the second information is included in the first-stage SCI and the second-stage SCI. For another example, the first information is included in the first-stage SCI, the second information is included in a MAC CE, and the MAC CE is carried in the PSSCH. For another example, the first information is included in the first-stage SCI, the second information is included in the second-stage SCI and a MAC CE, and the MAC CE is carried in the PSSCH. The following separately describes the implementations by using an implementation D1, an implementation D2, and an implementation D3.

In the implementation D1, the sidelink control information includes first-stage SCI, and does not include second-stage SCI. In the implementation D2, the sidelink control information includes first-stage SCI and second-stage SCI, and the PSSCH used to carry the second-stage SCI does not include data. In the implementation D3, the sidelink control information includes first-stage SCI and second-stage SCI, and the PSSCH used to carry the second-stage SCI includes data.

Implementation D1: The sidelink control information includes first-stage SCI, and does not include second-stage SCI.

In this embodiment of this application, the implementation D1 may be replaced with that the sidelink control information includes first-stage SCI.

In the implementation D1, the first information and the second information may be included in the first-stage SCI.

Table 2 shows a possible example in which the first information and the second information are located in the first-stage SCI. As shown in Table 2, the sidelink control information includes first-stage SCI, and the first-stage SCI includes a plurality of fields (or fields (fields) or the like). In this embodiment of this application, information carried in a message is not limited by the numbers of bits in Table 2. To be specific, for each row in Table 2, the number of bits in Table 2 is merely used as an example of the number of bits that may be occupied by corresponding information, and is not used as a definition or limitation. In other words, the number of bits occupied by the information may be the number of bits, or may be another number of bits. This is not limited in the present invention.

A location at which each piece of information in the first information shown in Table 2 is carried is the same as that in Table 1, and details are not described again. Because the location at which the first information is carried may be indicated in a manner that can be understood by the legacy terminal apparatus, the legacy terminal apparatus (for example, the second terminal apparatus) may parse and decode the first information, and then perform resource selection based on the first information and the first message.

As shown in Table 2, the first-stage SCI in Table 2 includes a second-stage SCI format information field and a reserved field. A value of the second-stage SCI format information field may be 11 (that is, the information B2 in the second information is carried). The reserved field (2 bits or 4 bits) may carry the transmission mode information (the information B1) of the first message. In the first-stage SCI, other than fields occupied by the first information, the second-stage SCI format information field, and the reserved field, all other fields may be used to carry information in the transmission parameter (the information B3) of the first message. For example, all or a part of a DMRS pattern field, a beta offset field, a number of DMRS port field, an MCS field, an additional MCS table field, and a PSFCH overhead field may be used to carry the information in the transmission parameter (the information B3) of the first message. Optionally, the numbers of bits in a second-to-last column in Table 2 are merely examples, and do not define or limit information indicated in the fields. Alternatively, in another embodiment, the numbers of bits in the second-to-last column in Table 2 may have other values.

**Table 2 Possible example in which the first information and the second information are located in the first-stage SCI**

| | | Fields (fields) | Number of bits (bits) | Carried information |
|---|---|---|---|---|
| Sidelink control | First-stage SCI | Priority (priority) | 3 | Indication information (information A1) of the priority of the first message |
| | | Frequency domain resource (frequency resource) | 4 to 6 | Indication information (information A2) of the frequency domain resource of the first message |
| | | Time domain resource (time resource) | 5 or 9 | Indication information (information A3) of the time domain resource of the first message |
| | | Reservation period (reservation period) | 4 | Indication information (information A4) of the reservation period of the first message |
| | | DMRS pattern (DMRS pattern) | 2 | Information in the transmission parameter (the information B3) of the first message |
| information | | Second-stage SCI format information (2^{nd}-stage SCI format) | 2 | Value 11 (the information B2) |
| | | Beta offset (beta offset) | 2 | Information in the transmission parameter (the information B3) of the first message |
| | | number of DMRS port (number of DMRS port) | 1 | |
| | | MCS | 5 | |
| | | Additional MCS table (additional MCS table) | 1 to 2 | |
| | | PSFCH overhead (PSFCH overhead) | 1 | |
| | | Reserved (reserved) | 1 to 4 | Transmission mode information (information B1) of the first message |

In a possible implementation, to be more compatible with an existing protocol in which the DMRS pattern field in the first-stage SCI occupies 2 bits as specified, if the first terminal apparatus needs to use the DMRS pattern field to carry information in the second information, in this embodiment of this application, 2 bits between the reservation period field for carrying the first information and the second-stage SCI format information field in the first-stage SCI may be used to carry information in the transmission parameter (the information B3) of the first message. In this way, the legacy terminal apparatus may identify that the value of the second-stage SCI format information field is 11, then may determine, based on the value, that the second-stage SCI is not in an SCI format (an SCI format 2-A, an SCI format 2-B, or an SCI format 2-C) that can be identified by the legacy terminal apparatus, and therefore may determine that the second-stage SCI does not need to be decoded, thereby reducing a probability of a decoding error.

In Table 2, the number of bits used to carry information in the transmission parameter (the information B3) of the first message is limited, which may carry a part of or all information of the transmission parameter of the first message, for example, may carry the indication information (the information B3.1) of the frequency domain resource of the first message, the indication information (the information B3.2) of the time domain resource of the first message, and the indication information (the information B3.5) of the start and/or end time domain symbol of the first message. If the number of bits in the first-stage SCI is insufficient, the first-stage SCI may not carry the indication information (the information B3.3) of the source identifier of the first message or the indication information (the information B3.4) of the destination identifier of the first message.

Table 2 is shown by using names of fields in first-stage SCI defined in a protocol supported by the legacy terminal apparatus as an example. In actual application, after a part of fields in the first-stage SCI are used to carry information in the second information, names of these fields may change. For example, new names may be defined for the DMRS pattern field, the beta offset field, the number of DMRS port field, the MCS field, the additional MCS table field, the PSFCH overhead field, and a bit that is in the reserved field and that is used to carry the transmission mode information of the first message. This is not limited in this embodiment of this application.

FIG. 8 is an example diagram of possible structures of sidelink control information and a first message that are sent by a first terminal apparatus according to an embodiment of this application. As shown in FIG. 8, the sidelink control information includes first-stage SCI, and does not include second-stage SCI. The first-stage SCI is carried in a PSCCH. The PSCCH and the first message (FIG. 8 shows an example in which the first message is an SL-PRS) may occupy different time domain symbols. The PSCCH occupies two time domain symbols (a time domain symbol 1 to a time domain symbol 2), and the SL-PRS occupies eight time domain symbols (a time domain symbol 3 to a time domain symbol 10). The SL-PRS may occupy all or a part of frequency domain resources on the eight time domain symbols. It can be learned from FIG. 8 that the slot includes time domain symbols occupied by automatic gain control (automatic gain control, AGC) and a gap (gap). GAP in the figure represents the time domain symbol occupied by the gap. The time domain symbol occupied by the gap may also be understood as a time domain symbol occupied by a guard period (guard period, GP) symbol (or referred to as a null symbol).

The first message may occupy all or a part of resources in a bandwidth of the first message. In this way, solution flexibility can be improved, and impact on a communication performance of the legacy terminal apparatus can be reduced.

The bandwidth of the first message may be different from a bandwidth of the PSCCH. For example, the first message has a larger bandwidth (or a larger number of PRBs or subchannels) than the PSCCH. In this way, an apparatus receiving the SL-PRS can obtain better positioning performance.

For example, the bandwidth of the first message is an integer multiple of the bandwidth of the PSCCH. For example, the bandwidth of the first message is twice or four times the bandwidth of the PSCCH. In this way, the first terminal apparatus may indicate the bandwidth of the first message by indicating the bandwidth of the PSCCH and the multiple, thereby reducing signaling overheads caused by indicating the bandwidth of the first message.

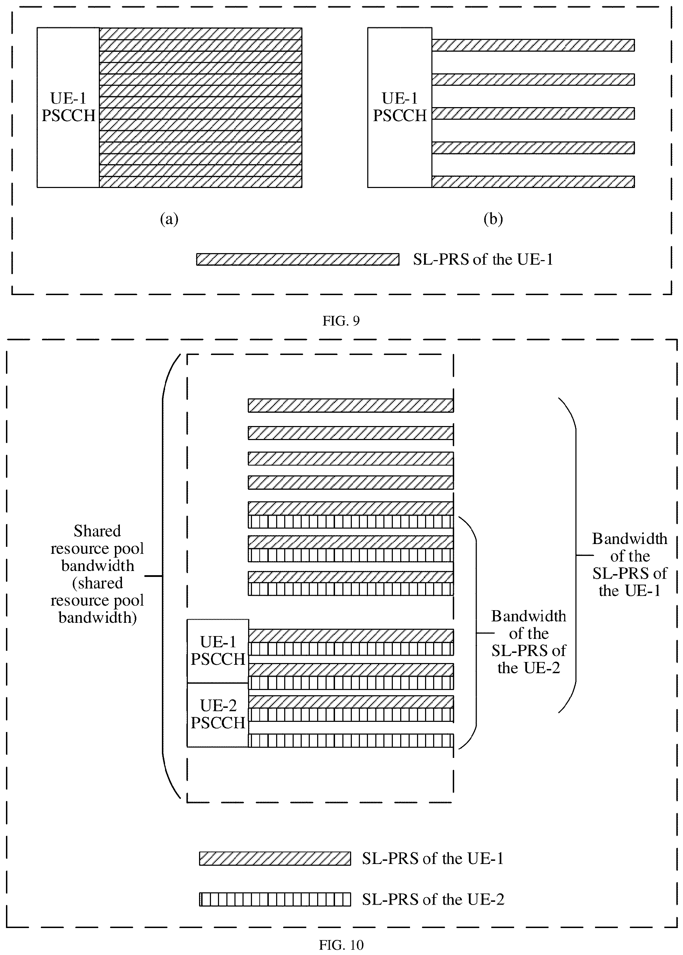

In another possible implementation, the bandwidth of the first message is the same as the bandwidth of the PSCCH used to transmit the first-stage SCI in the sidelink control information. FIG. 9 shows several possible examples in which a bandwidth of an SL-PRS is the same as a bandwidth of a PSCCH. As shown in (a) in FIG. 9, a bandwidth of an SL-PRS of a UE-1 is the same as a bandwidth of a PSCCH of the UE-1, and the SL-PRS occupies all frequency domain resources in the bandwidth. As shown in (b) in FIG. 9, a bandwidth of an SL-PRS of a UE-1 is the same as a bandwidth of a PSCCH of the UE-1, and the SL-PRS of the UE-1 occupies a part of frequency domain resources in the bandwidth.

In a possible implementation, the network apparatus may limit, by using the configuration information, that the bandwidth of the SL-PRS is the same as the bandwidth of the PSCCH. The network apparatus may further limit (for example, through configuration by using the configuration information) that the SL-PRS occupies all or a part of frequency domain resources in the bandwidth. In this implementation, impact on bandwidth occupation and reservation of the legacy terminal apparatus can be reduced. When the SL-PRS is retransmitted or has a periodic reservation, the SL-PRS may be processed as data, to reduce other additional processing manners.

In this embodiment of this application, sidelink control information sent by a plurality of terminal apparatuses may be sent through frequency division multiplexing or time division multiplexing, and SL-PRSs sent by the plurality of terminal apparatuses may also be sent through frequency division multiplexing or time division multiplexing. In this way, different multiplexing manners can be implemented, resource utilization is flexible, system resources are saved, and resource utilization is improved.

For example, the PSCCH that is sent by the first terminal apparatus and that is used to carry the first-stage SCI in the SCI undergoes frequency division multiplexing or time division multiplexing with a PSCCH that is sent by at least one third terminal apparatus and that is used to carry first-stage SCI. When the PSCCHs of the first terminal apparatus and the third terminal apparatus undergo time division multiplexing, time domain resources of the two may not overlap, and frequency domain resources of the two may overlap. When the PSCCHs of the first terminal apparatus and the third terminal apparatus undergo frequency division multiplexing, frequency domain resources of the two may not overlap, and time domain resources of the two may overlap.

For another example, the SL-PRS sent by the first terminal apparatus undergoes frequency division multiplexing or time division multiplexing with an SL-PRS sent by the at least one third terminal apparatus. When the SL-PRSs of the first terminal apparatus and the third terminal apparatus undergo time division multiplexing, time domain resources of the two may not overlap, and frequency domain resources of the two may overlap. When the SL-PRS of the first terminal apparatus and the third terminal apparatus undergo frequency division multiplexing, frequency domain resources of the two may not overlap, and time domain resources of the two may overlap.

When a plurality of terminal apparatuses send SL-PRSs through frequency division multiplexing, a lowest frequency domain location of a frequency domain resource occupied by a PSCCH of any terminal apparatus may be the same as or different from a lowest frequency domain location of an SL-PRS sent by the terminal apparatus. For example, a lowest frequency domain location of a frequency domain resource occupied by the PSCCH that is sent by the first terminal apparatus and that is used to carry the first-stage SCI in the SCI is the same as or different from a lowest frequency domain location of a frequency domain resource occupied by the first message sent by the first terminal apparatus. For another example, a lowest frequency domain location of a frequency domain resource occupied by the PSCCH that is sent by the third terminal apparatus and that is used to carry the first-stage SCI is the same as or different from a lowest frequency domain location of a frequency domain resource occupied by the sidelink positioning reference signal sent by the third terminal apparatus. In this way, the SL-PRS can obtain a larger bandwidth in the shared resource pool, solution flexibility can be improved, and resource utilization can be improved.

FIG. 10 is an example diagram of sending SL-PRSs by a UE-1 and a UE-2. As shown in FIG. 10, in a slot in the shared resource pool, the UE-1 and the UE-2 each send first-stage SCI by using a PSCCH. After the PSCCH, the UE-1 and the UE-2 send the SL-PRSs on corresponding symbols and frequency domain resources.

In the example in FIG. 10, the PSCCHs of the UE-1 and the UE-2 occupy several (for example, two or three) symbols in the front of the slot, and the PSCCHs of the UE-1 and the UE-2 occupy different frequency domain resources (PRBs or subchannels) on these symbols through frequency division multiplexing, that is, the PSCCHs of the UE-1 and the UE-2 occupy a same time domain resource, but occupy different frequency domain resources. On a symbol occupied by an SL-PRS, a comb structure in frequency domain may be used to transmit the SL-PRS. Therefore, the SL-PRSs of the UE-1 and the UE-2 may occupy different resources of different subchannels/PRBs alternately in frequency domain, that is, the SL-PRSs of the UE-1 and the UE-2 occupy a same time domain resource, but occupy different frequency domain resources (that is, the UE-1 and the UE-2 send the SL-PRSs through frequency division multiplexing).

In the implementation D1, the foregoing content is described by using an example in which the information in the second information is carried in the first-stage SCI. In actual application, when the sidelink control information does not include second-stage SCI, the information (for example, the transmission parameter (the information B3) of the first message) in the second information may alternatively be included in a MAC CE. In this way, the first terminal apparatus may not send or define second-stage SCI, thereby improving signaling and scheduling flexibility. Alternatively, the information (for example, the transmission parameter (the information B3) of the first message) in the second information may be carried in the first-stage SCI and a MAC CE, so that the number of bits that can carry the second information can be increased.

Implementation D2: The sidelink control information includes first-stage SCI and second-stage SCI, and the PSSCH used to carry the second-stage SCI does not include data.

In the implementation D2, the first information may be placed in the first-stage SCI. A placement manner may be the same as that in the implementation D1, and details are not described again.

In the implementation D2, the transmission mode information (the information B1) of the first message in the second information may be placed in the reserved field of the first-stage SCI. A difference lies as follows: In the implementation D1, the transmission mode information (the information B1) of the first message may indicate that the sidelink control information includes the first-stage SCI and/or the first-stage SCI is used to schedule the SL-PRS. In the implementation D2, the transmission mode information (the information B1) of the first message may indicate that the sidelink control information includes the first-stage SCI and the second-stage SCI, and may further indicate at least one of the following: there is no data in the PSSCH, or the first-stage SCI and the second-stage SCI are used to schedule the SL-PRS. For other content of the transmission mode information (the information B1) of the first message, refer to the implementation D1 and other descriptions. Details are not described again.

In the implementation D2, the second-stage SCI format information (the information B2) whose value is 11 in the second information may be placed in the second-stage SCI format information field of the first-stage SCI. A difference lies as follows: In the implementation D1, the second-stage SCI format information (the information B2) whose value is 11 may indicate that there is no second-stage SCI and/or the first-stage SCI is used to schedule the SL-PRS. In the implementation D2, the second-stage SCI format information (the information B2) whose value is 11 may indicate one or more of the following: the sidelink control information includes the first-stage SCI and the second-stage SCI, the second-stage SCI is in a newly defined format, there is no data in the PSSCH, or the first-stage SCI and the second-stage SCI are used to schedule the SL-PRS. For example, in the implementation D2, the second-stage SCI format information (the information B2) whose value is 11 may indicate that a format of the second-stage SCI is an SCI format 2-D, where the format is not defined in a specification release of the legacy terminal apparatus. Alternatively, the format of the second-stage SCI may have another name. This is not limited in this embodiment of this application. For other content of the second-stage SCI format information (the information B2) whose value is 11, refer to the descriptions in the implementation D1. Details are not described again.

In another possible implementation, because the sidelink control information includes the second-stage SCI, the second-stage SCI is carried by using the PSSCH, and the PSSCH does not include data, it may also be understood as that the second-stage SCI may be carried in the PSSCH. In this case, the sidelink control information needs to include information used to demodulate content of the second-stage SCI carried in the PSSCH. The second information may further include the information used to demodulate the content carried in the PSSCH, for example, one or more of a hybrid automatic repeat request (hybrid automatic repeat request, HARQ) process number, a new data indicator (new data indicator, NDI), a redundancy version (redundancy version, RV), a source identifier, a destination identifier, HARQ enabled indication information, a cast type, and a channel state information (channel state information, CSI) request. After receiving the information, the new terminal apparatus may demodulate the PSSCH based on the information used to demodulate the content carried in the PSSCH, to obtain the second-stage SCI.

In the implementation D2, because the SCI further includes the second-stage SCI, the number of bits that can be used to carry the second information is increased, so that more information can be carried. For example, the sidelink control information may carry all information in the transmission parameter of the first message.

In a possible implementation, the transmission parameter (the information B3) of the first message in the second information may be placed in the second-stage SCI. In this implementation, bits that are in the first-stage SCI in the implementation D1 and that are used to place the information in the transmission parameter (the information B3) of the first message may be an null field.

In another possible implementation, the transmission parameter (the information B3) of the first message in the second information may be placed in the first-stage SCI and the second-stage SCI, to reduce signaling overheads of the second-stage SCI and improve system performance. For example, a part of information in the transmission parameter (the information B3) of the first message may be placed in all or a part of the DMRS pattern field, the beta offset field, the number of DMRS port field, the MCS field, the additional MCS table field, and the PSFCH overhead field that are shown in Table 2.

In this embodiment of this application, the PSCCH and the PSSCH undergo time division multiplexing. For example, time domain resources of the PSCCH and the PSSCH do not overlap (for example, are adjacent in time domain or not), and frequency domain resources of the PSCCH and the PSSCH overlap. Alternatively, the PSCCH and the PSSCH undergo frequency division multiplexing. For example, frequency domain resources of the PSCCH and the PSSCH do not overlap (for example, are adjacent in time domain or not), and time domain resources of the PSCCH and the PSSCH overlap. In this embodiment of this application, resources occupied by the PSSCH and the PSCCH can be flexibly configured, to reduce a resource waste, so that flexibility and spectral efficiency of the solution can be improved.

The bandwidth of the PSCCH in this embodiment of this application may be the same as or different from a bandwidth of the PSSCH. For example, when the PSSCH does not include data but includes only the second-stage SCI, the bandwidth of the PSSCH may be the same as the bandwidth of the PSCCH, to facilitate frequency domain multiplexing of PSCCHs and PSSCHs of different UEs on a same symbol, thereby improving spectral efficiency.

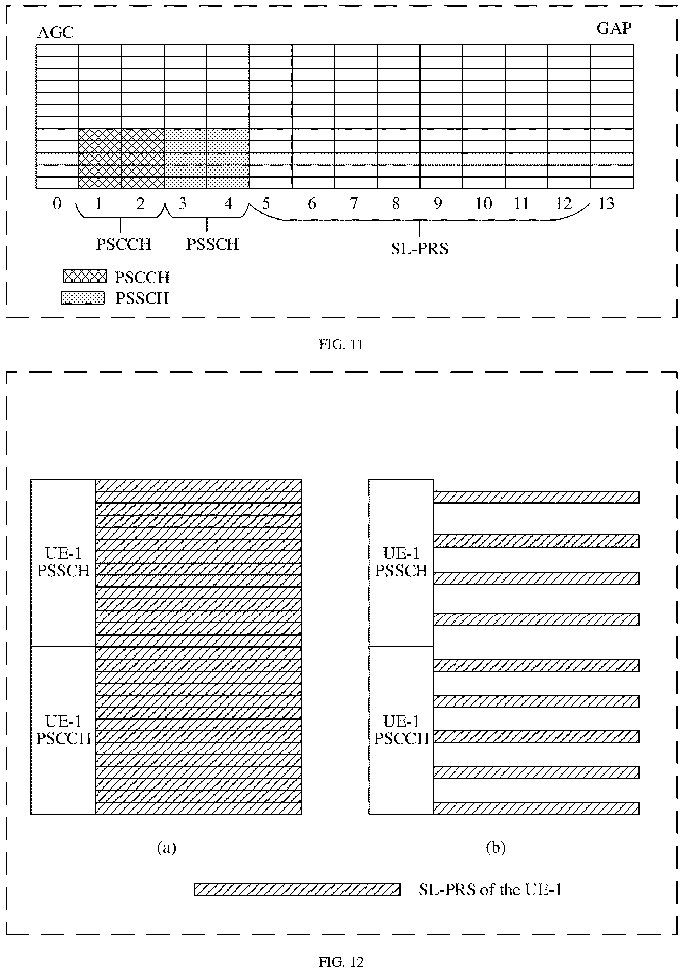

FIG. 11 is an example diagram of structures of sidelink control information and a first message that are sent by a first terminal apparatus according to an embodiment of this application. As shown in FIG. 11, the sidelink control information includes first-stage SCI and second-stage SCI. The first-stage SCI is carried in a PSCCH, and the second-stage SCI is carried in a PSSCH. The PSCCH, the PSSCH, and the first message (FIG. 11 shows an example in which the first message is an SL-PRS) may occupy different time domain symbols. The PSCCH occupies two time domain symbols (a time domain symbol 1 to a time domain symbol 2), the PSSCH occupies two time domain symbols (a time domain symbol 3 to a time domain symbol 4), and the SL-PRS occupies eight time domain symbols (a time domain symbol 5 to a time domain symbol 12). The SL-PRS may occupy all or a part of frequency domain resources on the eight time domain symbols. It can be learned from FIG. 11 that the slot includes time domain symbols occupied by automatic gain control (automatic gain control, AGC) and a gap (gap).

The first message may occupy all or a part of resources in the bandwidth of the first message. In this way, solution flexibility can be improved. For related content, refer to the descriptions of the implementation D1.

The bandwidth of the first message may be different from or the same as the bandwidth of the PSCCH. For related content, refer to the descriptions of the implementation D1.

In another possible implementation, the bandwidth of the first message is the same as a sum of the bandwidth of the PSCCH used to transmit the first-stage SCI in the sidelink control information and the bandwidth of the PSSCH used to transmit the second-stage SCI.

FIG. 12 shows several possible examples in which a sum of a bandwidth of a PSCCH and a bandwidth of a PSSCH is the same as a bandwidth of an SL-PRS. As shown in (a) in FIG. 12, a sum of a bandwidth of a PSCCH of a UE-1 and a bandwidth of a PSSCH of a UE-1 is the same as a bandwidth of an SL-PRS of the UE-1, and the SL-PRS occupies all frequency domain resources in the bandwidth. As shown in (b) in FIG. 12, a sum of a bandwidth of a PSCCH of a UE-1 and a bandwidth of a PSSCH of a UE-1 is the same as a bandwidth of an SL-PRS of the UE-1, and the SL-PRS of the UE-1 occupies a part of frequency domain resources in the bandwidth.

In a possible implementation, the network apparatus may limit, by using the configuration information, that the sum of the bandwidth of the PSCCH and the bandwidth of the PSSCH is the same as the bandwidth of the SL-PRS. The network apparatus may further limit (for example, through configuration by using the configuration information) that the SL-PRS occupies all or a part of frequency domain resources in the bandwidth. In this implementation, impact on bandwidth occupation and reservation of the legacy terminal apparatus can be reduced. When the SL-PRS is retransmitted or has a periodic reservation, the SL-PRS may be processed as data, to reduce other additional processing manners.

In another possible implementation, the network apparatus may limit, by using the configuration information, that an integer multiple of the sum of the bandwidth of the PSCCH and the bandwidth of the PSSCH is the same as the bandwidth of the SL-PRS. For example, the PSCCH and the PSSCH undergo frequency division multiplexing on a same symbol, the sum of the bandwidths of the PSCCH and the PSSCH is M1, and the bandwidth of the SL-PRS may be an integer multiple of M1. In this way, PSCCHs between different terminal apparatuses can also undergo frequency division multiplexing. The network apparatus may further limit (for example, through configuration by using the configuration information) that the SL-PRS occupies all or a part of frequency domain resources in the bandwidth. In this implementation, impact on bandwidth occupation and reservation of the legacy terminal apparatus can be reduced. When the SL-PRS is retransmitted or has a periodic reservation, the SL-PRS may be processed as data, to reduce other additional processing manners.

In this embodiment of this application, sidelink control information sent by a plurality of terminal apparatuses may be sent through frequency division multiplexing or time division multiplexing, and SL-PRSs sent by the plurality of terminal apparatuses may also be sent through frequency division multiplexing or time division multiplexing. In this way, resources can be saved, and resource utilization can be improved.

For example, the PSCCH that is sent by the first terminal apparatus and that is used to carry the first-stage SCI in the SCI undergoes frequency division multiplexing or time division multiplexing with a PSCCH that is sent by at least one third terminal apparatus and that is used to carry first-stage SCI. When the PSCCHs of the first terminal apparatus and the third terminal apparatus undergo time division multiplexing, time domain resources of the two may not overlap, and frequency domain resources of the two may overlap. When the PSCCHs of the first terminal apparatus and the third terminal apparatus undergo frequency division multiplexing, frequency domain resources of the two may not overlap, and time domain resources of the two may overlap.

For another example, the PSSCH that is sent by the first terminal apparatus and that is used to carry the second-stage SCI in the SCI undergoes frequency division multiplexing with a PSSCH that is sent by the at least one third terminal apparatus and that is used to carry second-stage SCI. For another example, the SL-PRS sent by the first terminal apparatus undergoes frequency division multiplexing with an SL-PRS sent by the at least one third terminal apparatus.

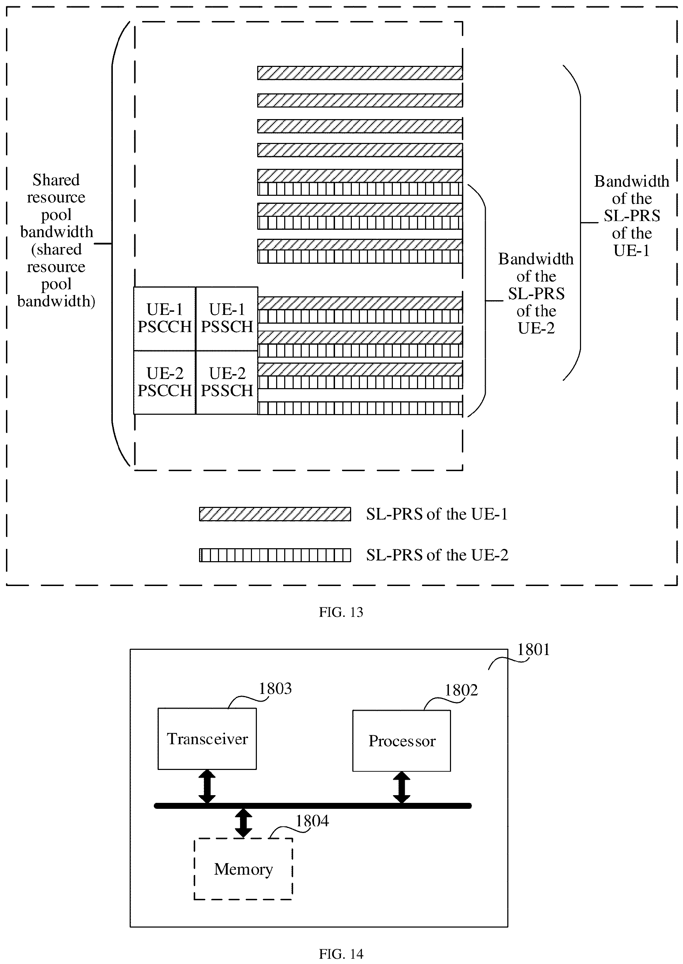

FIG. 13 is an example diagram of sending SL-PRSs by a UE-1 and a UE-2. As shown in FIG. 13, in a slot in the shared resource pool, the UE-1 and the UE-2 each send first-stage SCI by using a PSCCH. After the PSCCH, the UE-1 and the UE-2 each send second-stage SCI by using a PSSCH. After the PSSCH, the UE-1 and the UE-2 send the SL-PRSs on corresponding symbols and frequency domain resources.

In the example in FIG. 13, the PSCCHs of the UE-1 and the UE-2 occupy several (for example, two or three) symbols in the front of the slot, and the PSCCHs of the UE-1 and the UE-2 occupy different frequency domain resources (PRBs or subchannels) on these symbols through frequency division multiplexing, that is, the PSCCHs of the UE-1 and the UE-2 occupy a same time domain resource, but occupy different frequency domain resources. The PSSCHs of the UE-1 and the UE-2 occupy several (for example, two or three) symbols of the slot, and the PSCCHs of the UE-1 and the UE-2 occupy different frequency domain resources (PRBs or subchannels) on these symbols through frequency division multiplexing, that is, the PSSCHs of the UE-1 and the UE-2 occupy a same time domain resource, but occupy different frequency domain resources. On a symbol occupied by an SL-PRS, a comb structure in frequency domain may be used to transmit the SL-PRS. Therefore, the SL-PRSs of the UE-1 and the UE-2 may occupy different resources of different subchannels/PRBs alternately in frequency domain, that is, the SL-PRSs of the UE-1 and the UE-2 occupy a same time domain resource, but occupy different frequency domain resources (that is, the UE-1 and the UE-2 send the SL-PRSs through frequency division multiplexing).

A lowest frequency domain location of a frequency domain resource occupied by a PSSCH of a terminal apparatus is the same as or different from a lowest frequency domain location of a frequency domain resource occupied by a PSCCH of the terminal apparatus. FIG. 13 shows an example in which the lowest frequency domain location of the frequency domain resource occupied by the PSSCH of the terminal apparatus is the same as the lowest frequency domain location of the frequency domain resource occupied by the PSCCH of the terminal apparatus.

In the implementation D2, the foregoing content is described by using an example in which the information (for example, the transmission parameter (the information B3) of the first message) in the second information is carried in second-stage SCI. In actual application, when the sidelink control information includes second-stage SCI, the information (for example, the transmission parameter (the information B3) of the first message) in the second information may alternatively be included in a MAC CE. In this way, the first terminal apparatus may send the second-stage SCI in a legacy protocol format without further defining a new second-stage SCI format, thereby improving signaling and scheduling flexibility. Alternatively, the information (for example, the transmission parameter (the information B3) of the first message) in the second information may be carried in the second-stage SCI and a MAC CE, so that the number of bits that can carry the second information can be increased. Alternatively, the information (for example, the transmission parameter (the information B3) of the first message) in the second information may be carried in the first-stage SCI, the second-stage SCI, and a MAC CE, so that the number of bits that can carry the second information can be increased. For other content, refer to the foregoing descriptions. For example, the first-stage SCI may alternatively include a part of information in the second information. Details are not described herein again.

Implementation D3: The SCI includes first-stage SCI and second-stage SCI, and the PSSCH used to carry the second-stage SCI includes data.

In the implementation D3, the first information may be placed in the first-stage SCI. A placement manner may be the same as that in the implementation D1, and details are not described again.

The data carried in the PSSCH may be data that needs to be received by the new terminal apparatus. For example, the data included in the PSSCH includes service data for the new terminal apparatus or SL-PRS transmission related control or scheduling information for the new terminal apparatus. Because the sidelink control information needs to include information used to demodulate the data, in the implementation D3, a field that is in the first-stage SCI and that may be used to carry the second information in the implementation D1 and the implementation D2 is not used to carry the second information, but carries original information. For example, the DMRS pattern field, the beta offset field, the number of DMRS port field, the MCS field, the additional MCS table field, and the PSFCH overhead field that are shown in Table 2 may be used to carry information defined for these fields in the specification release supported by the legacy terminal apparatus.

For example, information carried in the DMRS pattern field in the first-stage SCI indicates a DMRS pattern.

For example, information carried in the beta offset field in the first-stage SCI indicates an offset of multiplexing of the second-stage SCI.

For example, information carried in the number of DMRS portfield in the first-stage SCI indicates a number of DMRS portof the PSSCH.

For example, information carried in the MCS field in the first-stage SCI indicates an MCS for transmitting the data carried in the PSSCH.

For example, information carried in the additional MCS table field in the first-stage SCI indicates an MCS table corresponding to the data carried in the PSSCH.

For example, information carried in the PSFCH overhead field in the first-stage SCI indicates PSFCH overheads.

The information carried in the DMRS pattern field, the beta offset field, the number of DMRS portfield, the MCS field, the additional MCS table field, and the PSFCH overhead field may be considered as a part of information in the information used to parse the data carried in the PSSCH. The new terminal apparatus may need to use the part of information, for example, DMRS pattern information indicated in the DMRS pattern field, to parse the data in the PSSCH in combination with the information that is in the second-stage SCI and that is used to parse the data carried in the PSSCH.

In the implementation D3, because the PSSCH includes data, related content in the second information may indicate that there is data in the PSSCH. This is different from the implementation D2. In the implementation D2, related content of the second information may indicate that there is no data in the PSSCH.

In the implementation D3, the transmission mode information (the information B1) of the first message in the second information may be placed in the reserved field of the first-stage SCI. A difference lies as follows: In the implementation D2, the transmission mode information (the information B1) of the first message may indicate at least one of the following: the sidelink control information includes the first-stage SCI and the second-stage SCI, there is no data in the PSSCH, or the first-stage SCI and the second-stage SCI are used to schedule the SL-PRS. In the implementation D3, the transmission mode information (the information B1) of the first message may indicate at least one of the following: the sidelink control information includes the first-stage SCI and the second-stage SCI, there is data in the PSSCH, or the first-stage SCI and the second-stage SCI are used to schedule the SL-PRS. For other content of the transmission mode information (the information B1) of the first message, refer to the implementation D2 and other descriptions. Details are not described again.

In the implementation D3, the second-stage SCI format information (the information B2) whose value is 11 in the second information may be placed in the second-stage SCI format information field of the first-stage SCI. A difference lies as follows: In the implementation D2, the second-stage SCI format information (the information B2) whose value is 11 may indicate one or more of the following: the sidelink control information includes the first-stage SCI and the second-stage SCI, the second-stage SCI is in a newly defined format, there is no data in the PSSCH, or the first-stage SCI and the second-stage SCI are used to schedule the SL-PRS. In the implementation D2, the second-stage SCI format information (the information B2) whose value is 11 may indicate one or more of the following: the sidelink control information includes the first-stage SCI and the second-stage SCI, the second-stage SCI is in a newly defined format, there is data in the PSSCH, or the first-stage SCI and the second-stage SCI are used to schedule the SL-PRS. For other content of the second-stage SCI format information (the information B2) whose value is 11, refer to the descriptions in the implementation D2. Details are not described again.

In another possible implementation, because the sidelink control information includes the second-stage SCI, the second-stage SCI is carried by using the PSSCH, and the PSSCH includes data, it may also be understood that the second-stage SCI is masqueraded as data to be carried in the PSSCH together with the data in the PSSCH. In this case, the sidelink control information needs to include information used to demodulate content carried in the PSSCH. The second information may further include the information used to demodulate the content carried in the PSSCH. After receiving the information, the new terminal apparatus may demodulate the PSSCH based on the information used to demodulate the content carried in the PSSCH, to obtain the second-stage SCI.

The second-stage SCI may include the transmission parameter (the information B3) of the first message in the second information. In addition, the second-stage SCI further needs to include information used to demodulate the data, which may also be understood as that information in the information used to demodulate the data is located in the second information. The second-stage SCI includes the transmission parameter (the information B3) of the first message in the second information and the information used to demodulate the data.

In a possible implementation, in the implementation D3, the information that is carried in the second-stage SCI and that is used to demodulate the data may be carried in a field defined in existing second-stage SCI. For example, the second-stage SCI includes information in at least one of the SCI format 2-A, the SCI format 2-B, or the SCI format 2-C. Some bits further need to be added to the second-stage SCI, to carry content in the transmission parameter (the information B3) of the first message in the second information. Content in the SCI format 2-A, the SCI format 2-B, or the SCI format 2-C may include a part of content in the transmission parameter (the information B3) of the first message, for example, may include the source identifier and the destination identifier in the transmission parameter (the information B3) of the first message.

Table 3 shows an example of the second-stage SCI below. As shown in Table 3, the second-stage SCI includes information in the SCI format 2-A. A part of bits may be further added to the second-stage SCI to carry information in the transmission parameter (the information B3) of the first message. A new field name may be defined for a bit field occupied by the information, and the number of bits may also be redefined as required. It can be learned that a format of the second-stage SCI is a new format, and the new terminal apparatus can successfully perform decoding, and the legacy terminal apparatus may determine, based on the second-stage SCI format information whose value is 11 in the first-stage SCI, that the second-stage SCI does not need to be decoded. Table 3 is an example. In actual application, the format of the second-stage SCI may be redefined. This is not limited in this embodiment of this application. Optionally, the numbers of bits in a last column in Table 3 are merely examples, and do not define or limit information indicated in fields. Alternatively, in another embodiment, the numbers of bits in the last column in Table 3 may have other values.

**Table 3 Example of the second-stage SCI**

| | | Fields (fields) | Number of bits (bits) |
|---|---|---|---|
| | Information included in the SCI format 2-A | HARQ process number (HARQ process number) | 4 |
| | | New data indicator (NDI) | 1 |
| | | Redundancy version (RV) | 2 |
| Second-stage SCI | | Source identifier (source ID) | 8 |
| | | Destination identifier (destination ID) | 16 |
| | | HARQ enabled/disabled (HARQ enabled/disabled) | 1 |
| | | Cast type indicator (cast type indicator) | 2 |
| | | Channel state information request (CSI request) | 1 |
| | Information in the transmission parameter (the information B3) of the first message | A field name may be newly defined | The number of bits is newly defined |

In the implementation D3, the foregoing content is described by using an example in which the information (for example, the transmission parameter (the information B3) of the first message) in the second information is carried in second-stage SCI. In actual application, when the sidelink control information includes second-stage SCI, the information (for example, the transmission parameter (the information B3) of the first message) in the second information may alternatively be included in a MAC CE. In this way, the first terminal apparatus may send the second-stage SCI in a legacy protocol format without further defining a new second-stage SCI format, thereby improving signaling and scheduling flexibility. Alternatively, the information (for example, the transmission parameter (the information B3) of the first message) in the second information may be carried in the second-stage SCI and a MAC CE, so that the number of bits that can carry the second information can be increased. Alternatively, the second information may be carried in the first-stage SCI, the second-stage SCI, and a MAC CE, so that the number of bits that can carry the second information can be increased. For other content, refer to the foregoing descriptions. For example, the first-stage SCI may include a part of information in the second information. Details are not described herein again.

In this embodiment of this application, a sending parameter of the physical sidelink shared channel may include: a minimum MCS value for sending the data, a maximum MCS value for sending the data, an MCS table for sending the data, maximum power for sending the data, a maximum number of transmission times for sending the data, or a maximum number of subchannels for sending the data.

The sending parameter of the physical sidelink shared channel is associated with at least one of the following parameters:
a priority of the data;
a pattern of a demodulation reference signal carried in the physical sidelink shared channel;
a period of a physical sidelink feedback channel (physical sidelink feedback channel, PSFCH);
whether there is a PSFCH resource in the slot;
a channel busy ratio value of a resource pool in which a resource used to send the data and the reference signal is located;
a priority of the reference signal; or
a channel bandwidth of the reference signal.

The priority of the reference signal may be indicated (by another device) or preset. The priority of the reference signal is lower than the priority of the data. Alternatively, the priority of the reference signal is higher than the priority of the data. Alternatively, the priority of the reference signal is the same as the priority of the data.

The priority of the reference signal may be considered as a condition for determining whether the reference signal is sent together with the data. For example, when the priority of the reference signal is equal to or higher than a preset priority, the reference signal may be allowed to be sent together with (occupying the same slot as) the data. If the priority of the reference signal is low, indicating that the reference signal is not important, the reference signal may not be sent together with the data, to minimize impact on the data. In this embodiment of this application, the preset priority may be the priority of the data or a configured priority threshold.

In another possible implementation, if the priority of the reference signal is low or equal to the preset priority, the reference signal is sent together with the data, thereby saving resources. If the priority of the reference signal is high, indicating that the reference signal is important, the reference signal is separately sent, rather than sent together with the data, so that positioning performance can be improved.

In this embodiment of this application, for other content of the PSCCH, the PSSCH, and the SL-PRS, for example, a bandwidth relationship and a resource relationship, refer to related descriptions in the implementation D2. In addition, for related content of the solution in which a plurality of terminal apparatuses send sidelink control information and SL-PRSs, also refer to related descriptions of the implementation D2. Details are not described again.

In this embodiment of this application, there may be a plurality of types of content in the first information. For example, the first information may include related information of one or more of a priority, a frequency domain resource, a time domain resource, or a reservation period. The information included in the first information may be a corresponding parameter of the first message, and may be a parameter corresponding to the PSSCH (or information carried in the PSSCH). In other words, the information included in the first information is a parameter shared by the first message and the PSSCH (or the information carried in the PSSCH). Optionally, in this application, the information carried in the PSSCH includes the data, control information, and/or higher-layer signaling.

For example, the priority in the first information may indicate the priority of the first message, and may indicate a priority of the PSSCH (or a priority of the information carried in the PSSCH). For example, the indication information, described in the information A1, of the priority of the first message may also indicate the priority of the PSSCH (or the priority of the information carried in the PSSCH). In another possible implementation, the first information may further include indication information of the priority of the PSSCH (or the information carried in the PSSCH). For related descriptions of the priority, refer to the foregoing content. Details are not described again.

For another example, the indication information of the frequency domain resource in the first information may indicate the frequency domain resource of the first message, and may indicate the frequency domain resource of the PSSCH. For example, the indication information, described in the information A2, of the frequency domain resource of the first message may also indicate the frequency domain resource of the PSSCH. In another possible implementation, the first information may further include indication information of a frequency domain resource of the PSSCH. For related descriptions of the indication information of the frequency domain resource, refer to the foregoing content. Details are not described again.

For another example, the indication information of the time domain resource in the first information may indicate the time domain resource of the first message, and may indicate the time domain resource of the PSSCH. For example, the indication information, described in the information A3, of the time domain resource of the first message may also indicate the time domain resource of the PSSCH. In another possible implementation, the first information may further include indication information of a time domain resource of the PSSCH. For related descriptions of the indication information of the time domain resource, refer to the foregoing content. Details are not described again.

For another example, the indication information of the reservation period in the first information may indicate the reservation period of the first message, and may indicate a reservation period of the PSSCH. For example, the indication information, described in the information A4, of the reservation period of the first message may also indicate the reservation period of the PSSCH. In another possible implementation, the first information may further include indication information of the reservation period of the PSSCH. For related descriptions of the indication information of the reservation period, refer to the foregoing content. Details are not described again.

In this embodiment of this application, the transmission parameter (the information B3) of the first message includes the information B3.1, the information B3.2, the information B3.3, the information B3.4, the information B3.5, and one or more of the following information B3.6, information B3.7, information B3.8, information B3.9, information B3.10, or information B3.11.

### Information B3.6: Request information for sending the first message.

The information (the information B3.6) may indicate that a device that receives the first message is requested to send the first message.

### Information B3.7: Resource identification information of the first message.

In this embodiment of this application, resource index information including a frequency domain comb offset and a start symbol location for sending the first message in a slot may be referred to as resource identification information.

### Information B3.8: Indication information of the reservation period of the first message.

For content of the information B3.8, refer to the foregoing descriptions of the information A4. Details are not described again.

### Information B3.9: Indication information of the priority of the first message.

For content of the information B3.9, refer to the foregoing descriptions of the information A1. Details are not described again.

### Information B3.10: Indication information of a cast type of the first message.

For example, the indication information of the cast type of the first message indicates that the SL-PRS undergoes unicast, multicast, or broadcast.

### Information B3.11: Indication information of the number of retransmission times of the first message.

The information B3.11 may include, for example, information indicating initial transmission, first retransmission, or second retransmission.

In a possible implementation, a parameter included in the second information is also applicable to the SL-PRS and the PSSCH (or the data in the PSSCH). For example, any one of the information B3.1, the information B3.2, the information B3.3, the information B3.4, the information B3.5, the information B3.6, the information B3.7, the information B3.8, the information B3.9, the information B3.10, or the information B3.11 may be a parameter of the first message, and may be a parameter corresponding to the information carried in the PSSCH. For example, the parameter such as the priority, the cast type, the source identifier, or the destination identifier of the first message may also be a parameter of the PSSCH (or the information carried in the PSSCH). Alternatively, it is understood that the parameter such as the priority, the cast type, the source identifier, or the destination identifier of the first message is the same as a parameter such as a priority, a cast type, a source identifier, or a destination identifier of the PSSCH (or the information carried in the PSSCH).

In this embodiment of this application, two examples in which the sidelink control information includes first-stage SCI and second-stage SCI are described by using the implementation D2 and the implementation D3. The following separately describes examples of several possible transmission modes of the sidelink control information by using an implementation D4, an implementation D5, and an implementation D6.

In the implementation D4, the implementation D5, and the implementation D6, the sidelink control information includes first-stage SCI and second-stage SCI, the second-stage SCI is carried in a PSSCH, and the PSSCH may or may not include data. Optionally, when the PSSCH does not include data, the PSSCH may further include a MAC CE, or a MAC subheader of the SL-SCH.

When the PSSCH includes data, the second information further includes information used to demodulate information carried in the PSSCH. In this embodiment of this application, the information used to demodulate the information carried in the PSSCH may also be referred to as a receiving parameter of the PSSCH. In this embodiment of this application, the information carried in the PSSCH may include one or more of the data in the PSSCH, the second-stage SCI, the MAC CE, or the MAC subheader of the SL-SCH. In this embodiment of this application, the data carried in the PSSCH may be data that needs to be received by the new terminal apparatus. For example, the data included in the PSSCH includes service data for the new terminal apparatus and/or SL-PRS transmission related control or scheduling information for the new terminal apparatus. The service data is carried by one or more transport blocks TBs. Optionally, the SL-PRS transmission related control or scheduling information for the new terminal apparatus may be carried in higher-layer control signaling, and the higher-layer control signaling may include, for example, any one of RRC signaling, a discovery message, synchronization signaling, or a system message.

In the implementation D4, the implementation D5, and the implementation D6, in a possible implementation, the second information includes the transmission parameter (the information B3) of the first message and the information used to demodulate the information carried in the PSSCH. In this embodiment of this application, the transmission parameter of the first message may also be referred to as a receiving parameter of the SL-PRS. In this embodiment of this application, the first message includes an SL-PRS. In a possible example, the first message is an SL-PRS. In the implementation D4, the implementation D5, and the implementation D6, a part of content is described by using an example in which the first message is an SL-PRS.

In the implementation D4, the transmission mode information of the first message and the second-stage SCI format information in the first-stage SCI jointly indicate that the second-stage SCI includes the transmission parameter of the first message and the information used to demodulate the information carried in the PSSCH.

In the implementation D4, the transmission mode information of the first message is indicated by using a non-zero value of the reserved field of the first-stage SCI. The non-zero value of the reserved field may occupy at least 1 bit. For example, the non-zero value of the reserved field is 1, 10, 01, 110, 1111, or 1000. The number of bits occupied by the non-zero value of the reserved field may be configured by using a higher-layer parameter (for example, independently configured), and the number of bits may be 0, 1, 2, or 3.

The transmission mode information of the first message may indicate that the PSSCH includes the first message (for example, the first message is an SL-PRS), or indicate that a slot in which the PSSCH is located includes an SL-PRS. Optionally, the number of bits occupied by the transmission mode information of the first message may be configured by using a higher-layer parameter. Optionally, when it is indicated in the resource pool that SL-PRS sending is allowed, the number of bits occupied by the transmission mode information of the first message is greater than 0. For example, explicit signaling in the resource pool enables SL-PRS sending. For another example, the resource pool is configured as a resource pool shared by PSSCH and SL-PRS transmission. After identifying the non-zero value of the reserved field of the first-stage SCI, the new terminal apparatus may determine, based on the non-zero value, that the PSSCH includes an SL-PRS, or determine that the slot in which the PSSCH is located includes an SL-PRS. In another possible implementation, the non-zero value of the reserved field may indicate the legacy terminal apparatus not to process the SL-PRS. Generally, a bit in the reserved field may be reserved for a future protocol to carry information. For the legacy terminal apparatus supporting a legacy protocol, information of the reserved bit may not need to be processed. Alternatively, if the legacy terminal apparatus identifies that the reserved bit carries a non-zero value, the legacy terminal apparatus may consider that the value carried by the reserved bit is subject to identification of a new terminal apparatus supporting a new protocol, and the legacy terminal apparatus may determine, based on this, that the SL-PRS does not need to be processed. In this way, a probability of a second-stage SCI decoding error can be reduced.

In another possible implementation, the reserved field of the first-stage SCI has a zero value. For example, the value of the reserved field is 0. In this case, the zero value of the reserved field may indicate that the PSSCH does not include an SL-PRS, or indicate that the slot in which the PSSCH is located does not include an SL-PRS.

In another possible implementation, when SL-PRS and PSSCH transmission in the shared resource pool is enabled by using a higher-layer parameter, the reserved field of the first-stage SCI may exist, or the reserved field of the first-stage SCI may be in a used state.

In another possible implementation, when the reserved field of the first-stage SCI has a non-zero value, it may be considered that the format of the second-stage SCI is a specified format. The specified format may be referred to asa first format. A name of the second-stage SCI in the first format may be flexibly defined. For example, the first format is referred to as an SCI format 2-D1. The SCI format 2-D1 may be replaced with another name, for example, an SCI format 2-D, an SCI format 2-A1, an SCI format 2-B1, an SCI format 2-C1, an SCI format 2-A', an SCI format 2-B', or an SCI format 2-C'.

The SCI format 2-D1 is used to define PSSCH and SL-PRS transmission. If the reserved field of the first-stage SCI has a non-zero value, the SCI format 2-D1 includes two parts of information: the transmission parameter (the information B3) of the first message and the information used to demodulate the information carried in the PSSCH. A format of the information used to demodulate the information carried in the PSSCH is flexible, and fields in some existing second-stage SCI formats may be reused. For example, the information used to demodulate the information carried in the PSSCH may be carried in the second-stage SCI in the SCI format 2-A, the SCI format 2-B, or the SCI format 2-C. The following separately lists several possible examples by using an example D4.1, an example D4.2, and an example D4.3. Optionally, a size (size) of payload (payload) carried in the SCI format 2-D1 is also jointly determined by using the transmission parameter (the information B3) of the first message and the information used to demodulate the information carried in the PSSCH. Optionally, when the existing SCI format 2-A, SCI format 2-B, or SCI format 2-C is reused for the information used to demodulate the information carried in the PSSCH, the size (size) of the payload (payload) carried in the SCI format 2-D1 varies with a size of a corresponding SCI format.

Example D4.1: The second information includes second-stage SCI format information whose value is 00. This implementation may also be understood as that when the value of the second-stage SCI format information is 00, the second-stage SCI in the first format includes a field indicated in second-stage SCI in a second format. In this example, the second-stage SCI in the second format may be understood as second-stage SCI in the SCI format 2-A.

In this embodiment of this application, the second-stage SCI in the second format may be used for PSSCH demodulation. The second-stage SCI in the second format is used for PSSCH demodulation, where the PSSCH demodulation includes any one of the following: an operation with an ACK or a NACK; an operation only with a NACK; and an operation without HARQ-ACK feedback information.

The field indicated in the second-stage SCI in the SCI format 2-A includes a field indicating at least one of the following information: a HARQ process number, a new data indicator, a redundancy version, a source identifier, a destination identifier, a HARQ feedback enabled or disabled indicator, a cast type, or a CSI request. Each type of information may correspond to one field, and each type of information may occupy a specific number of bits.

When the SCI format 2-D1 includes the transmission parameter (the information B3) of the first message and the information used to demodulate the information carried in the PSSCH, and the information used to demodulate the information carried in the PSSCH is carried in a field of the second-stage SCI in the SCI format 2-A, it may also be understood as that the SCI format 2-D1 includes a field used to carry the transmission parameter (the information B3) of the first message and the field in the second-stage SCI in the SCI format 2-A. For a possible example of the SCI format 2-D1 in this example, refer to Table 3. Details are not described again.

Example D4.2: The second information includes second-stage SCI format information whose value is 01. This implementation may also be understood as that when the value of the second-stage SCI format information is 01, the second-stage SCI in the first format includes a field indicated in second-stage SCI in a third format. In this example, the second-stage SCI in the third format may be understood as second-stage SCI in the SCI format 2-B.

In this embodiment of this application, the second-stage SCI in the third format may be used for PSSCH demodulation. The second-stage SCI in the third format is used for PSSCH demodulation, where the PSSCH demodulation includes any one of the following: an operation only with a NACK; and an operation without HARQ-ACK feedback information.

The field indicated in the second-stage SCI in the SCI format 2-B includes a field indicating at least one of the following information: a HARQ process number, a new data indicator, a redundancy version, a source identifier, a destination identifier, a HARQ feedback enabled or disabled indicator, a zone identifier, or communication range requirement information. Each type of information may correspond to one field, and each type of information may occupy a specific number of bits.

When the SCI format 2-D1 includes the transmission parameter (the information B3) of the first message and the information used to demodulate the information carried in the PSSCH, and the information used to demodulate the information carried in the PSSCH is carried in a field of the second-stage SCI in the SCI format 2-B, it may also be understood as that the SCI format 2-D1 includes a field used to carry the transmission parameter (the information B3) of the first message and the field in the second-stage SCI in the SCI format 2-B. For a possible example of the SCI format 2-D1 in this example, refer to Table 4. Details are not described again. Optionally, the numbers of bits in a last column in Table 4 are merely examples, and do not define or limit information indicated in fields. Alternatively, in another embodiment, the numbers of bits in the last column in Table 4 may have other values.

**Table 4 Example of the second-stage SCI**

| | | Fields (fields) | Number of bits (bits) |
|---|---|---|---|
| Second-stage SCI | Information included in the SCI format 2-B | HARQ process number (HARQ process number) | 4 |
| | | New data indicator (NDI) | 1 |
| | | Redundancy version (RV) | 2 |
| | | Source identifier (source ID) | 8 |
| | | Destination identifier (destination ID) | 16 |
| | | HARQ enabled/disabled (HARQ enabled/disabled) | 1 |
| | | Zone identifier (zone ID) | 12 |
| | | Communication range requirement information (communication range requirement) | 4 |
| | Information in the transmission parameter (the information B3) of the first message | A field name may be newly defined | The number of bits is newly defined |

Example D4.3: The second information includes second-stage SCI format information whose value is 10. This implementation may also be understood as that when the value of the second-stage SCI format information is 10, the second-stage SCI in the first format includes a field indicated in second-stage SCI in a fourth format. In this example, the second-stage SCI in the fourth format may be understood as second-stage SCI in the SCI format 2-C.

In this embodiment of this application, the second-stage SCI in the fourth format is used for PSSCH demodulation and providing inter-UE coordination information, or the second-stage SCI in the fourth format is used for PSSCH demodulation and inter-UE coordination requesting information. For the second-stage SCI in the fourth format, the PSSCH demodulation includes any one of the following: an operation with an ACK or a NACK; an operation only with a NACK; and an operation without HARQ-ACK feedback information.

The SCI format 2-C may have a plurality of possible forms. The following describes two possible forms by using an example D4.3.1 and an example D4.3.2.

For the second-stage SCI in the fourth format, refer to descriptions in the example D4.3.1 and the example D4.3.2.

Example D4.3.1: The field indicated in the second-stage SCI in the fourth format includes a field indicating at least one of the following information: a HARQ process number, a new data indicator, a redundancy version, a source identifier, a destination identifier, a HARQ feedback enabled or disabled indicator, a cast type, a CSI request, and providing/requesting indication information. When a value of the providing/requesting indication information is "0", the field indicated in the second-stage SCI in the fourth format further includes a field indicating at least one of the following information: resource combination indication information, first resource location indication information, reference slot location indication information, resource set type indication information, or lowest subchannel indication information. Each type of information may correspond to one field, and each type of information may occupy a specific number of bits. A value of the resource set type indication information being 0 indicates that inter-UE coordination information is requested to provide a preferred (preferred) resource. A value of the resource set type indication information being 1 indicates that inter-UE coordination information is requested to provide at least one of non-preferred (non-preferred) resources.

When the SCI format 2-D1 includes the transmission parameter (the information B3) of the first message and the information used to demodulate the information carried in the PSSCH, and the information used to demodulate the information carried in the PSSCH is carried in a field of the second-stage SCI in the SCI format 2-C, it may also be understood as that the SCI format 2-D1 includes a field used to carry the transmission parameter (the information B3) of the first message and the field in the second-stage SCI in the SCI format 2-C. For a possible example of the SCI format 2-D1 in this example, refer to Table 5. Details are not described again. Optionally, the numbers of bits in a last column in Table 5 are merely examples, and do not define or limit information indicated in fields. Alternatively, in another embodiment, the numbers of bits in the last column in Table 5 may have other values. Optionally, field content of the second-stage SCI in Table 5 is an example of information included when a value of a "providing/requesting indication information" field is "0".

**Table 5 Example of the second-stage SCI**

| | | Fields (fields) | Number of bits (bits) |
|---|---|---|---|
| | | HARQ process number (HARQ process number) | 4 |
| | | New data indicator (NDI) | 1 |
| | | Redundancy version (RV) | 2 |
| | | Source identifier (source ID) | 8 |
| | | Destination identifier (destination ID) | 16 |
| | | | |
| Second-stage SCI | Information included in the SCI format 2-C | | |
| | | HARQ enabled/disabled (HARQ enabled/disabled) | 1 |
| | | Cast type indicator (cast type indicator) | 2 |
| | | Channel state information request (CSI request) | 1 |
| | | Providing/requesting indication information (providing/requesting indicator) | 1 |
| | | Resource combination indication information (resource combinations) | 19 or 22 |
| | | First resource location indication information (first resource location) | 8 |
| | | Reference slot location indication information (reference slot location) | 14 or 15 |
| | | Resource set type indication information (resource set type) | 1 |
| | | Lowest subchannel indication information (lowest subChannel indices) | 6 or 8 |
| | Information in the transmission parameter (the information B3) of the first message | A field name may be newly defined | The number of bits is newly defined |

Example D4.3.2: The field indicated in the second-stage SCI in the fourth format includes a field indicating at least one of the following information: a HARQ process number, a new data indicator, a redundancy version, a source identifier, a destination identifier, a HARQ feedback enabled or disabled indicator, a cast type, a CSI request, and providing/requesting indication information. When a value of the providing/requesting indication information is "1", the field indicated in the second-stage SCI in the fourth format further includes a field indicating at least one of the following information: priority indication information, number-of-subchannels indication information, resource reservation period indication information, resource selection window location indication information, or resource set type indication information. Each type of information may correspond to one field, and each type of information may occupy a specific number of bits. A value of the resource set type indication information being 0 indicates that inter-UE coordination information is requested to provide a preferred (preferred) resource. A value of the resource set type indication information being 1 indicates that inter-UE coordination information is requested to provide at least one of non-preferred (non-preferred) resources. Each type of information may correspond to one field, and each type of information may occupy a specific number of bits.

When the SCI format 2-D1 includes the transmission parameter (the information B3) of the first message and the information used to demodulate the information carried in the PSSCH, and the information used to demodulate the information carried in the PSSCH is carried in a field of the second-stage SCI in the SCI format 2-C, it may also be understood as that the SCI format 2-D1 includes a field used to carry the transmission parameter (the information B3) of the first message and the field in the second-stage SCI in the SCI format 2-C. For a possible example of the SCI format 2-D1 in this example, refer to Table 6. Details are not described again. Optionally, the numbers of bits in a last column in Table 6 are merely examples, and do not define or limit information indicated in fields. Alternatively, in another embodiment, the numbers of bits in the last column in Table 6 may have other values. Optionally, field content of the second-stage SCI in Table 6 is an example of information included when a value of a " providing/requesting indication information" field is "1".

In this embodiment of this application, the numbers of bits in the tables are merely examples, and do not define or limit information indicated in fields. Alternatively, in another embodiment, the numbers of bits in the tables may have other values.

**Table 6 Example of the second-stage SCI**

| | | Fields (fields) | Number of bits (bits) |
|---|---|---|---|
| | | HARQ process number (HARQ process number) | 4 |
| | | New data indicator (NDI) | 1 |
| | | Redundancy version (RV) | 2 |
| | | Source identifier (source ID) | 8 |
| | | Destination identifier (destination ID) | 16 |
| | | HARQ enabled/disabled (HARQ enabled/disabled) | 1 |
| Second-stage SCI | Information included in the SCI format 2-C | Cast type indicator (cast type indicator) | 2 |
| | | Channel state information request (CSI request) | 1 |
| | | Providing/requesting indication information (providing/requesting indicator) | 1 |
| | | Priority indication information (priority) | 3 |
| | | Number-of-subchannels indication information (number of subchannels) | 3 or 4 |
| | | Resource reservation period indication information (resource reservation period) | 4 |
| | | Resource selection window location indication information (resource selection window location) | 28 or 30 |
| | | Resource set type indication information (resource set type) | 1 |
| | | Padding bit (padding bits) | y (y may be 0 or a positive integer) |
| | Information in the transmission parameter (the information B3) of the first message | A field name may be newly defined | The number of bits is newly defined |

It can be learned from the solution provided in the implementation D4 that, in this solution, the reserved field in the first-stage SCI and the second-stage SCI format information in the first-stage SCI jointly indicate that the second-stage SCI includes the information used to demodulate the information carried in the PSSCH (the information used to demodulate the information carried in the PSSCH is carried in any one of the SCI format 2-A, the SCI format 2-B, or the SCI format 2-C) and the transmission parameter (the information B3) of the first message, so that the new terminal apparatus of R18 can accurately identify parameters used for receiving the PSSCH and the SL-PRS without affecting receiving of the legacy terminal apparatus, thereby achieving backward compatibility.

For other content in the implementation D4, refer to related descriptions in the implementation D2 and the implementation D3. For example, for descriptions of other information carried in the first-stage SCI, refer to content in the implementation D2 or the implementation D3. Details are not described again.

In the implementation D5, the transmission mode information of the first message and the second-stage SCI format information in the first-stage SCI jointly indicate a format of the second-stage SCI. It may also be understood as that the transmission mode information of the first message and the second-stage SCI format information in the first-stage SCI jointly indicate that the second-stage SCI includes the transmission parameter of the first message and the information used to demodulate the information carried in the PSSCH.

In the implementation D5, the transmission mode information of the first message includes a non-zero value of the reserved field of the first-stage SCI. The non-zero value of the reserved field may occupy at least 1 bit. For descriptions of the reserved field of the first-stage SCI, refer to related descriptions in the implementation D4. Details are not described again.

A difference from the implementation D4 lies as follows: In the implementation D5, the second-stage SCI may include a plurality of newly defined formats, and the terminal apparatus determines a format of the second-stage SCI based on the transmission mode information of the first message and the second-stage SCI format information. In this embodiment of this application, the new formats defined for the second-stage SCI may be collectively referred to as a first format. For example, the second-stage SCI in the first format may include second-stage SCI in a second format, second-stage SCI in a third format, or second-stage SCI in a fourth format. The second-stage SCI in the second format may have another name in the implementation D5, for example, may be referred to as an SCI format 2-A1. For another example, the second-stage SCI in the third format may have another name in the implementation D5, for example, may be referred to as an SCI format 2-B1. For another example, the second-stage SCI in the fourth format may have another name in the implementation D5, for example, may be referred to as an SCI format 2-C1.

The following lists several possible examples.

For example, when the reserved field of the first-stage SCI has a non-zero value, and the value of the second-stage SCI format information is 00, the format of the second SCI is the SCI format 2-A1 (second format). The second-stage SCI in the SCI format 2-A1 (second format) includes the transmission parameter of the first message and the information used to demodulate the information carried in the PSSCH. The second-stage SCI in the SCI format 2-A1 (second format) may include a field used to carry the transmission parameter of the first message and a field in fields included in the second-stage SCI in the SCI format 2-A. The field included in the second-stage SCI in the SCI format 2-A may be that described in the example D4.1, and details are not described again.

For another example, when the reserved field of the first-stage SCI has a non-zero value, and the value of the second-stage SCI format information is 01, the format of the second SCI is the SCI format 2-B1 (third format). The second-stage SCI in the SCI format 2-B1 (third format) includes the transmission parameter of the first message and the information used to demodulate the information carried in the PSSCH. The second-stage SCI in the SCI format 2-B1 (third format) may include a field used to carry the transmission parameter of the first message and a field in fields included in the second-stage SCI in the SCI format 2-B. The field included in the second-stage SCI in the SCI format 2-B may be that described in the example D4.2, and details are not described again.

For another example, when the reserved field of the first-stage SCI has a non-zero value, and the value of the second-stage SCI format information is 10, the format of the second SCI is the SCI format 2-C1 (fourth format). The second-stage SCI in the SCI format 2-C1 (fourth format) includes the transmission parameter of the first message and the information used to demodulate the information carried in the PSSCH. The second-stage SCI in the SCI format 2-C1 (fourth format) may include a field used to carry the transmission parameter of the first message and a field in fields included in the second-stage SCI in the SCI format 2-C. The field included in the second-stage SCI in the SCI format 2-C may be that described in the example D4.3, and details are not described again.

It can be learned from the solution provided in the implementation D5 that, in this solution, the reserved field in the first-stage SCI and the second-stage SCI format information in the first-stage SCI jointly indicate the format (for example, any one of the SCI format 2-A1, the SCI format 2-B1, or the SCI format 2-C1) of the second-stage SCI, the second-stage SCI is in the newly defined format, and the newly defined second-stage SCI includes the information used to demodulate the information carried in the PSSCH (the information used to demodulate the information carried in the PSSCH is carried in any one of the SCI format 2-A, the SCI format 2-B, or the SCI format 2-C) and the transmission parameter (the information B3) of the first message, so that the new terminal apparatus of R18 can accurately identify parameters used for receiving the PSSCH and the SL-PRS without affecting receiving of the legacy terminal apparatus, thereby achieving backward compatibility.

For other content in the implementation D5, refer to related descriptions in the implementation D2 and the implementation D3. For example, for descriptions of other information carried in the first-stage SCI, refer to content in the implementation D2 or the implementation D3. Details are not described again.

In the implementation D6, the transmission mode information of the first message includes the second-stage SCI format information whose value is 11.

In the implementation D6, it may be understood that the terminal apparatus does not need to determine information in the second-stage SCI with reference to the reserved field in the first-stage SCI. When identifying that the value of the second-stage SCI format information in the first-stage SCI is 11, the terminal apparatus determines that the second-stage SCI is in a newly defined format. The newly defined format may be referred to as a first format or an SCI format 2-D2. Alternatively, the newly defined format of the second-stage SCI may have another name. This is not limited in this embodiment of this application. For ease of understanding, in the implementation D6, the newly defined format of the second-stage SCI is referred to as an SCI format 2-D2.

In another possible implementation, the second-stage SCI in the first format (SCI format 2-D2) includes the transmission parameter of the first message and the information used to demodulate the information carried in the PSSCH. The second-stage SCI may further include some fields. These fields may be used to demodulate the information carried in the PSSCH. These fields may include fields in the second-stage SCI in the SCI format 2-A, the second-stage SCI in the SCI format 2-B, or the second-stage SCI in the SCI format 2-C. For the fields in the second-stage SCI in the SCI format 2-A, the second-stage SCI in the SCI format 2-B, or the second-stage SCI in the SCI format 2-C, refer to the foregoing content. Details are not described again.

In another possible implementation, the second-stage SCI may further include first indication information, and the first indication information indicates the information for demodulating the information carried in the PSSCH. The first indication information may have another name in the future. For example, the first indication information may be referred to as second-stage SCI format indication information in the future. Optionally, the first indication information may occupy an integer number of bits, for example, 1 bit or 2 bits.

For example, when the value of the second-stage SCI format information in the first-stage SCI is 11, it is determined that the format of the second-stage SCI is the SCI format 2-D2. When a value of the first indication information in the second-stage SCI is a first value (for example, the first value is 00), the second-stage SCI in the first format (SCI format 2-D2) includes a field indicated in second-stage SCI in a second format and the transmission parameter of the first message. The field indicated in the second-stage SCI in the second format may carry the information used to demodulate the information carried in the PSSCH. In this example, the field indicated in the second-stage SCI in the second format may include one or more of the fields in the second-stage SCI in the SCI format 2-A. For the fields in the second-stage SCI in the SCI format 2-A, refer to the foregoing content. Details are not described again.

For another example, when the value of the second-stage SCI format information in the first-stage SCI is 11, it is determined that the format of the second-stage SCI is the SCI format 2-D2. When the value of the first indication information in the second-stage SCI is a second value (for example, the second value is 01), the second-stage SCI in the first format (SCI format 2-D2) includes a field indicated in second-stage SCI in a third format and the transmission parameter of the first message. The field indicated in the second-stage SCI in the third format may carry the information used to demodulate the information carried in the PSSCH. In this example, the field indicated in the second-stage SCI in the third format may include one or more of the fields in the second-stage SCI in the SCI format 2-B. For the fields in the second-stage SCI in the SCI format 2-B, refer to the foregoing content. Details are not described again.

For another example, when the value of the second-stage SCI format information in the first-stage SCI is 11, it is determined that the format of the second-stage SCI is the SCI format 2-D2. When the value of the first indication information in the second-stage SCI is a third value (for example, the third value is 10), the second-stage SCI in the first format (SCI format 2-D2) includes a field indicated in second-stage SCI in a fourth format and the transmission parameter of the first message. The field indicated in the second-stage SCI in the fourth format may carry the information used to demodulate the information carried in the PSSCH. In this example, the field indicated in the second-stage SCI in the fourth format may include one or more of the fields in the second-stage SCI in the SCI format 2-C. For the fields in the second-stage SCI in the SCI format 2-C, refer to the foregoing content. Details are not described again.

It can be learned from the solution provided in the implementation D6 that, in this solution, it may be identified, by using the second-stage SCI format information in the first-stage SCI, that the second-stage SCI is the second-stage SCI in the newly defined first format (SCI format 2-D2), and the terminal apparatus may further identify, with reference to the first indication information in the second-stage SCI, fields that are in the second-stage SCI and that carry the information used to demodulate the information carried in the PSSCH (the fields include, for example, fields in any one of the second-stage SCI in the SCI format 2-A, the second-stage SCI in the SCI format 2-B, or the second-stage SCI in the SCI format 2-C), so that the new terminal apparatus of R18 can accurately identify parameters used for receiving the PSSCH and the SL-PRS without affecting receiving of the legacy terminal apparatus, thereby achieving backward compatibility.

For other content in the implementation D6, refer to related descriptions in the implementation D2 and the implementation D3. For example, for descriptions of other information carried in the first-stage SCI, refer to content in the implementation D2 or the implementation D3. Details are not described again.

It should be noted that, in embodiments of this application, that a network element (for example, a network element A) receives information from another network element (for example, a network element B) may mean that the network element A directly receives the information from the network element B, or may mean that the network element A receives the information from the network element B via another network element (for example, a network element C). When the network element A receives the information from the network element B via the network element C, the network element C may transparently transmit the information, or may process the information, for example, put the information into different messages for transmission, or screen the information and send only information obtained through screening to the network element A. Similarly, in embodiments of this application, that the network element A sends information to the network element B may mean that the network element A directly sends the information to the network element B, or may mean that the network element A sends the information to the network element B via another network element (for example, the network element C).

The terms "system" and "network" in embodiments of this application may be used interchangeably; "at least one" means one or more, and "a plurality of" means two or more; and "and/or" describes an association relationship between associated objects, and represents that three relationships may exist. For example, A and/or B may represent the following cases: only A exists, both A and B exist, and only B exists, where A and B may be singular or plural. The character "/" generally indicates an "or" relationship between the associated objects. The expression "at least one of the following items (pieces)" or a similar expression thereof means any combination of these items, including any combination of singular items (pieces) or plural items (pieces). For example, at least one item (piece) of a, b, or c may represent a, b, c, a-b, a-c, b-c, or a-b-c, where a, b, and c may be singular or plural.

In addition, unless otherwise specified, ordinal numbers such as "first" and "second" in embodiments of this application are used to distinguish between a plurality of objects, rather than limit a sequence, timing, priorities, or importance of the plurality of objects.

It should be noted that, names of the foregoing messages are merely examples. With evolution of communication technologies, the name of any one of the messages may change. However, regardless of how the names of the messages change, the changing names of the messages all fall within the protection scope of this application provided that their meanings are the same as meanings of the messages in this application.

According to the foregoing methods, FIG. 14 is a diagram of a structure of a communication apparatus according to an embodiment of this application. As shown in FIG. 14, the communication apparatus may be a first terminal apparatus, a second terminal apparatus, a third terminal apparatus, a fourth terminal apparatus, or a network apparatus, or may be a chip or a circuit, for example, a chip or a circuit that may be disposed in the first terminal apparatus, the second terminal apparatus, the third terminal apparatus, the fourth terminal apparatus, or the network apparatus.

The communication apparatus 1801 includes a processor 1802 and a transceiver 1803.

Further, the communication apparatus 1801 may include a memory 1804. In the figure, the memory 1804 is shown by dashed lines to further indicate that the memory is optional.

Further, the communication apparatus 1801 may further include a bus system. The processor 1802, the memory 1804, and the transceiver 1803 may be connected by using the bus system.

It should be understood that the processor 1802 may be a chip. For example, the processor 1802 may be a field-programmable gate array (field-programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing method may be implemented by using a hardware-integrated logical circuit in the processor 1802 or instructions in a form of software. Steps in the method disclosed with reference to embodiments of this application may be directly completed by a hardware processor, or may be completed by using a combination of hardware in the processor 1802 and a software module. The software module may be stored in a storage medium mature in the art, such as a random access memory, a flash memory, a read-only memory, a programmable read-only memory, an electrically erasable programmable memory, or a register. The storage medium is located in the memory 1804, and the processor 1802 reads information in the memory 1804 and completes the steps in the foregoing method in combination with the hardware of the processor.

It should be noted that, the processor 1802 in this embodiment of this application may be an integrated circuit chip, and has a signal processing capability. In an implementation process, steps in the foregoing method embodiment may be implemented by using a hardware-integrated logical circuit in the processor or instructions in a form of software. The processor may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor may implement or execute methods, steps, and logical block diagrams disclosed in embodiments of this application. The general-purpose processor may be a microprocessor, or the processor may be any conventional processor or the like. Steps in the method disclosed with reference to embodiments of this application may be directly completed by a hardware decoding processor, or may be completed by using a combination of hardware in the decoding processor and a software module. The software module may be stored in a storage medium mature in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory 1804 in this embodiment of this application may be a volatile memory or a non-volatile memory, or may include both a volatile memory and a non-volatile memory. For related descriptions of the memory in this embodiment of this application, refer to the foregoing content. Details are not described herein again.

When the communication apparatus 1801 is the first terminal apparatus, the processor 1802 is configured to determine sidelink control information. The sidelink control information includes first information and second information, the first information is used for resource selection, the second information includes transmission mode information of a first message, and the transmission mode information of the first message indicates that the first message includes a sidelink positioning reference signal. The processor 1802 is configured to send the sidelink control information and the first message by using the transceiver 1803.

In a possible implementation, the processor 1802 is configured to receive configuration information by using the transceiver 1803. The configuration information includes the transmission mode information of the first message.

When the communication apparatus 1801 is the second terminal apparatus, the processor 1802 is configured to receive sidelink control information and a first message by using the transceiver 1803. The sidelink control information includes first information and second information, the first information is used for resource selection, the second information includes transmission mode information of the first message, and the transmission mode information indicates that the first message includes a sidelink positioning reference signal. The processor 1802 is configured to perform resource selection based on the first information, and determine, based on the transmission mode information, not to process the second information.

In a possible implementation, the processor 1802 is configured to determine, based on second-stage SCI format information whose value is 11, that the sidelink control information does not include second-stage SCI.

In a possible implementation, the processor 1802 is configured to determine, based on the second-stage SCI format information whose value is 11 by using the transceiver 1803, that the sidelink control information includes second-stage SCI, but skip processing the second-stage SCI.

When the communication apparatus 1801 is the fourth terminal apparatus, the processor 1802 is configured to receive sidelink control information and receive a first message based on the sidelink control information by using the transceiver 1803. The sidelink control information includes first information and second information, the first information is used for resource selection, the second information includes transmission mode information of the first message, and the transmission mode information of the first message indicates that the first message includes a sidelink positioning reference signal.

In a possible implementation, the processor 1802 is configured to perform measurement on the sidelink positioning reference signal based on the sidelink control information, to obtain a measurement result. The measurement result is used for sidelink positioning.

In a possible implementation, the processor 1802 is configured to perform resource selection based on the first information.

In a possible implementation, the processor 1802 is configured to determine, based on second-stage SCI format information whose value is 11, that the sidelink control information does not include second-stage SCI.

In a possible implementation, the processor 1802 is configured to determine, based on the second-stage SCI format information whose value is 11, that the sidelink control information includes second-stage SCI, and process the second-stage SCI.

In a possible implementation, the processor 1802 is configured to receive configuration information by using the transceiver 1803. The configuration information includes the transmission mode information of the first message.

When the communication apparatus 1801 is the network apparatus, the processor 1802 is configured to determine configuration information. The configuration information includes transmission mode information of a first message, and the transmission mode information of the first message indicates that the first message includes a sidelink positioning reference signal. The processor 1802 is configured to send the configuration information to a first terminal apparatus by using the transceiver 1803. The configuration information indicates the first terminal apparatus to send sidelink control information and the first message based on the configuration information, the sidelink control information includes first information and second information, the first information is used for resource selection, the second information includes the transmission mode information of the first message, and the transmission mode information indicates that the first message includes a sidelink positioning reference signal.

For concepts, explanations, detailed descriptions, and other steps of the communication apparatus that are related to the technical solutions provided in embodiments of this application, refer to descriptions about the content in the foregoing methods or other embodiments. Details are not described herein.

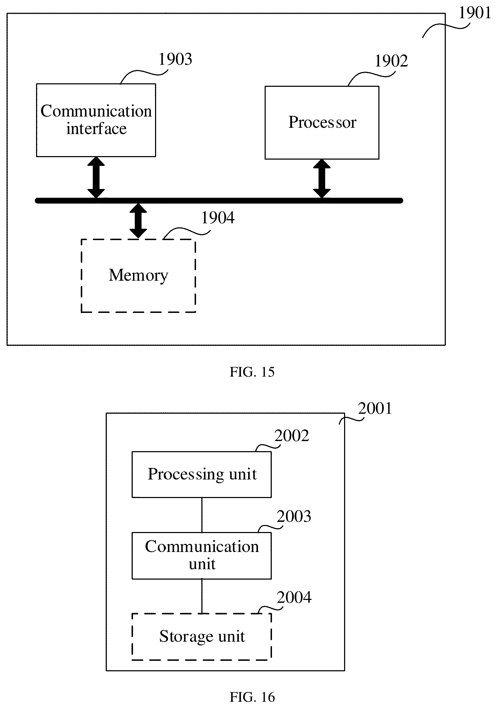

According to the foregoing methods, FIG. 15 is a diagram of a structure of a communication apparatus according to an embodiment of this application. As shown in FIG. 15, the communication apparatus 1901 may include a communication interface 1903 and a processor 1902. Further, the communication apparatus 1901 may include a memory 1904. In the figure, the memory 1904 is shown by dashed lines to further indicate that the memory is optional. The communication interface 1903 is configured to input and/or output information. The processor 1902 is configured to execute a computer program or instructions, to enable the communication apparatus 1901 to implement the method on the side of the first terminal apparatus, the second terminal apparatus, the third terminal apparatus, the fourth terminal apparatus, or the network apparatus in any one of related solutions in FIG. 3 or FIG. 7. In this embodiment of this application, the communication interface 1903 may implement the solution implemented by the transceiver 1803 in FIG. 14, the processor 1902 may implement the solution implemented by the processor 1802 in FIG. 14, and the memory 1904 may implement the solution implemented by the memory 1804 in FIG. 14. Details are not described herein again.

Based on the foregoing embodiments and a same concept, FIG. 16 is a diagram of a communication apparatus according to an embodiment of this application. As shown in FIG. 16, the communication apparatus 2001 may be a first terminal apparatus, a second terminal apparatus, a third terminal apparatus, a fourth terminal apparatus, or a network apparatus, or may be a chip or a circuit, for example, a chip or a circuit that may be disposed in the first terminal apparatus, the second terminal apparatus, the third terminal apparatus, the fourth terminal apparatus, or the network apparatus.

The communication apparatus 2001 includes a processing unit 2002 and a communication unit 2003. Further, the communication apparatus 2001 may or may not include a storage unit 2004. In the figure, the storage unit 2004 is shown by dashed lines to further indicate that the storage unit is optional.

The communication unit 2003 is configured to input and/or output information. The processing unit 2002 is configured to execute a computer program or instructions, to enable the communication apparatus 2001 to implement the method on the side of the first terminal apparatus, the second terminal apparatus, the third terminal apparatus, the fourth terminal apparatus, or the network apparatus in any one of related solutions in FIG. 3 or FIG. 7. In this embodiment of this application, the communication unit 2003 may implement the solution implemented by the transceiver 1803 in FIG. 14, the processing unit 2002 may implement the solution implemented by the processor 1802 in FIG. 14, and the storage unit 2004 may implement the solution implemented by the memory 1804 in FIG. 14. Details are not described herein again.

According to the methods provided in embodiments of this application, this application further provides a computer program product. The computer program product includes computer program code or instructions. When the computer program code or the instructions are run on a computer, the computer is enabled to perform the method in any one of the embodiments shown in FIG. 3 or FIG. 7.

According to the methods provided in embodiments of this application, this application further provides a computer-readable storage medium. The computer-readable medium stores program code. When the program code is run on a computer, the computer is enabled to perform the method in any one of the embodiments shown in FIG. 3 or FIG. 7.

According to the methods provided in embodiments of this application, this application further provides a chip system. The chip system may include a processor. The processor is coupled to a memory, and may be configured to perform the method in any one of the embodiments shown in FIG. 3 or FIG. 7. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the embodiments shown in FIG. 3 or FIG. 7.

According to the methods provided in embodiments of this application, this application further provides a system, including one or more first terminal apparatuses and one or more fourth terminal apparatuses described above. The system may further include a second terminal apparatus, a third terminal apparatus, and a network apparatus.

The foregoing embodiments may be all or partly implemented by using software, hardware, firmware, or any combination thereof. When software is used for implementation, the embodiments may be all or partly implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state drive, SSD)), or the like.

It should be noted that a part of this patent application document includes copyright-protected content. Except for making copies of patent documents of the China National Intellectual Property Administration or recorded patent document content, the copyright owner reserves the copyright.

The first terminal apparatus, the second terminal apparatus, the third terminal apparatus, the fourth terminal apparatus, or the network apparatus in the foregoing apparatus embodiments corresponds to the first terminal apparatus, the second terminal apparatus, the third terminal apparatus, the fourth terminal apparatus, or the network apparatus in the method embodiments, and a corresponding module or unit performs a corresponding step. For example, the communication unit (transceiver) performs a receiving or sending step in the method embodiments, and a step other than sending and receiving may be performed by the processing unit (processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, the component may be but is not limited to a process that runs on a processor, a processor, an object, an executable file, a thread of execution, a program, and/or a computer. As shown in figures, both a computing device and an application that runs on the computing device may be components. One or more components may reside within a process and/or a thread of execution, and a component may be located on one computer and/or distributed between two or more computers. In addition, these components may be executed from the foregoing computer-readable media that store various data structures. For example, the components may communicate based on, for example, a signal having one or more data packets (for example, data from two components interacting with another component in a local system, a distributed system, and/or across a network such as the internet interacting with other systems by using the signal) by using a local and/or remote process.

A person of ordinary skill in the art may be aware that, with reference to illustrative logical blocks (illustrative logical block) and steps (step) described in embodiments disclosed in this specification, the functions can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. When functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applicable to a second terminal apparatus, and the method comprises:
receiving sidelink control information and a first message, wherein the sidelink control information comprises first information and second information, the first information is used for resource selection, the second information comprises transmission mode information of the first message, and the transmission mode information indicates that the first message comprises a sidelink positioning reference signal;
performing resource selection based on the first information; and
determining, based on the transmission mode information, not to process the second information.

2. A communication method, wherein the method is applicable to a first terminal apparatus, and the method comprises:
determining sidelink control information, wherein the sidelink control information comprises first information and second information, the first information is used for resource selection, the second information comprises transmission mode information of a first message, and the transmission mode information of the first message indicates that the first message comprises a sidelink positioning reference signal; and
sending the sidelink control information and the first message.

3. The method according to claim 1 or 2, wherein the second information further comprises:
second-stage sidelink control information SCI format information whose value is 11.

4. The method according to any one of claims 1 to 3, wherein the second-stage SCI format information whose value is 11 and/or the transmission mode information of the first message indicate/indicates:
the first message comprises a sidelink positioning reference signal; or
the first message comprises a sidelink positioning reference signal, and a physical sidelink shared channel PSSCH used to transmit second-stage SCI in the sidelink control information comprises data; or
the first message comprises a sidelink positioning reference signal, and a physical sidelink shared channel PSSCH used to transmit second-stage SCI in the sidelink control information does not comprise data.

5. The method according to any one of claims 1 to 4, wherein when the PSSCH comprises data, the second-stage SCI format information whose value is 11 and/or the transmission mode information of the first message further indicate/indicates:
the first message and the PSSCH are multiplexed in a slot; or
the first message and the PSSCH are not multiplexed in a slot; or
the first message and the PSSCH are multiplexed or not multiplexed in a slot.

6. The method according to any one of claims 1 to 5, wherein the second-stage SCI format information whose value is 11 and/or the transmission mode information of the first message further indicate/indicates:
the sidelink control information comprises first-stage SCI; or the sidelink control information comprises first-stage SCI and second-stage SCI.

7. The method according to any one of claims 1 to 6, wherein
the first information and the second information are comprised in the first-stage SCI; or
the first information is comprised in the first-stage SCI, and the second information is comprised in the second-stage SCI; or
the first information is comprised in the first-stage SCI, and the second information is comprised in the first-stage SCI and the second-stage SCI; or
the first information is comprised in the first-stage SCI, the second information is comprised in a MAC CE, and the MAC CE is carried in the PSSCH; or
the first information is comprised in the first-stage SCI, the second information is comprised in the second-stage SCI and a MAC CE, and the MAC CE is carried in the PSSCH.

8. The method according to any one of claims 1 to 7, wherein the first message comprises a sidelink positioning reference signal, the PSSCH comprises or does not comprise data, the sidelink control information comprises second-stage SCI, and the PSSCH carries the second-stage SCI.

9. The method according to any one of claims 1 to 8, wherein the sidelink control information comprises second-stage SCI, and when the PSSCH carrying the second-stage SCI comprises data, the second information further comprises information used to demodulate information carried in the PSSCH.

10. The method according to claim 8 or 9, wherein the second information comprises a transmission parameter of the first message, and the transmission parameter of the first message and the information used to demodulate the information carried in the PSSCH are carried in second-stage SCI in a first format.

11. The method according to claim 10, wherein the method comprises:
if the second information comprises second-stage SCI format information whose value is 00, the second-stage SCI in the first format comprises a field indicated in second-stage SCI in a second format; or
if the second information comprises second-stage SCI format information whose value is 01, the second-stage SCI in the first format comprises a field indicated in second-stage SCI in a third format; or
if the second information comprises second-stage SCI format information whose value is 10, the second-stage SCI in the first format comprises a field indicated in second-stage SCI in a fourth format.

12. The method according to any one of claims 1 to 11, wherein the transmission mode information of the first message comprises a non-zero value of a reserved field of the first-stage SCI.

13. The method according to claim 10, wherein the transmission mode information of the first message comprises the second-stage SCI format information whose value is 11.

14. The method according to claim 13, wherein the second-stage SCI in the first format comprises first indication information, and the first indication information indicates the information for demodulating the information carried in the PSSCH.

15. The method according to claim 14, wherein the method comprises:
if a value of the first indication information is a first value, the second-stage SCI in the first format comprises a field indicated in second-stage SCI in a second format; or
if the value of the first indication information is a second value, the second-stage SCI in the first format comprises a field indicated in second-stage SCI in a third format; or
if the value of the first indication information is a third value, the second-stage SCI in the first format comprises a field indicated in second-stage SCI in a fourth format.

16. The method according to any one of claims 1 to 15, wherein the first information comprises at least one of the following content:
indication information of a priority of the first message;
indication information of a frequency domain resource of the first message;
indication information of a time domain resource of the first message; or
indication information of a reservation period of the first message.

17. The method according to any one of claims 1 to 16, wherein the first information comprises at least one of the following content:
indication information of a priority of the information carried in the PSSCH;
indication information of a frequency domain resource of the PSSCH;
indication information of a time domain resource of the PSSCH; or
indication information of a reservation period of the PSSCH.

18. The method according to any one of claims 1 to 17, wherein the second information comprises the transmission parameter of the first message, wherein
the transmission parameter of the first message comprises at least one of the following content:
indication information of a frequency domain resource of the first message;
indication information of a time domain resource of the first message;
indication information of a source identifier of the first message;
indication information of a destination identifier of the first message; or
indication information of a start and/or end time domain symbol of the first message.

19. The method according to any one of claims 1 to 18, wherein the transmission parameter of the first message further comprises at least one of the following content:
request information for sending the first message;
resource identification information of the first message;
the indication information of the reservation period of the first message;
the indication information of the priority of the first message;
indication information of a cast type of the first message; or
indication information of the number of retransmission times of the first message.

20. The method according to claim 18, wherein the indication information of the frequency domain resource of the first message indicates:
a difference between a lowest frequency domain location of the first message and a lowest frequency domain location of a frequency domain resource occupied by a PSCCH carrying the first-stage SCI in the sidelink control information; and/or
a frequency domain offset value of the first message within a frequency domain transmission interval.

21. The method according to any one of claims 1 to 20, wherein before sending the sidelink control information and the first message, the method further comprises:
receiving configuration information, wherein the configuration information comprises the transmission mode information of the first message.

22. A communication method, wherein the method is applicable to a fourth terminal apparatus, and the method comprises:
receiving sidelink control information, wherein the sidelink control information comprises first information and second information, the first information is used for resource selection, the second information comprises transmission mode information of a first message, and the transmission mode information of the first message indicates that the first message comprises a sidelink positioning reference signal; and
receiving the first message based on the sidelink control information.

23. The method according to claim 22, wherein the second information further comprises:
second-stage sidelink control information SCI format information whose value is 11.

24. The method according to claim 22 or 23, wherein the second-stage SCI format information whose value is 11 and/or the transmission mode information of the first message indicate/indicates:
the first message comprises a sidelink positioning reference signal; or
the first message comprises a sidelink positioning reference signal, and a physical sidelink shared channel PSSCH used to transmit second-stage SCI in the sidelink control information comprises data; or
the first message comprises a sidelink positioning reference signal, and a physical sidelink shared channel PSSCH used to transmit second-stage SCI in the sidelink control information does not comprise data.

25. The method according to any one of claims 22 to 24, wherein when the PSSCH comprises data, the second-stage SCI format information whose value is 11 and/or the transmission mode information of the first message further indicate/indicates:
the first message and the PSSCH are multiplexed in a slot; or
the first message and the PSSCH are not multiplexed in a slot; or
the first message and the PSSCH are multiplexed or not multiplexed in a slot.

26. The method according to any one of claims 22 to 25, wherein the second-stage SCI format information whose value is 11 and/or the transmission mode information of the first message further indicate/indicates:
the sidelink control information comprises first-stage SCI; or the sidelink control information comprises first-stage SCI and second-stage SCI.

27. The method according to any one of claims 22 to 26, wherein
the first information and the second information are comprised in the first-stage SCI; or
the first information is comprised in the first-stage SCI, and the second information is comprised in the second-stage SCI; or
the first information is comprised in the first-stage SCI, and the second information is comprised in the first-stage SCI and the second-stage SCI; or
the first information is comprised in the first-stage SCI, the second information is comprised in a MAC CE, and the MAC CE is carried in the PSSCH; or
the first information is comprised in the first-stage SCI, the second information is comprised in the second-stage SCI and a MAC CE, and the MAC CE is carried in the PSSCH.

28. The method according to any one of claims 22 to 27, wherein the first message comprises a sidelink positioning reference signal, the PSSCH comprises or does not comprise data, the sidelink control information comprises second-stage SCI, and the PSSCH carries the second-stage SCI.

29. The method according to any one of claims 22 to 28, wherein the sidelink control information comprises second-stage SCI, and when the PSSCH carrying the second-stage SCI comprises data, the second information further comprises information used to demodulate information carried in the PSSCH.

30. The method according to claim 28 or 29, wherein the second information comprises a transmission parameter of the first message, and the transmission parameter of the first message and the information used to demodulate the information carried in the PSSCH are carried in second-stage SCI in a first format.

31. The method according to claim 30, wherein the method comprises:
if the second information comprises second-stage SCI format information whose value is 00, the second-stage SCI in the first format comprises a field indicated in second-stage SCI in a second format; or
if the second information comprises second-stage SCI format information whose value is 01, the second-stage SCI in the first format comprises a field indicated in second-stage SCI in a third format; or
if the second information comprises second-stage SCI format information whose value is 10, the second-stage SCI in the first format comprises a field indicated in second-stage SCI in a fourth format.

32. The method according to any one of claims 22 to 31, wherein the transmission mode information of the first message comprises a non-zero value of a reserved field of the first-stage SCI.

33. The method according to claim 30, wherein the transmission mode information of the first message comprises the second-stage SCI format information whose value is 11.

34. The method according to claim 33, wherein the second-stage SCI in the first format comprises first indication information, and the first indication information indicates the information for demodulating the information carried in the PSSCH.

35. The method according to claim 34, wherein the method comprises:
if a value of the first indication information is a first value, the second-stage SCI in the first format comprises a field indicated in second-stage SCI in a second format; or
if the value of the first indication information is a second value, the second-stage SCI in the first format comprises a field indicated in second-stage SCI in a third format; or
if the value of the first indication information is a third value, the second-stage SCI in the first format comprises a field indicated in second-stage SCI in a fourth format.

36. The method according to any one of claims 22 to 35, wherein the first information comprises at least one of the following content:
indication information of a priority of the first message;
indication information of a frequency domain resource of the first message;
indication information of a time domain resource of the first message; or
indication information of a reservation period of the first message.

37. The method according to any one of claims 22 to 36, wherein the first information comprises at least one of the following content:
indication information of a priority of the PSSCH;
indication information of a frequency domain resource of the PSSCH;
indication information of a time domain resource of the PSSCH; or
indication information of a reservation period of the PSSCH.

38. The method according to any one of claims 22 to 37, wherein the second information comprises the transmission parameter of the first message, wherein
the transmission parameter of the first message comprises at least one of the following content:
indication information of a frequency domain resource of the first message;
indication information of a time domain resource of the first message;
indication information of a source identifier of the first message;
indication information of a destination identifier of the first message; or
indication information of a start and/or end time domain symbol of the first message.

39. The method according to any one of claims 22 to 38, wherein the transmission parameter of the first message further comprises at least one of the following content:
request information for sending the first message;
resource identification information of the first message;
the indication information of the reservation period of the first message;
the indication information of the priority of the first message;
indication information of a cast type of the first message; or
indication information of the number of retransmission times of the first message.

40. The method according to claim 39, wherein the indication information of the frequency domain resource of the first message indicates:
a difference between a lowest frequency domain location of the first message and a lowest frequency domain location of a frequency domain resource occupied by a PSCCH carrying the first-stage SCI in the sidelink control information; and/or
a frequency domain offset value of the first message within a frequency domain transmission interval.

41. The method according to any one of claims 22 to 40, wherein before receiving the first message, the method further comprises:
receiving configuration information, wherein the configuration information comprises the transmission mode information of the first message.

42. A communication method, wherein the method is applicable to a network apparatus, and the method comprises:
determining configuration information, wherein the configuration information comprises transmission mode information of a first message, and the transmission mode information of the first message indicates that the first message comprises a sidelink positioning reference signal; and
sending the configuration information to a first terminal apparatus.

43. The method according to claim 42, wherein the transmission mode information of the first message indicates:
the first message comprises a sidelink positioning reference signal; or
the first message comprises a sidelink positioning reference signal, and a physical sidelink shared channel PSSCH used to transmit second-stage SCI in the sidelink control information comprises data; or
the first message comprises a sidelink positioning reference signal, and a physical sidelink shared channel PSSCH used to transmit second-stage SCI in the sidelink control information does not comprise data.

44. The method according to claim 42 or 43, wherein when the PSSCH comprises data, the transmission mode information of the first message further indicates:
the first message and the PSSCH are multiplexed in a slot; or
the first message and the PSSCH are not multiplexed in a slot; or
the first message and the PSSCH are multiplexed or not multiplexed in a slot.

45. A communication apparatus, comprising a processor and a communication interface, wherein the communication interface is configured to receive and send signaling, and the processor is configured to perform, by using the communication interface, the method according to any one of claims 1 to 21, the method according to any one of claims 22 to 41, or the method according to any one of claims 42 to 44.

46. A communication apparatus, comprising a processor and a memory, wherein
the memory is configured to store a computer program or instructions; and
the processor is configured to execute the computer program or the instructions in the memory, to perform the method according to any one of claims 1 to 21, the method according to any one of claims 22 to 41, or the method according to any one of claims 42 to 44.

47. A communication apparatus, comprising a processing unit and a communication unit, wherein the processing unit is configured to perform, by using the communication unit, the method according to any one of claims 1 to 21, the method according to any one of claims 22 to 41, or the method according to any one of claims 42 to 44.

48. A computer-readable storage medium, wherein the computer-readable storage medium stores computer-executable instructions, and when the computer-executable instructions are invoked by a computer, the method according to any one of claims 1 to 21, the method according to any one of claims 22 to 41, or the method according to any one of claims 42 to 44 is performed.

49. A chip system, comprising a communication interface and a processor, wherein
the communication interface is configured to input and/or output signaling or data; and
the processor is configured to execute a computer-executable program, to enable a device on which the chip system is installed to perform the method according to any one of claims 1 to 21, the method according to any one of claims 22 to 41, or the method according to any one of claims 42 to 44.

50. A computer program product, wherein the computer program product stores computer-executable instructions, and when the computer-executable instructions are invoked by a computer, the method according to any one of claims 1 to 21, the method according to any one of claims 22 to 41, or the method according to any one of claims 42 to 44 is performed.
